(19) Europäisches Patentamt / European Patent Office / Office européen des brevets

(11) **EP 4 674 282 A1**

(12) **EUROPEAN PATENT APPLICATION**
published in accordance with Art. 153(4) EPC

(43) Date of publication:
**07.01.2026 Bulletin 2026/02**

(21) Application number: **24763968.5**

(22) Date of filing: **28.02.2024**

(51) International Patent Classification (IPC):
$A23L\ 5/00^{(2016.01)}$     $A21D\ 2/08^{(2006.01)}$
$A23L\ 3/34^{(2006.01)}$     $A23L\ 7/10^{(2016.01)}$
$A23L\ 7/104^{(2016.01)}$     $A23L\ 7/109^{(2016.01)}$
$A23L\ 7/117^{(2016.01)}$

(52) Cooperative Patent Classification (CPC):
A21D 2/08; A23B 2/70; A23L 5/00; A23L 7/10;
A23L 7/104; A23L 7/109; A23L 7/117

(86) International application number:
**PCT/JP2024/007255**

(87) International publication number:
**WO 2024/181489 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.03.2023 JP 2023031737**

(71) Applicants:
- **Mizkan Holdings Co., Ltd.**
  **Handa-shi, Aichi 475-8585 (JP)**
- **Mizkan Co., Ltd.**
  **Handa-shi, Aichi 475-8585 (JP)**

(72) Inventors:
- **SHIRAISHI Akira**
  **Handa-shi, Aichi 475-8585 (JP)**

- **YORITSUNE Kenichi**
  **Handa-shi, Aichi 475-8585 (JP)**
- **TAGUCHI Takumi**
  **Handa-shi, Aichi 475-8585 (JP)**
- **FUJIWARA Shinpei**
  **Handa-shi, Aichi 475-8585 (JP)**
- **OTSUJI Yoshiaki**
  **Handa-shi, Aichi 475-8585 (JP)**

(74) Representative: **Hasegawa, Kan
Patentanwaltskanzlei Hasegawa
Untere Hauptstraße 56
85354 Freising (DE)**

(54) **FOOD COMPOSITION**

(57) The purpose of the present invention is to maintain the enzyme activity while suppressing the proliferation of microorganisms that cause the deterioration of food in a state in which an enzyme is dissolved in water. The present invention provides a food composition satisfying all of the following requirements (a)-(d). (a) The moisture content in terms of wet mass is at least 20 w/w%. (b) The pH at 20°C under 1 atm is higher than 4.6. (c) At least one enzyme having an optimal pH of at least 4.0 is contained. (d) The following requirement (i) and/or requirement (ii) is satisfied. Requirement (i): When the sodium chloride equivalent per 100 g of water of the food composition is Xg and the undissociated acetic acid content per 100 g of water of the food composition is Yg, the following expression is satisfied. $4Y+X\geq10$ ($X\geq3$ and $4\geq Y>0.03$) Requirement (ii): The sodium chloride equivalent per 100 g of water of the food composition is at least 3.0 g, and the ethanol content per 100 g of water of the food composition is at least 8.0 g.

**Description**

Technical Field

The present invention relates to a food composition.

Background Art

A technique is known in which an enzyme is added during a food manufacturing process for the purpose of improving the taste and texture of food. From the viewpoint of convenience, the enzyme is often added as a food composition containing the enzyme. A food composition containing an enzyme is preferable when the enzyme is in a state of being dissolved in water and the moisture content on a wet mass basis is a predetermined value or more, because the enzyme can act uniformly on the raw materials. However, since many enzymes act in an environment where microorganisms can grow, there is a demand for the food composition to be of a quality that allows various enzymes to act sufficiently while suppressing the growth of microorganisms that cause food deterioration, and that does not impair the eating quality of the manufactured food. For example, Literature 1 (Japanese Unexamined Patent Application Publication No. Hei 03-139278) discloses that the stability of glucose oxidase can be maintained by a phosphate buffer.

Citation List

Patent Literatures

Patent Literature 1: Japanese Unexamined Patent Application Publication No. Hei 03-139278

Summary of Invention

However, the technology disclosed in Literature 1 could not be adopted as a technology that can suppress the growth of microorganisms that cause food deterioration while the enzyme is in a state of being dissolved in water, and that does not impair the flavor of the manufactured food.

As a result of diligent investigation, the present inventors found that by adjusting the moisture content on a wet mass basis, pH, and salt equivalent amount of a food composition to predetermined ranges, and by adjusting the undissociated acetic acid content and/or ethanol content to predetermined ranges, it is possible to maintain enzyme activity while suppressing the growth of microorganisms that cause food deterioration when the enzyme is in a state of being dissolved in water. Furthermore, the inventors found that by including an enzyme that reacts with a predetermined substrate in the food composition, a texture-improving effect can be obtained, particularly in food and drink products that use grains as a raw material, due to the synergistic effect of sodium, the enzyme, and undissociated acetic acid and/or ethanol, and have come to complete the present invention.

That is, the gist of the present invention relates to, for example, the following.

[1] A food composition that satisfies all of the following requirements (a) to (d):

(a) the moisture content on a wet mass basis is 20 w/w% or more, 25 w/w% or more, 30 w/w% or more, 35 w/w% or more, 40 w/w% or more, 43 w/w% or more, 45 w/w% or more, 47 w/w% or more, 50 w/w% or more, or 52 w/w% or more, and its upper limit value is not particularly limited, but is, for example, 90 w/w% or less, 88 w/w% or less, 85 w/w% or less, 80 w/w% or less, 75 w/w% or less, 70 w/w% or less, 65 w/w% or less, 60 w/w% or less, or 58 w/w% or less, and its range is, for example, 20 to 85 w/w%, 25 to 80 w/w%, 30 to 75 w/w%, 35 to 70 w/w%, 40 to 65 w/w%, or 45 to 64 w/w%

(b) the pH at 20°C and 1 atm is more than 4.6, 4.7 or more, 4.8 or more, 4.9 or more, 5.0 or more, 5.05 or more, 5.10 or more, 5.15 or more, 5.2 or more, 5.3 or more, or 5.4 or more, and its upper limit is not limited, but is, for example, 8.8 or less, 8.2 or less, 8.0 or less, 7.5 or less, 7.1 or less, 7.0 or less, 6.8 or less, 6.5 or less, 6.3 or less, 6.2 or less, 6.1 or less, 5.9 or less, 5.8 or less, 5.6 or less, or 5.5 or less, and its range is, for example, more than 4.6 to 7.0 or less, 4.7 to 6.8, 4.8 to 6.5, 4.9 to 6.4, 4.95 to 6.35, 5.00 to 6.30, 5.05 to 6.30, or 5.10 to 6.10

(c) the food composition contains one or more enzymes having an optimum pH of 4.0 or more, 4.2 or more, 4.3 or more, 4.4 or more, 4.5 or more, 4.6 or more, 4.7 or more, 4.8 or more, 4.9 or more, 5.0 or more, 5.05 or more, 5.10 or more, 5.15 or more, 5.2 or more, 5.3 or more, or 5.4 or more, and its upper limit is not particularly limited, but is, for example, 9.5 or less, 9.3 or less, 9.0 or less, 8.8 or less, 8.2 or less, 8.0 or less, 7.5 or less, 7.1 or less, 7.0 or less, 6.8 or less, 6.5 or less, 6.3 or less, 6.2 or less, 6.1 or less, 5.9 or less, 5.8 or less, 5.6 or less, or 5.5 or less, and its range is, for example, 4.0 to 7.0, 4.7 to 6.8, 4.8 to 6.5, 4.9 to 6.4, 4.95 to 6.35, 5.00 to 6.30, 5.05 to 6.30, or 5.10 to 6.10

(d) the food composition satisfies the following requirement (i) and/or (ii) Requirement (i)

When the salt equivalent amount per 100 g of water of the food composition is X g, and the undissociated acetic acid content per 100 g of water of the food composition is Y g, the following formula is satisfied:

$4Y+X>10$, or the value of "$4Y+X$" is 11 or more, 12 or more, 13 or more, 14 or more, 15 or more, 16 or more, 17 or more, 18 or more, 19 or more, 20 or more, 21 or more, 22 or more, 24 or more, 26 or more, 28 or more, 30 or more, 31 or more, 32 or more, 33 or more, 34 or more, or 35 or more, and its upper limit is not particularly limited, but is, for example, 56 or less, 54 or less, 52 or less, 50 or less, 48 or less, 46 or less, 44 or less, 42 or less, 41 or less, 40 or less, 39 or less, 38 or less, 37 or less, 36 or less, 35 or less, 34 or less, 33 or less, 32 or less, 30 or less, 28 or less, 26 or less, 25 or less, 24 or less, 23 or less, or 22 or less, and its range is, for example, 10 to 56, 12 to 50, 14 to 45, 15 to 44, 20 to 43, or 25 to 42 (provided that $X \geq 3$ and $4 \geq Y > 0.03$)

Requirement (ii)

The salt equivalent amount per 100 g of water of the food composition is 3.0 g or more, 5.0 g or more, 7.0 g or more, 10 g or more, 12 g or more, 14 g or more, 16 g or more, 18 g or more, 20 g or more, 22 g or more, 24 g or more, 26 g or more, 28 g or more, 30 g or more, 32 g or more, 34 g or more, 35 g or more, or 36 g or more, and its upper limit is not particularly limited, but is, for example, 54 g or less, 50 g or less, 45 g or less, 40 g or less, or 38 g or less, and its range is, for example, 3.0 to 54 g, 5.0 to 54 g, 7.0 to 50 g, 8.0 to 45 g, 9.0 to 40 g, 10 to 40 g, 11 to 40 g, 12 to 40 g, 13 to 40 g, 14 to 40 g, 16 to 40 g, 20 to 40 g, 22 to 40 g, 24 to 40 g, 27 to 40 g, 30 to 40 g, 32 to 40 g, 33 to 50 g, 34 to 50 g, or 35 to 50 g, and, the ethanol content per 100 g of water of the food composition is 8.0 g or more, 8.2 g or more, 8.5 g or more, 8.7 g or more, 9.0 g or more, 9.3 g or more, 9.5 g or more, 10.0 g or more, 10.5 g or more, 11.0 g or more, 12.0 g or more, 13.0 g or more, 14.0 g or more, or 15.0 g or more, and its upper limit value is not particularly limited, but is, for example, 20.0 g or less, 19.5 g or less, 18.5 g or less, 18.0 g or less, 17.5 g or less, 16.5 g or less, or 15.5 g or less, and its range is, for example, 8.0 to 20.0 g, 9.0 to 19.0 g, 10.0 to 18.0 g, or 11.0 to 18.0 g

[2]

The food composition according to [1] above, wherein the salt equivalent amount per 100 g of water of the food composition is 8.0 g or more, 10 g or more, 12 g or more, 14 g or more, 16 g or more, 18 g or more, 20 g or more, 22 g or more, 24 g or more, 26 g or more, 28 g or more, 30 g or more, 32 g or more, 34 g or more, 35 g or more, or 36 g or more, and its upper limit is not particularly limited, but is, for example, 54 g or less, 50 g or less, 45 g or less, 40 g or less, or 38 g or less, and its range is, for example, 8.0 to 45 g, 9.0 to 40 g, 10 to 40 g, 11 to 40 g, 12 to 40 g, 13 to 40 g, 14 to 40 g, 16 to 40 g, 20 to 40 g, 22 to 40 g, 24 to 40 g, 27 to 40 g, 30 to 40 g, 32 to 40 g, 33 to 50 g, 34 to 50 g, or 35 to 50 g.

[3]

The food composition according to [1] or [2] above, wherein the total acetic acid content per 100 g of water of the food composition is 0.4 g or more, 0.6 g or more, 0.8 g or more, 1.0 g or more, 1.2 g or more, 1.4 g or more, 1.6 g or more, 1.8 g or more, 2.1 g or more, 2.2 g or more, 2.3 g or more, 2.4 g or more, 2.7 g or more, 2.9 g or more, 3.1 g or more, 3.2 g or more, 3.3 g or more, 3.5 g or more, 3.7 g or more, 3.9 g or more, 4.1 g or more, 4.3 g or more, 4.5 g or more, 4.7 g or more, 4.9 g or more, 5.5 g or more, 5.9 g or more, 6.5 g or more, 7.5 g or more, 9.0 g or more, or 10.0 g or more, and its upper limit is not particularly limited, but is, for example, 25.0 g or less, 23.5 g or less, 22.0 g or less, 21.5 g or less, 20.0 g or less, 19.0 g or less, 18.5 g or less, 17.7 g or less, 17.5 g or less, 16.5 g or less, 16.0 g or less, 15.0 g or less, 14.0 g or less, 13.5 g or less, or 13.0 g or less, and its range is, for example, 0.4 to 30.0 g, 1.2 to 25.0 g, 1.4 to 20.0 g, 2.3 to 18.0 g, 2.5 to 17.5 g, or 3.0 to 16.5 g.

[4]

The food composition according to any one of [1] to [3] above, wherein the titratable acidity of the food composition when measured by the following Measurement Method A is 3.0 w/w% or less, 2.7 w/w% or less, 2.5 w/w% or less, 2.0 w/w% or less, 1.5 w/w% or less, 1.0 w/w% or less, 0.9 w/w% or less, 0.8 w/w% or less, 0.75 w/w% or less, or 0.7 w/w% or less, and its lower limit value is not particularly limited, but is, for example, 0.2 w/w% or more, 0.25 w/w% or more, 0.3 w/w% or more, 0.35 w/w% or more, 0.4 w/w% or more, 0.42 w/w% or more, or 0.45 w/w% or more, and its range is, for example, 0.2 to 2.9 w/w%, 0.2 to 2.6 w/w%, 0.2 to 2.4 w/w%, 0.25 to 1.9 w/w%, 0.25 to 1.8 w/w%, 0.3 to 1.5 w/w%, or 0.3 to 1.0 w/w%.

Measurement Method A

Accurately take 10 g of the food composition, dilute it 10-fold with ion-exchanged water, add 0.08 ml of a 3.1% phenolphthalein solution as an indicator to the diluted solution (100 g), perform neutralization titration with a 0.1 mol/L sodium hydroxide solution of a known titration factor, and determine the titratable acidity using the following formula.

Titratable acidity of food composition (w/w%)={(60.05×0.1×F×V)×100}/{Sampled amount (10 g)×1000}

60.05: Molecular weight of acetic acid
0.1: Molar concentration of sodium hydroxide solution (mol/L)
F: Titration factor of 0.1 mol/L sodium hydroxide solution
V: Titration volume of 0.1 mol/L sodium hydroxide solution (mL)

[5]
The food composition according to any one of [1] to [4] above, wherein the food composition contains brewed vinegar, and its content is not particularly limited, but for example, the upper limit value is 29 w/w% or less, 27 w/w% or less, 25 w/w% or less, 23 w/w% or less, 22 w/w% or less, 21 w/w% or less, 19 w/w% or less, 18.5 w/w% or less, 18 w/w% or less, 17.8 w/w% or less, 17.3 w/w% or less, 16.7 w/w% or less, 16.0 w/w% or less, 15.0 w/w% or less, 14.0 w/w% or less, 12.5 w/w% or less, 11.5 w/w% or less, 11.0 w/w% or less, 10.5 w/w% or less, 10.0 w/w% or less, 9.5 w/w% or less, 9.0 w/w% or less, 8.5 w/w% or less, 7.5 w/w% or less, 7.0 w/w% or less, 6.5 w/w% or less, 6.0 w/w% or less, 5.5 w/w% or less, 5.0 w/w% or less, 4.5 w/w% or less, or 4.0 w/w% or less, and its lower limit value is not particularly limited, but is, for example, 0.1 w/w% or more, 0.2 w/w% or more, 0.3 w/w% or more, 0.5 w/w% or more, 0.7 w/w% or more, 0.9 w/w% or more, 1.1 w/w% or more, 1.3 w/w% or more, 1.5 w/w% or more, 1.7 w/w% or more, 1.8 w/w% or more, 2.0 w/w% or more, 2.2 w/w% or more, 2.4 w/w% or more, or 2.6 w/w% or more, and its range is, for example, 0.1 to 30 w/w%, 0.1 to 28 w/w%, 0.1 to 25 w/w%, 0.1 to 20 w/w%, 0.1 to 17.5 w/w%, 0.1 to 16.5 w/w%, 0.1 to 15.5 w/w%, 0.5 to 14.5 w/w%, 0.7 to 13.0 w/w%, 0.9 to 12.0 w/w%, or 1.0 to 8.0 w/w%.
[6]
The food composition according to any one of [1] to [5] above, wherein the ratio of acetic acid derived from sodium acetate to the total content of acetic acid in the food composition is 10 w/w% or more, 20 w/w% or more, 30 w/w% or more, 40 w/w% or more, 50 w/w% or more, 55 w/w% or more, 60 w/w% or more, 65 w/w% or more, 70 w/w% or more, 75 w/w% or more, 80 w/w% or more, or 90 w/w% or more, and its upper limit is not particularly limited, but is, for example, less than 100 w/w%, or less than 98 w/w%, and its range is, for example, 10 w/w% or more and less than 98 w/w%.
[7]
The food composition according to any one of [1] to [6] above, wherein the ratio of the chloride ion content (w/w%) of the food composition to the sodium content (w/w%) of the food composition is 0.1 to 1.5, 0.4 to 1.47, 0.5 to 1.45, 0.6 to 1.45, 0.6 to 1.4, or 0.6 to 1.3, and its upper limit value is not particularly limited, but is, for example, 1.46 or less, 1.45 or less, 1.44 or less, 1.43 or less, 1.40 or less, 1.39 or less, 1.38 or less, 1.37 or less, 1.35 or less, 1.33 or less, 1.3 or less, 1.2 or less, 1.1 or less, 1.05 or less, 1.0 or less, 0.97 or less, 0.95 or less, 0.90 or less, 0.85 or less, 0.8 or less, 0.7 or less, 0.6 or less, or 0.5 or less, and its lower limit value is not particularly limited, but is, for example, 0.31 or more, 0.60 or more, 0.62 or more, 0.67 or more, 0.75 or more, 0.77 or more, 0.81 or more, 0.84 or more, 0.87 or more, 0.91 or more, 0.93 or more, 0.95 or more, 0.97 or more, 0.99 or more, 1.03 or more, 1.05 or more, 1.07 or more, 1.09 or more, 1.10 or more, 1.11 or more, or 1.12 or more.
[8]
The food composition according to any one of [1] to [7] above, wherein the Brix value of the food composition is 20 or more, 21 or more, 22 or more, 23 or more, 27 or more, 29 or more, 31 or more, 34 or more, 35 or more, 37 or more, 39 or more, 40 or more, 41 or more, or 43 or more, and its upper limit value is not particularly limited, but is, for example, 69 or less, 67 or less, 65 or less, 64 or less, 63 or less, 62 or less, 59 or less, 58 or less, 57 or less, 53 or less, 52 or less, 51 or less, 49 or less, 47 or less, or 46 or less, and its range is, for example, 20 to 70, 22 to 68, 24 to 66, 26 to 60, 28 to 55, 30 to 50, or 32 to 48.
[9]
The food composition according to any one of [1] to [8] above, wherein the carbohydrate content per 100 g of water of the food composition is 4.0 g or more, 4.5 g or more, 5.0 g or more, 5.5 g or more, 10.0 g or more, 13.0 g or more, 18.0 g or more, 22.0 g or more, 25.0 g or more, 28.0 g or more, 31.0 g or more, 33.0 g or more, 35.0 g or more, 37.5 g or more, 39.0 g or more, 40.0 g or more, 42.0 g or more, 43.5 g or more, 45.0 g or more, or 47.0 g or more, and its upper limit is not limited, but is, for example, 68.0 g or less, 65.0 g or less, 64.0 g or less, 61.0 g or less, 59.0 g or less, 58.5 g or less, 57.0 g or less, 56.0 g or less, 54.5 g or less, 53.5 g or less, 52.0 g or less, 50.8 g or less, 50.0 g or less, or 49.0 g or less, and its range is, for example, 4.0 to 70.0 g, 8.0 to 66.0 g, 15.0 to 63.0 g, 20.0 to 60.0 g, 25.0 to 58.0 g, or 30.0 to 55.0 g.
[10]
The food composition according to any one of [1] to [9] above, wherein the food composition contains a sugar alcohol, and the type of sugar alcohol is not particularly limited, but for example, it contains sorbitol and/or mannitol, and the ratio of the total content (mass%) of sorbitol and mannitol to the total carbohydrate content (mass%) is, for example, 5 w/w% or more, 8 w/w% or more, 10 w/w% or more, 12 w/w% or more, 14 w/w% or more, 18 w/w% or more, 20 w/w% or more, 24 w/w% or more, 28 w/w% or more, 30 w/w% or more, 40 w/w% or more, 50 w/w% or more, 60 w/w% or more, 70 w/w% or more, 80 w/w% or more, 90 w/w% or more, or 100 w/w%.

[11]
The food composition according to any one of [1] to [10] above, wherein the food composition contains reduced starch syrup, and the ratio of the content (mass%) of the reduced starch syrup to the total carbohydrate content (mass%) is not particularly limited, but is, for example, 40 w/w% or more, 50 w/w% or more, 60 w/w% or more, 70 w/w% or more, 80 w/w% or more, w/w% or more, or 100 w/w%.

[12]
The food composition according to any one of [1] to [11] above, wherein the ratio of the maltose content (w/w%) to the total carbohydrate content (w/w%) of the food composition is 80 w/w% or less, 70 mass% or less, 60 mass% or less, 50 mass% or less, 40 mass% or less, 30 mass% or less, 20 mass% or less, 15 mass% or less, or 10 mass% or less.

[13]
The food composition according to any one of [1] to [12] above, wherein the food composition contains a transferase and/or a hydrolase.

[14]
The food composition according to [13] above, wherein the food composition contains a transferase that is at least one selected from 6-alpha-glucanotransferase, 4-alpha-glucanotransferase, cyclodextrin glucanotransferase, and alpha-glucosyltransferase.

[15]
The food composition according to [13] or [14] above, wherein the food composition contains a hydrolase that is at least one selected from glutaminase, maltotriohydrolase, beta-amylase, phospholipase A1, pullulanase, hemicellulase, alpha-amylase, pectinase, glucoamylase, transglucosidase, pectin methyl esterase, phospholipase A2, protease, alpha-galactosidase, invertase, cellulase, xylanase, fructosyltransferase, beta-glucosidase, and lipase.

[16]
The food composition according to any one of [13] to [15] above, wherein the food composition contains 6-alpha-glucanotransferase and maltotriohydrolase.

[17]
The food composition according to any one of [13] to [16] above, wherein the food composition contains 4-alpha-glucanotransferase and beta-amylase.

[18]
The food composition according to any one of [13] to [17] above, wherein the food composition contains a protease and a lipase.

[19]
The food composition according to any one of [13] to [18] above, wherein the food composition contains cellulase, hemicellulase, and pectinase.

[20]
The food composition according to any one of [1] to [19] above, wherein the food composition contains at least one selected from glucose oxidase, polyphenol oxidase, and glucose isomerase.

[21]
The food composition according to any one of [1] to [20] above, which is for manufacturing a processed grain product.

[22]
The food composition according to [21] above, wherein the processed grain product is at least one selected from the group consisting of cooked rice products, noodle products, cereal products, and bread products.

[23]
The food composition according to [21] above, wherein the processed grain product contains rice.

[24]
The food composition according to [21] above, wherein the processed grain product is a cooked rice product.

[25]
A food composition for use in manufacturing a processed grain product, wherein the pH at 1 atm and 20°C is more than 6.20, 6.30 or more, 6.35 or more, 6.40 or more, 6.45 or more, 6.50 or more, or 6.60 or more, when distilled water in an amount equal to twice the mass (on a wet mass basis) of the manufactured processed grain product is added and homogenized (homogenization treatment), and its upper limit value is not particularly limited, but is, for example, 8.0 or less, 7.5 or less, 7.0 or less, or 6.9 or less, and its range is, for example, 6.2 to 8.0, 6.3 to 7.5, or 6.4 to 7.0.

[26]
The food composition according to any one of [1] to [25] above, wherein the food composition is a liquid composition.

[27]
The food composition according to [26] above, wherein the food composition is an unsterilized liquid composition.

[28]

A method for manufacturing the food composition according to any one of [1] to [26] above, comprising performing a sterilization treatment at a maximum temperature reached of less than 124°C.

[29]

A method for manufacturing the food composition according to any one of [1] to [27] above, which is free from a heat sterilization treatment step during manufacturing, wherein the heat sterilization treatment step is not particularly limited, but is, for example, a heat sterilization treatment at a maximum temperature reached of 100°C or more, or a heat sterilization treatment at a maximum temperature reached of 124°C or more.

[30]

A method for manufacturing a processed grain product, comprising adding the food composition according to any one of [1] to [27] above.

[31]

The manufacturing method according to [30] above, wherein the processed grain product is at least one selected from the group consisting of cooked rice products, noodle products, cereal products, and bread products.

[32]

A processed grain product manufactured using the food composition according to any one of [1] to [27] above.

[33]

The processed grain product according to [32] above, wherein the processed grain product is at least one selected from the group consisting of cooked rice products, noodle products, cereal products, and bread products.

[34]

A method for suppressing the growth of spoilage microorganisms in a food composition that is not subjected to heat sterilization at 100°C or more, wherein the food composition satisfies all of the following requirements (a) to (d):

(a) the moisture content on a wet mass basis is 20 w/w% or more, 25 w/w% or more, 30 w/w% or more, 35 w/w% or more, 40 w/w% or more, 43 w/w% or more, 45 w/w% or more, 47 w/w% or more, 50 w/w% or more, or 52 w/w% or more, and its upper limit value is not particularly limited, but is, for example, 90 w/w% or less, 88 w/w% or less, 85 w/w% or less, 80 w/w% or less, 75 w/w% or less, 70 w/w% or less, 65 w/w% or less, 60 w/w% or less, or 58 w/w% or less, and its range is, for example, 20 to 85 w/w%, 25 to 80 w/w%, 30 to 75 w/w%, 35 to 70 w/w%, 40 to 65 w/w%, or 45 to 64 w/w%

(b) the pH at 20°C and 1 atm is more than 4.6, 4.7 or more, 4.8 or more, 4.9 or more, 5.0 or more, 5.05 or more, 5.10 or more, 5.15 or more, 5.2 or more, 5.3 or more, or 5.4 or more, and its upper limit is not limited, but is, for example, 8.8 or less, 8.2 or less, 8.0 or less, 7.5 or less, 7.1 or less, 7.0 or less, 6.8 or less, 6.5 or less, 6.3 or less, 6.2 or less, 6.1 or less, 5.9 or less, 5.8 or less, 5.6 or less, or 5.5 or less, and its range is, for example, more than 4.6 to 7.0 or less, 4.7 to 6.8, 4.8 to 6.5, 4.9 to 6.4, 4.95 to 6.35, 5.00 to 6.30, 5.05 to 6.30, or 5.10 to 6.10

(c) the food composition contains one or more enzymes having an optimum pH of 4.0 or more, 4.2 or more, 4.3 or more, 4.4 or more, 4.5 or more, 4.6 or more, 4.7 or more, 4.8 or more, 4.9 or more, 5.0 or more, 5.05 or more, 5.10 or more, 5.15 or more, 5.2 or more, 5.3 or more, or 5.4 or more, and its upper limit is not particularly limited, but is, for example, 9.5 or less, 9.3 or less, 9.0 or less, 8.8 or less, 8.2 or less, 8.0 or less, 7.5 or less, 7.1 or less, 7.0 or less, 6.8 or less, 6.5 or less, 6.3 or less, 6.2 or less, 6.1 or less, 5.9 or less, 5.8 or less, 5.6 or less, or 5.5 or less, and its range is, for example, 4.0 to 7.0, 4.7 to 6.8, 4.8 to 6.5, 4.9 to 6.4, 4.95 to 6.35, 5.00 to 6.30, 5.05 to 6.30, or 5.10 to 6.10

(d) the food composition satisfies the following requirement (i) and/or (ii) Requirement (i)

When the salt equivalent amount per 100 g of water of the food composition is X g, and the undissociated acetic acid content per 100 g of water of the food composition is Y g, the following formula is satisfied:

$4Y+X \geq 10$, or the value of "$4Y+X$" is 11 or more, 12 or more, 13 or more, 14 or more, 15 or more, 16 or more, 17 or more, 18 or more, 19 or more, 20 or more, 21 or more, 22 or more, 24 or more, 26 or more, 28 or more, 30 or more, 31 or more, 32 or more, 33 or more, 34 or more, or 35 or more, and its upper limit is not particularly limited, but is, for example, 56 or less, 54 or less, 52 or less, 50 or less, 48 or less, 46 or less, 44 or less, 42 or less, 41 or less, 40 or less, 39 or less, 38 or less, 37 or less, 36 or less, 35 or less, 34 or less, 33 or less, 32 or less, 30 or less, 28 or less, 26 or less, 25 or less, 24 or less, 23 or less, or 22 or less, and its range is, for example, 10 to 56, 12 to 50, 14 to 45, 15 to 44, 20 to 43, or 25 to 42 (provided that $X \geq 3$ and $4 \geq Y > 0.03$)

Requirement (ii)

The salt equivalent amount per 100 g of water of the food composition is 3.0 g or more, 5.0 g or more, 7.0 g or more, 10 g or more, 12 g or more, 14 g or more, 16 g or more, 18 g or more, 20 g or more, 22 g or more, 24 g or more, 26 g or more, 28 g or more, 30 g or more, 32 g or more, 34 g or more, 35 g or more, or 36 g or more, and its upper limit is not particularly limited, but is, for example, 54 g or less, 50 g or less, 45 g or less, 40 g or less, or 38 g or less, and its range is, for example, 3.0 to 54 g, 5.0 to 54 g, 7.0 to 50 g, 8.0 to 45 g, 9.0 to 40 g, 10 to 40 g, 11 to 40 g, 12 to 40 g, 13 to 40 g, 14 to 40 g, 16 to 40 g, 20 to 40 g, 22 to 40 g, 24 to 40 g, 27 to 40 g, 30 to 40 g, 32 to 40 g, 33 to 50 g, 34 to 50 g, or 35 to 50 g, and, the ethanol content per 100 g of water of the food composition is 8.0 g or more, 8.2 g or more, 8.5 g or more, 8.7 g or more, 9.0 g or more, 9.3 g or more, 9.5 g or more, 10.0 g or more, 10.5 g or more, 11.0 g or more, 12.0 g or more, 13.0 g or more, 14.0 g or more, or 15.0 g or more, and its upper limit value is not particularly limited, but is, for example, 20.0 g or less, 19.5 g or less, 18.5 g or less, 18.0 g or less, 17.5 g or less, 16.5 g or less, or 15.5 g or less, and its range is, for example, 8.0 to 20.0 g, 9.0 to 19.0 g, 10.0 to 18.0 g, or 11.0 to 18.0 g

[35]
The method according to [34] above, which is for suppressing the growth of lactic acid bacteria in a food composition that is not subjected to heat sterilization at 100°C or more.
[36]
The method according to [34] or [35] above, wherein the food composition is a food composition that is not subjected to heat sterilization, and the heat sterilization is not particularly limited, but is, for example, a heat sterilization at a maximum temperature reached of 100°C or more, or a heat sterilization at a maximum temperature reached of 124°C or more.
[37]
A method for improving the texture of a processed grain product, using the food composition according to any one of [1] to [27] above.
[38]
A food composition for adding to a composition containing an enzyme having an optimum pH of 4.0 or more, 4.2 or more, 4.3 or more, 4.4 or more, 4.5 or more, 4.6 or more, 4.7 or more, 4.8 or more, 4.9 or more, 5.0 or more, 5.05 or more, 5.10 or more, 5.15 or more, 5.2 or more, 5.3 or more, or 5.4 or more, wherein its upper limit is not particularly limited, but is, for example, 9.5 or less, 9.3 or less, 9.0 or less, 8.8 or less, 8.2 or less, 8.0 or less, 7.5 or less, 7.1 or less, 7.0 or less, 6.8 or less, 6.5 or less, 6.3 or less, 6.2 or less, 6.1 or less, 5.9 or less, 5.8 or less, 5.6 or less, or 5.5 or less, and its range is, for example, 4.0 to 7.0, 4.7 to 6.8, 4.8 to 6.5, 4.9 to 6.4, 4.95 to 6.35, 5.00 to 6.30, 5.05 to 6.30, or 5.10 to 6.10, the food composition satisfying the following requirements (a), (b), and (d):

(a) the moisture content on a wet mass basis is 20 w/w% or more, 25 w/w% or more, 30 w/w% or more, 35 w/w% or more, 40 w/w% or more, 43 w/w% or more, 45 w/w% or more, 47 w/w% or more, 50 w/w% or more, or 52 w/w% or more, and its upper limit value is not particularly limited, but is, for example, 90 w/w% or less, 88 w/w% or less, 85 w/w% or less, 80 w/w% or less, 75 w/w% or less, 70 w/w% or less, 65 w/w% or less, 60 w/w% or less, or 58 w/w% or less, and its range is, for example, 20 to 85 w/w%, 25 to 80 w/w%, 30 to 75 w/w%, 35 to 70 w/w%, 40 to 65 w/w%, or 45 to 64 w/w%
(b) the pH at 20°C and 1 atm is more than 4.6, 4.7 or more, 4.8 or more, 4.9 or more, 5.0 or more, 5.05 or more, 5.10 or more, 5.15 or more, 5.2 or more, 5.3 or more, or 5.4 or more, and its upper limit is not limited, but is, for example, 8.8 or less, 8.2 or less, 8.0 or less, 7.5 or less, 7.1 or less, 7.0 or less, 6.8 or less, 6.5 or less, 6.3 or less, 6.2 or less, 6.1 or less, 5.9 or less, 5.8 or less, 5.6 or less, or 5.5 or less, and its range is, for example, more than 4.6 to 7.0 or less, 4.7 to 6.8, 4.8 to 6.5, 4.9 to 6.4, 4.95 to 6.35, 5.00 to 6.30, 5.05 to 6.30, or 5.10 to 6.10
(d) satisfies the following requirement (i) and/or (ii)

Requirement (i)

When the salt equivalent amount per 100 g of water of the food composition is X g, and the undissociated acetic acid content per 100 g of water of the food composition is Y g, the following formula is satisfied:
$4Y+X \geq 10$, or the value of "$4Y+X$" is 11 or more, 12 or more, 13 or more, 14 or more, 15 or more, 16 or more, 17 or more, 18 or more, 19 or more, 20 or more, 21 or more, 22 or more, 24 or more, 26 or more, 28 or more, 30 or more, 31 or more, 32 or more, 33 or more, 34 or more, or 35 or more, and its upper limit is not particularly limited, but is, for example, 56 or less, 54 or less, 52 or less, 50 or less, 48 or less, 46 or less, 44 or less, 42 or less, 41 or less, 40 or less, 39 or less, 38 or less, 37 or less, 36 or less, 35 or less, 34 or less, 33 or less, 32 or less, 30 or less, 28 or less, 26 or less, 25 or less, 24 or less, 23 or less, or 22 or less, and its range is, for example, 10 to 56, 12 to 50, 14 to 45, 15 to 44, 20 to 43, or 25 to 42 (provided that $X \geq 3$ and $4 \geq Y > 0.03$)

Requirement (ii)

The salt equivalent amount per 100 g of water of the food composition is 3.0 g or more, 5.0 g or more, 7.0 g or more, 10 g or more, 12 g or more, 14 g or more, 16 g or more, 18 g or more, 20 g or more, 22 g or more, 24 g or more, 26 g or more, 28 g or more, 30 g or more, 32 g or more, 34 g or more, 35 g or more, or 36 g or more, and its upper limit is not particularly limited, but is, for example, 54 g or less, 50 g or less, 45 g or less, 40 g or less, or 38 g or less, and its range is, for example, 3.0 to 54 g, 5.0 to 54 g, 7.0 to 50 g, 8.0 to 45 g, 9.0 to 40 g, 10 to 40 g, 11 to 40 g, 12 to 40 g, 13 to 40 g, 14 to 40 g, 16 to 40 g, 20 to 40 g, 22 to 40 g, 24 to 40 g, 27 to 40 g, 30 to 40 g, 32 to 40 g, 33 to 50 g, 34 to 50 g, or 35 to 50 g, and, the ethanol content per 100 g of water of the food composition is 8.0 g or more, 8.2 g or more, 8.5 g or more, 8.7 g or more, 9.0 g or more, 9.3 g or more, 9.5 g or more, 10.0 g or more, 10.5 g or more, 11.0 g or more, 12.0 g or more, 13.0 g or more, 14.0 g or more, or 15.0 g or more, and its upper limit value is not particularly limited, but is, for example, 20.0 g or less, 19.5 g or less, 18.5 g or less, 18.0 g or less, 17.5 g or less, 16.5 g or less, or 15.5 g or less, and its range is, for example, 8.0 to 20.0 g, 9.0 to 19.0 g, 10.0 to 18.0 g, or 11.0 to 18.0 g

[39]
The food composition according to [13] above, wherein the food composition contains 4-alpha-glucanotransferase.
[40]
The food composition according to [13] above, wherein the food composition contains alpha-amylase.
[41]
The food composition according to [13] or [40] above, wherein the food composition contains maltotriohydrolase.
[42]
The food composition according to any one of [13], [40], or [41] above, wherein the food composition contains glutaminase.
[43]
The food composition according to any one of [13], [40], [41], or [42] above, wherein the food composition contains at least one or more selected from cyclodextrin glucanotransferase, xylanase, lipase, or beta-glucosidase.
[44]
The food composition according to any one of [21] to [24] above, wherein the processed grain product contains miscellaneous grains, and the proportion of miscellaneous grains in the total grains contained in the processed grain product is not particularly limited, but is, for example, 1 to 100 w/w%, and its lower limit value is, for example, 1 w/w% or more, 3 w/w% or more, 5 w/w% or more, 7 w/w% or more, 9 w/w% or more, 10 w/w% or more, 12 w/w% or more, 14 w/w% or more, 16 w/w% or more, 18 w/w% or more, 20 w/w% or more, 25 w/w% or more, 30 w/w% or more, 35 w/w% or more, 40 w/w% or more, or 45 w/w% or more, and its upper limit value is, for example, 100 w/w% or less, 95 w/w% or less, 90 w/w% or less, 85 w/w% or less, 80 w/w% or less, 75 w/w% or less, 70 w/w% or less, 65 w/w% or less, 60 w/w% or less, or 55 w/w% or less.
[45]
The food composition according to any one of [21] to [24] above, wherein the processed grain product contains brown rice, and the proportion of brown rice in the total rice contained in the processed grain product is not particularly limited, but is, for example, 1 to 100 w/w%, and its lower limit value is, for example, 1 w/w% or more, 3 w/w% or more, 5 w/w% or more, 7 w/w% or more, 9 w/w% or more, 10 w/w% or more, 12 w/w% or more, 14 w/w% or more, 16 w/w% or more, 18 w/w% or more, 20 w/w% or more, 25 w/w% or more, 30 w/w% or more, 35 w/w% or more, 40 w/w% or more, or 45 w/w% or more, and its upper limit value is, for example, 100 w/w% or less, 95 w/w% or less, 90 w/w% or less, 85 w/w% or less, 80 w/w% or less, 75 w/w% or less, 70 w/w% or less, 65 w/w% or less, 60 w/w% or less, or 55 w/w% or less.
[46]
The method according to [35] above, wherein the lactic acid bacterium is a lactic acid bacterium belonging to Lactobacillus fructivorans.
[47]
The food composition according to any one of [1] to [27] or [40] to [45] above, wherein the content of the enzyme contained in the food composition is, for example, 0.001 w/w% or more, 0.01 w/w% or more, 0.05 w/w% or more, 0.1 w/w% or more, 0.3 w/w% or more, 0.5 w/w% or more, 0.7 w/w% or more, 0.9 w/w% or more, 1.0 w/w% or more, 1.2 w/w% or more, 1.5 w/w% or more, 1.7 w/w% or more, 1.8 w/w% or more, 2.0 w/w% or more, 2.2 w/w% or more, 2.5 w/w% or more, 2.7 w/w% or more, or 3.0 w/w% or more, and its upper limit value is not particularly limited, but is, for example, 10 w/w or less, 8.0 w/w or less, 7.0 w/w or less, 6.0 w/w or less, 5.0 w/w or less, 4.0 w/w or less, or 3.0 w/w or less, and its range is, for example, 0.001 to 10.0 w/w%.
[48]
The food composition according to any one of [1] to [27], [40] to [45], or [47] above, wherein the enzyme activity of the enzyme contained in the food composition is, for example, 150 U/L or more, 200 U/L or more, 250 U/L or more, 300 U/L or more, 400 U/L or more, 500 U/L or more, 600 U/L or more, 650 U/L or more, 700 U/L or more, 800 U/L or more, 900 U/L or more, 950 U/L or more, 1000 U/L or more, 1200 U/L or more, 1500 U/L or more, 1700 U/L or more, 1800 U/L or more, or 2000 U/L or more, and its upper limit is not particularly limited, but is, for example, 10,000,000 U/L or less, 9,000,000 U/L or less, 8,000,000 U/L or less, 7,000,000 U/L or less, 6,000,000 U/L or less, 5,000,000 U/L or less, 4,000,000 U/L or less, 3,000,000 U/L or less, 2,000,000 U/L or less, 1,800,000 U/L or less, 1,600,000 U/L or less, 1,400,000 U/L or less, 1,200,000 U/L or less, 1,100,000 U/L or less, 1,000,000 U/L or less, 900,000 U/L or less, 800,000 U/L or less, 700,000 U/L or less, 600,000 U/L or less, 500,000 U/L or less, 400,000 U/L or less, 300,000 U/L or less, 200,000 U/L or less, 100,000 U/L or less, 90,000 U/L or less, 80,000 U/L or less, 70,000 U/L or less, 60,000 U/L or less, 50,000 U/L or less, 40,000 U/L or less, 30,000 U/L or less, 20,000 U/L or less, 10,000 U/L or less, 5,000 U/L or less, or 1,000 U/L or less, and its range is, for example, 150 U/L to 10,000,000 U/L, 200 U/L to 8,000,000 U/L, 300 U/L to 6,000,000 U/L, 600 U/L to 4,000,000 U/L, 900 U/L to 2,000,000 U/L, or 1000 U/L to 1,000,000 U/L.

[49]

The food composition according to any one of [1] to [27], [40] to [45], [47], or [48] above, wherein the salt equivalent amount of the food composition is, for example, 1.0 w/w% or more, 2.0 w/w% or more, 2.5 w/w% or more, 3.0 w/w% or more, 3.5 w/w% or more, 4.0 w/w% or more, 4.5 w/w% or more, 5.0 w/w% or more, 6.0 w/w% or more, 7.5 w/w% or more, 8.0 w/w% or more, 8.3 w/w% or more, 8.7 w/w% or more, 9.0 w/w% or more, 9.5 w/w% or more, 9.6 w/w% or more, 9.8 w/w% or more, 9.9 w/w% or more, 10.2 w/w% or more, 10.5 w/w% or more, 10.8 w/w% or more, 11.1 w/w% or more, 11.3 w/w% or more, 11.5 w/w% or more, 11.6 w/w% or more, 11.7 w/w% or more, 11.8 w/w% or more, 11.9 w/w% or more, 12.5 w/w% or more, 13.0 w/w% or more, 13.5 w/w% or more, 14.0 w/w% or more, 14.5 w/w% or more, 15.0 w/w% or more, 15.5 w/w% or more, 16.0 w/w% or more, 16.5 w/w% or more, or 17.0 w/w% or more, and its upper limit value is not particularly limited, but is, for example, 70.0 w/w% or less, 60.0 w/w% or less, 50.0 w/w% or less, 40.0 w/w% or less, 35.0 w/w% or less, 30.0 w/w% or less, 26.0 w/w% or less, 25.0 w/w% or less, 24.0 w/w% or less, 23.0 w/w% or less, 22.0 w/w% or less, 21.0 w/w% or less, 20.0 w/w% or less, 19.8 w/w% or less, 19.0 w/w% or less, 18.0 w/w% or less, 17.5 w/w% or less, 17.0 w/w% or less, 16.0 w/w% or less, or 15.8 w/w% or less, and its range is, for example, 1.0 w/w% to 70.0 w/w%, 2.0 w/w% to 60.0 w/w%, 2.5 w/w% to 50.0 w/w%, 3.0 w/w% to 40.0 w/w%, 3.5 w/w% to 35.0 w/w%, 4.0 w/w% to 30.0 w/w%, 4.5 w/w% to 26.0 w/w%, 5.0 to 25.0 w/w%, 6.0 to 24.0 w/w%, 7.0 to 23.0 w/w%, 8.0 to 22.0 w/w%, 10.0 to 21.0 w/w%, 12.0 to 20.5 w/w%, 12.1 to 20.5 w/w%, or 12.2 to 20.5 w/w%.

[50]

The food composition according to any one of [1] to [27], [40] to [45], or [47] to [49] above, wherein the undissociated acetic acid content of the food composition is, for example, 0.015 w/w% or more, 0.02 w/w% or more, 0.025 w/w% or more, 0.03 w/w% or more, 0.035 w/w% or more, 0.04 w/w% or more, 0.045 w/w% or more, 0.048 w/w% or more, 0.05 w/w% or more, 0.053 w/w% or more, 0.055 w/w% or more, 0.100 w/w% or more, 0.150 w/w% or more, 0.180 w/w% or more, 0.200 w/w% or more, 0.210 w/w% or more, 0.230 w/w% or more, 0.240 w/w% or more, 0.270 w/w% or more, 0.300 w/w% or more, 0.350 w/w% or more, 0.400 w/w% or more, 0.450 w/w% or more, 0.500 w/w% or more, 0.550 w/w% or more, or 0.600 w/w% or more, and its upper limit value is not particularly limited, but is, for example, 1.900 w/w% or less, 1.800 w/w% or less, 1.700 w/w% or less, 1.650 w/w% or less, 1.600 w/w% or less, 1.580 w/w% or less, 1.510 w/w% or less, 1.450 w/w% or less, 1.380 w/w% or less, 1.280 w/w% or less, 1.200 w/w% or less, 1.150 w/w% or less, 1.100 w/w% or less, 1.050 w/w% or less, 1.005 w/w% or less, 0.980 w/w% or less, 0.940 w/w% or less, or 0.920 w/w% or less, and its range is, for example, 0.01 to 3.000 w/w%, 0.03 to 2.000 w/w%, 0.05 to 1.800 w/w%, 0.07 to 1.600 w/w%, 0.100 to 1.550 w/w%, 0.15 to 1.450 w/w%, or 0.200 to 1.300 w/w%.

[51]

The food composition according to any one of [1] to [27], [40] to [45], or [47] to [50] above, wherein the total acetic acid content of the food composition is, for example, 2.1 w/w% or more, 2.2 w/w% or more, 2.3 w/w% or more, 2.4 w/w% or more, 2.7 w/w% or more, 2.9 w/w% or more, 3.1 w/w% or more, 3.2 w/w% or more, 3.3 w/w% or more, 3.5 w/w% or more, 3.7 w/w% or more, 3.9 w/w% or more, 4.1 w/w% or more, 4.3 w/w% or more, 4.5 w/w% or more, 4.7 w/w% or more, or 4.9 w/w% or more, and its upper limit value is not particularly limited, but is, for example, 12.0 w/w% or less, 11.5 w/w% or less, 11.0 w/w% or less, 10.5 w/w% or less, 9.3 w/w% or less, 9.1 w/w% or less, 8.9 w/w% or less, 8.7 w/w% or less, 8.3 w/w% or less, 7.7 w/w% or less, 7.3 w/w% or less, 7.2 w/w% or less, 6.9 w/w% or less, 6.8 w/w% or less, or 6.7 w/w% or less, and its range is, for example, 2.0 to 12.0 w/w%, 2.1 to 11.0 w/w%, 2.2 to 10.0 w/w%, 2.3 to 9.5 w/w%, 2.4 to 9.0 w/w%, 2.6 to 8.8 w/w%, 2.8 to 8.5 w/w%, 3.0 to 8.0 w/w%, 4.0 to 7.5 w/w%, or 4.3 to 7.0 w/w%.

[52]

The food composition according to any one of [1] to [27], [40] to [45], or [47] to [51] above, wherein when the salt equivalent amount of the food composition is $X_2$ w/w% and the undissociated acetic acid content is $Y_2$ w/w%, the following formula is satisfied:

$4Y_2+X_2 \geq 10$, or the value of "$4Y_2+X_2$" is 11 or more, 12 or more, 13 or more, 14 or more, 15 or more, 16 or more, 17 or more, 18 or more, 19 or more, 20 or more, 21 or more, 22 or more, 24 or more, 26 or more, 28 or more, 30 or more, 31 or more, 32 or more, 33 or more, 34 or more, or 35 or more, and its upper limit is not particularly limited, but is, for example, 56 or less, 54 or less, 52 or less, 50 or less, 48 or less, 46 or less, 44 or less, 42 or less, 41 or less, 40 or less, 39 or less, 38 or less, 37 or less, 36 or less, 35 or less, 34 or less, 33 or less, 32 or less, 30 or less, 28 or less, 26 or less, 25 or less, 24 or less, 23 or less, or 22 or less, and its range is, for example, 10 to 56, 12 to 50, 14 to 45, 15 to 44, 20 to 43, or 25 to 42 (provided that $X_2 \geq 3$ and $4 \geq Y_2 > 0.03$).

[53]

The food composition according to any one of [1] to [27], [40] to [45], or [47] to [52] above, wherein the ethanol content of the food composition is, for example, 5.0 w/w% or more, 5.2 w/w% or more, 5.5 w/w% or more, 5.7 w/w% or more, 6.0 w/w% or more, 6.3 w/w% or more, 6.5 w/w% or more, 7.0 w/w% or more, 7.1 w/w% or more, 7.3 w/w% or more, 7.5 w/w% or more, 7.8 w/w% or more, 8.0 w/w% or more, or 9.0 w/w% or more, and its upper limit value is not particularly limited, but is, for example, 20.0 w/w% or less, 18.0 w/w% or less, 17.5 w/w% or less, w/w% or less, 16.5 w/w% or less, 15.5 w/w% or less, 14.5 w/w% or less, or 13.0 w/w% or less, and its range is, for example, 4.5 to 19.0 w/w%, 5.3 to 17.0 w/w%, 6.8 to 15.0 w/w%, or 7.5 to 14.0 w/w%.

[54]

The food composition according to any one of [1] to [27], [40] to [45], or [47] to [53] above, wherein the chloride ion content of the food composition is, for example, 2 w/w% or more, 2.5 w/w% or more, 3.5 w/w% or more, 4.2 w/w% or more, 5.3 w/w% or more, 5.5 w/w% or more, 5.7 w/w% or more, 6 w/w% or more, 6.2 w/w% or more, 6.8 w/w% or more, or 7 w/w% or more, and its upper limit value is not particularly limited, but is, for example, 15.3 w/w% or less, 14.5 w/w% or less, 13.5 w/w% or less, 12.7 w/w% or less, 12.5 w/w% or less, 11.8 w/w% or less, 11.5 w/w% or less, 11.3 w/w% or less, 11 w/w or less, 10.8 w/w% or less, 10.5 w/w% or less, 10.3 w/w% or less, 10 w/w% or less, 9.8 w/w% or less, or 9.5 w/w% or less, and its range is, for example, 1.8 to 15.5 w/w%, 3 to 15 w/w%, 4 to 14 w/w%, 5 to 13 w/w%, 6.5 to 12.5 w/w%, or 7.3 to 12 w/w%.

[55]

The food composition according to any one of [1] to [27], [40] to [45], or [47] to [54] above, wherein the carbohydrate content of the food composition is, for example, 0.5 w/w% or more, 1.0 w/w% or more, 1.5 w/w% or more, 2.0 w/w% or more, 2.5 w/w% or more, 3.0 w/w% or more, 3.5 w/w% or more, 4.0 w/w% or more, 6.0 w/w% or more, 7.0 w/w% or more, 7.5 w/w% or more, 8.0 w/w% or more, 9.0 w/w% or more, 10.0 w/w% or more, 11.5 w/w% or more, 12.0 w/w% or more, 12.5 w/w% or more, 13.0 w/w% or more, 13.5 w/w% or more, 14.0 w/w% or more, 16.0 w/w% or more, 17.0 w/w% or more, 17.5 w/w% or more, or 18.0 w/w% or more, and its upper limit value is not particularly limited, but is, for example, 45.0 w/w% or less, 40.0 w/w% or less, 36.0 w/w% or less, 35.0 w/w% or less, 34.0 w/w% or less, 33.0 w/w% or less, 31.0 w/w% or less, 29.0 w/w% or less, 28.5 w/w% or less, 27.5 w/w% or less, 27.0 w/w% or less, 26.8 w/w% or less, or 26.3 w/w% or less, and its range is, for example, 0.5 to 50.0 w/w%, 1.0 to 40.0 w/w%, 2.0 to 36.0 w/w%, 3.0 to 29.0 w/w%, 4.0 to 27.0 w/w%, 5.0 to 25.0 w/w%, or 13.0 to 25.0 w/w%.

According to the food composition of the present invention, it is possible to maintain enzyme activity while suppressing the growth of microorganisms that cause food deterioration.

Description of Embodiments

In this specification, when a plurality of upper limit values and/or a plurality of lower limit values are shown for the definition of a numerical range, even if not explicitly stated, it is assumed that the definition of a numerical range combining at least the maximum value of the upper limit definition and the minimum value of the lower limit definition is directly described, and further, all numerical ranges obtained by combining any upper limit value among the upper limit values and any lower limit value among the lower limit values are included in one embodiment of the present invention. Moreover, in this specification, a numerical range connected by "to" means a numerical range including the numerical values before and after the "to" as a lower limit value and an upper limit value. When a plurality of lower limit values and a plurality of upper limit values are shown separately, it is assumed that any lower limit value and upper limit value can be selected and connected by "to."

In the present invention, a proportion expressed in "w/w%" represents a proportion "on a wet mass basis." "On a wet mass basis" represents the content ratio of a target component in a sample, calculated with the wet mass of the sample including its moisture as the denominator and the contained mass of the target component in the sample as the numerator, and can also be read as mass%.

As used herein, the term "comprising" includes the terms "consisting essentially of" and "consisting of." When the term "comprising" is used, the listed steps or options need not be exhaustive.

In this specification, the expression "and/or" includes the meanings of both "and" and "or." For example, "A and/or B" includes the meanings of both "A and B" and "A or B," and indicates the three cases of A alone, B alone, and both A and B.

In the present invention, an expression to the effect of "content of each component per 100 g of water of the food composition" indicates the ratio of the content (w/w%) of each component of the food composition to the moisture content on a wet mass basis (w/w%) of the food composition, expressed as a mass%. For example, when the moisture content on a wet mass basis of the food composition is 50 w/w% and the salt equivalent amount of the food composition is 5 w/w%, the salt equivalent amount per 100 g of water of the food composition is calculated as 10 g.

Note that, according to one aspect of the present invention, the description of the problem mentioned above does not preclude the existence of other problems disclosed in this specification. In other words, as one aspect of the present invention, for example, one of the problems may be to suppress the growth of spoilage microorganisms in a food composition that is not subjected to heat sterilization at 100°C or more, one of the problems may be to suppress the generation of off-odors due to the growth of microorganisms that cause food deterioration, one of the problems may be to maintain the enzyme activity of a food composition containing an enzyme, one of the problems may be to improve the preservability of a food composition that is not subjected to heat sterilization at 100°C or more, and one of the problems may be to improve the texture of a processed grain product. Also, one aspect of the present invention does not need to solve all of these problems.

<Microorganisms>

The food composition of the present invention can suppress the growth of microorganisms that cause food deterioration (which may be referred to as spoilage microorganisms in the present invention). Microorganisms include viruses, bacteria, yeasts, molds, actinomycetes, and the like. Examples of microorganisms that cause food deterioration include lactic acid bacteria, acetic acid bacteria, yeasts, Bacillus subtilis (e.g., natto bacteria, etc.), Aspergillus oryzae, Escherichia coli, and the like. More specifically, examples include food poisoning bacteria such as Staphylococcus aureus, Clostridium botulinum (type A, proteolytic types B and F, type E, nonproteolytic types B and F), Bacillus cereus, Clostridium perfringens, pathogenic strains of Escherichia coli, Vibrio cholerae, Salmonella spp., Vibrio parahaemolyticus, Aeromonas, Listeria monocytogenes, Campylobacter jejuni, Yersinia enterocolitica, Shigella spp., and Vibrio vulnificus, as well as spoilage microorganisms that have the ability to grow in acetic acid-containing compositions. Examples of spoilage microorganisms that have the ability to grow in acetic acid-containing compositions include salt-tolerant spore-forming bacteria, acetic acid-tolerant spore-forming bacteria, acidophilic spore-forming bacteria, heat-resistant molds, heat-resistant lactic acid bacteria, acetic acid-tolerant lactic acid bacteria, acetic acid-tolerant molds, acetic acid-tolerant yeasts, salt-tolerant yeasts, and the like. Among these, the food composition of the present invention can exhibit an excellent growth-suppressing effect against the spoilage microorganisms, and in particular, can exhibit an excellent growth-suppressing effect against at least one selected from salt-tolerant spore-forming bacteria, acetic acid-tolerant spore-forming bacteria, acidophilic spore-forming bacteria, heat-resistant molds, heat-resistant lactic acid bacteria, acetic acid-tolerant molds, and salt-tolerant yeasts, which are spoilage microorganisms that have the ability to grow in acetic acid-containing compositions, and can exhibit an excellent growth-suppressing effect particularly against at least one selected from salt-tolerant spore-forming bacteria and heat-resistant lactic acid bacteria. More specifically, the food composition of the present invention can exhibit an excellent growth-suppressing effect against heat-resistant lactic acid bacteria, and even more specifically, can exhibit an excellent growth-suppressing effect against lactic acid bacteria belonging to the heat-resistant lactic acid bacterium "Lactobacillus fructivorans."
Note that when lactic acid bacteria grow in a food composition, components such as diacetyl are produced by lactic acid fermentation and are perceived as an off-odor.

<First Embodiment>

A first embodiment of the present invention relates to a food composition containing one or more enzymes having an optimum pH of 4.0 or more. The first embodiment will be described below.
In the first embodiment, the food composition of the present invention is a food composition that satisfies all of the following requirements (a) to (d).

(a) The moisture content on a wet mass basis is 20 w/w% or more
(b) The pH at 20°C and 1 atm is more than 4.6
(c) Contains one or more enzymes having an optimum pH of 4.0 or more
(d) Satisfies the following requirement (i) and/or (ii)

Requirement (i)

When the salt equivalent amount per 100 g of water of the food composition is X g, and the undissociated acetic acid content per 100 g of water of the food composition is Y g, the following formula is satisfied:

$$4Y+X \geq 10 \text{ (provided that } X \geq 3 \text{ and } 4 \geq Y > 0.03)$$

Requirement (ii)

The salt equivalent amount per 100 g of water of the food composition is 3.0 g or more, and the ethanol content per 100 g of water of the food composition is 8.0 g or more

11

<Moisture Content on a Wet Mass Basis>

In the present invention, the moisture content on a wet mass basis of the food composition means the ratio of the amount of moisture in the food composition to the total amount of the food composition. Its value is measured by heating to 90°C by a vacuum heating and drying method in accordance with the Standard Tables of Food Composition in Japan - 2015 (Seventh Revised Edition). Specifically, an appropriate amount of a sample is taken into a weighing container that has been previously brought to a constant weight (W0) and weighed (W1), placed in a vacuum electric constant temperature dryer adjusted to a predetermined temperature (more specifically 90°C) at normal pressure with the lid of the weighing container removed or its mouth opened, the door is closed, a vacuum pump is activated, and the sample is dried for a certain period of time at a predetermined degree of vacuum, the vacuum pump is stopped, dry air is sent in to return to normal pressure, the weighing container is taken out, covered with a lid, and after being allowed to cool in a desiccator, the mass is measured. This process of drying, cooling, and weighing (W2) is repeated until a constant weight is achieved, and the moisture content (moisture content on a wet mass basis) (mass%) is determined by (W1-W2)/(W1-W0). The dry weight of the sample can also be measured by determining (W2-W0).

It is preferable that the moisture content on a wet mass basis of the food composition of the present invention is a predetermined value or more. This makes it possible to stabilize the pH of the food composition. Also, when the food composition is added to raw materials, the components in the food composition can come into contact with the raw materials evenly. The moisture content on a wet mass basis in the food composition of the present invention is usually 20 w/w% or more, preferably 25 w/w% or more, more preferably 30 w/w% or more, further preferably 35 w/w% or more, even more preferably 40 w/w% or more, particularly preferably 43 w/w% or more, especially preferably 45 w/w% or more, 47 w/w% or more, 50 w/w% or more, or may be 52 w/w% or more. Its upper limit value is not particularly limited, but may be, for example, 90 w/w% or less, 88 w/w% or less, 85 w/w% or less, 80 w/w% or less, 75 w/w% or less, 70 w/w% or less, 65 w/w% or less, 60 w/w% or less, or 58 w/w% or less. Furthermore, from the viewpoint of allowing the components in the food composition to come into contact with the raw materials evenly when adding the food composition to raw materials and suppressing the growth of spoilage microorganisms, it is preferable that the moisture content on a wet mass basis of the food composition of the present invention is within a predetermined range. The range is preferably 20 to 85 w/w%, more preferably 25 to 80 w/w%, further preferably 30 to 75 w/w%, even more preferably 35 to 70 w/w%, particularly preferably 40 to 65 w/w%, and especially preferably 45 to 64 w/w%. Numerical ranges specified by combining the above upper limit values or lower limit values are also disclosed in the present invention.

As described above, it is preferable that the moisture content on a wet mass basis of the food composition of the present invention is a predetermined value or more, but the food composition of the present invention may be any composition as long as the enzyme is in a state of being dissolved in water, and specifically, it may be a solid composition by adding a coagulant in an environment of 1 atm and 20°C, it may be a gel-like (semi-solid) composition to which a gelling agent has been added, or it may be a liquid composition in which the enzyme is in a state of being dissolved in water. However, a liquid composition or a gel-like composition is preferable, and a liquid composition is particularly preferable, in that the components in the food composition can be brought into contact with the raw materials evenly when the food composition is added to the raw materials. Moreover, the food composition of the present invention is more preferably in a liquid state in an environment of 1 atm and 0°C, and may be in a liquid state even in an environment of 1 atm and -20°C (this allows it to be distributed while maintaining enzyme activity even in cold regions). Note that in order for the food composition of the present invention to be in a liquid state even in an environment of 1 atm and 0°C, or 1 atm and -20°C, it may be adjusted, for example, to satisfy the provisions regarding the carbohydrate content and salt equivalent amount described later. Furthermore, the food composition of the present invention may be an unsterilized composition that can be used without the generation of off-odors derived from microorganisms even when filled in a container, not subjected to a heat sterilization treatment (for example, a heat sterilization treatment at a maximum temperature reached of 100°C or more, particularly a heat sterilization treatment at a maximum temperature reached of 124°C or more), and stored at 1 atm and 20°C for one month, two months, three months, four months, five months, six months, seven months, or eight months. In particular, it is more preferable that the composition of the present invention is an unsterilized liquid composition, because it becomes a composition in which the decrease in activity of the enzyme due to heat sterilization treatment is suppressed and the enzyme activity during storage is maintained.

It is preferable that the water activity of the food composition of the present invention is a predetermined value or less. Water activity refers to the ratio of free water to the amount of moisture in a food. From the viewpoint of suppressing the growth of spoilage microorganisms, the water activity of the food composition of the present invention may be preferably 0.98 or less, 0.97 or less, 0.96 or less, 0.95 or less, 0.94 or less, 0.93 or less, 0.92 or less, 0.91 or less, 0.90 or less, 0.89 or less, 0.88 or less, 0.87 or less, 0.86 or less, 0.85 or less, 0.84 or less, 0.83 or less, 0.82 or less, 0.81 or less, 0.80 or less, 0.79 or less, or 0.78 or less, 0.77 or less, 0.75 or less, 0.74 or less, 0.73 or less, 0.72 or less, 0.71 or less, 0.70 or less, 0.69 or less, or 0.68 or less. Also, from the viewpoint of maintaining enzyme activity, its lower limit value may be preferably 0.50 or more, 0.52 or more, 0.55 or more, 0.57 or more, 0.58 or more, 0.60 or more, 0.61 or more, 0.62 or more, 0.63 or more, 0.64 or more, 0.65 or more, or 0.67 or more. The range of water activity in the food composition of the present invention may also be preferably 0.50 to 0.94, or 0.60 to 0.93. Numerical ranges specified by combining the above upper limit values or lower limit values are also disclosed in the present invention.

It is preferable that the pH of the food composition of the present invention is more than 4.6, because the effects of the present invention are exerted. When the pH is a predetermined value or more, enzyme activity can be maintained. Although the principle is unknown, by adjusting the pH and the undissociated acetic acid content, or the pH and the ethanol content to predetermined ranges, the enzyme can be made to act without impairing the quality of the raw materials even when the food composition of the present invention is added to the raw materials. In the present invention, the value of "pH" refers to the value measured at 1 atm and 20°C. Specifically, its upper limit is not limited, but for example, it can be 8.8 or less, 8.2 or less, 8.0 or less, 7.5 or less, 7.1 or less, 7.0 or less, 6.8 or less, 6.5 or less, 6.3 or less, 6.2 or less, 6.1 or less, 5.9 or less, 5.8 or less, 5.6 or less, or 5.5 or less. On the other hand, its lower limit is not limited, but for example, it can be more than 4.6, 4.7 or more, 4.8 or more, 4.9 or more, 5.0 or more, 5.05 or more, 5.10 or more, 5.15 or more, 5.2 or more, 5.3 or more, or 5.4 or more. More specifically, the pH of the food composition of the present invention may usually be more than 4.6 to 7.0 or less, preferably 4.7 to 6.8, more preferably 4.8 to 6.5, further preferably 4.9 to 6.4, even more preferably 4.95 to 6.35, particularly preferably 5.00 to 6.30, and especially preferably 5.05 to 6.30 or 5.10 to 6.10. Numerical ranges specified by combining the above upper limit values or lower limit values are also disclosed in the present invention.

<Enzyme>

It is preferable that the food composition of the present invention contains an enzyme having an optimum pH of 4.0 or more. One type of the enzyme may be used, or two or more types may be arbitrarily combined. The optimum pH of the enzyme in the present invention is not limited in its upper limit, but for example, it can be 9.5 or less, 9.3 or less, 9.0 or less, 8.8 or less, 8.2 or less, 8.0 or less, 7.5 or less, 7.1 or less, 7.0 or less, 6.8 or less, 6.5 or less, 6.3 or less, 6.2 or less, 6.1 or less, 5.9 or less, 5.8 or less, 5.6 or less, or 5.5 or less. On the other hand, its lower limit can be, for example, 4.0 or more, 4.2 or more, 4.3 or more, 4.4 or more, 4.5 or more, 4.6 or more, 4.7 or more, 4.8 or more, 4.9 or more, 5.0 or more, 5.05 or more, 5.10 or more, 5.15 or more, 5.2 or more, 5.3 or more, or 5.4 or more. More specifically, the optimum pH of the enzyme in the food composition of the present invention may usually be 4.0 to 7.0, preferably 4.7 to 6.8, more preferably 4.8 to 6.5, further preferably 4.9 to 6.4, even more preferably 4.95 to 6.35, particularly preferably 5.00 to 6.30, and especially preferably 5.05 to 6.30 or 5.10 to 6.10. Note that in the present invention, optimum pH refers to the pH at which the activity of the enzyme is highest, and usually refers to the pH at which the activity of the enzyme at 30°C is highest. When the optimum pH for any enzyme is determined to be a specific pH, it is sufficient if that numerical value satisfies the above provision (e.g., 4.0 or more), and when the optimum pH has a certain range, it is sufficient if a part or all of that range satisfies the above provision (e.g., 4.0 or more).

The enzyme is not particularly limited, but it is preferable that the food composition of the present invention contains at least one enzyme selected from transferases and hydrolases. A transferase is an enzyme classified in EC group 2, and is also called a transfer enzyme. A hydrolase is an enzyme classified in EC group 3, and is also called a hydrolytic enzyme. When the food composition of the present invention contains a transferase, it is possible to maintain the appropriate elasticity of a processed grain product, particularly when the food composition of the present invention is used for a processed grain product. When the food composition of the present invention contains a hydrolase, it is possible to maintain the softness of a processed grain product, particularly when the food composition of the present invention is used for a processed grain product. Furthermore, when the food composition of the present invention contains a transferase and a hydrolase, it is possible to maintain both softness and elasticity in a processed grain product and maintain a chewy texture, particularly when the food composition of the present invention is used for a processed grain product. That is, it is preferable that the food composition of the present invention contains a transferase and/or a hydrolase.

It is preferable that the food composition of the present invention preferably contains one or more hexosyltransferases as the transferase. A hexosyltransferase is an enzyme specified by "EC number 2.4.1.X" (X is a number). More specifically, it is particularly preferable that the food composition of the present invention contains, as the hexosyltransferase, at least one selected from 6-alpha-glucanotransferase, 4-alpha-glucanotransferase, cyclodextrin glucanotransferase, and alpha-glucosyltransferase, and it may contain two, three, or four types. Among these, it is preferable that the food composition of the present invention contains 6-alpha-glucanotransferase or 4-alpha-glucanotransferase. On the other hand, in an embodiment where the food composition of the present invention contains cyclodextrin glucanotransferase as a transferase, since it can improve the dry and crumbly texture of a processed grain product containing brown rice and/or miscellaneous grains, it can be suitably used for a processed grain product containing brown rice and/or miscellaneous grains.

In the present invention, the 6-alpha-glucanotransferase can be the 6-alpha-glucanotransferase classified under EC number 2.4.1.18. The 4-alpha-glucanotransferase can be the 4-alpha-glucanotransferase classified under EC number 2.4.1.25. The cyclodextrin glucanotransferase can be the cyclodextrin glucanotransferase classified under EC number 2.4.1.19. The alpha-glucosyltransferase can be the alpha-glucosyltransferase classified under EC number 2.4.1.18.

It is particularly preferable that the food composition of the present invention contains, as the hydrolase, at least one selected from glutaminase, maltotriohydrolase, beta-amylase, phospholipase A1, pullulanase, hemicellulase, alpha-amylase, pectinase, glucoamylase, transglucosidase, pectin methyl esterase, phospholipase A2, protease, alpha-galactosidase, invertase, cellulase, xylanase, fructosyltransferase, beta-glucosidase, and lipase, and it may contain two, three, four, or five or more types.

In the present invention, the glutaminase can be the glutaminase classified under EC number 3.5.1.35. The maltotriohydrolase can be the maltotriohydrolase classified under EC number 3.2.1.1. The beta-amylase can be the beta-amylase classified under EC number 3.2.1.2. The phospholipase A1 can be the phospholipase A1 classified under EC number 3.1.1.32. The pullulanase can be the pullulanase classified under EC number 3.2.1.41. The hemicellulase can be the hemicellulase classified under EC number 3.2.1.8. The alpha-amylase can be the alpha-amylase classified under EC number 3.2.1.1, and may also be the maltose-producing alpha-amylase classified under EC number 3.2.1.133. The pectinase can be the pectinase classified under EC number 3.2.1.15. The glucoamylase can be the glucoamylase classified under EC number 3.2.1.3. The transglucosidase can be the transglucosidase classified under EC number 3.2.1.20. The pectin methyl esterase can be the pectin methyl esterase classified under EC number 3.1.1.11. The phospholipase A2 can be the phospholipase A2 classified under EC number 3.1.1.4. The protease is not particularly limited as long as it is a protease classified under EC number 3.4.X.X (X is a number), but can be, for example, the protease classified under EC number 3.4.23.21. The alpha-galactosidase can be the alpha-galactosidase classified under EC number 3.2.1.22. The invertase can be the invertase classified under EC number 3.2.1.26. The cellulase can be the cellulase classified under EC number 3.2.1.4. The xylanase can be the xylanase classified under EC number 3.2.1.8. The fructosyltransferase can be the fructosyltransferase classified under EC number 3.2.1.7. The beta-glucosidase can be the beta-glucosidase classified under EC number 3.2.1.21. The lipase can be the lipase classified under EC number 3.1.1.3. Furthermore, in an embodiment where the food composition of the present invention contains, as a hydrolase, at least one or more enzymes selected from xylanase, beta-glucosidase, or lipase, since it can improve the dry and crumbly texture of a processed grain product containing brown rice and/or miscellaneous grains, it can be suitably used for a processed grain product containing brown rice and/or miscellaneous grains.

The food composition of the present invention may also contain at least one selected from glucose oxidase, polyphenol oxidase, and glucose isomerase.

In the present invention, the glucose oxidase can be the glucose oxidase classified under EC number 1.1.3.4. The polyphenol oxidase can be the polyphenol oxidase classified under EC number 1.10.3.2. The glucose isomerase can be the glucose isomerase classified under EC number 5.3.1.5.

The food composition of the present invention may contain any combination of the enzymes described above. That is, the food composition of the present invention may contain at least one, two, three, four, or five or more selected from glutaminase, 6-alpha-glucanotransferase, maltotriohydrolase, 4-alpha-glucanotransferase, beta-amylase, phospholipase A1, pullulanase, hemicellulase, alpha-amylase, cyclodextrin glucanotransferase, pectinase, glucose oxidase, polyphenol oxidase, glucoamylase, transglucosidase, pectin methyl esterase, phospholipase A2, protease, alpha-galactosidase, invertase, cellulase, glucose isomerase, alpha-glucosyltransferase, xylanase, fructosyltransferase, beta-glucosidase, and lipase. Among these, the food composition of the present invention may contain 6-alpha-glucanotransferase and maltotriohydrolase, may contain 4-alpha-glucanotransferase and beta-amylase, may contain a protease and a lipase, may contain cellulase, hemicellulase, and pectinase, and may contain glutaminase and alpha-amylase. The food composition of the present invention may also be one that does not contain at least one, two, three, four, or five or more selected from the enzymes described above.

It is preferable that the food composition of the present invention contains at least one enzyme that has as a substrate at least one selected from amino acids, peptides, starch, phospholipids, hemicellulose, pectin, phospholipids, oligosaccharides, glycolipids, cellulose, glucose, xylan, sucrose, proteins, and simple lipids, and it may contain two, three, four, five, six, seven, or eight or more enzymes that have as a substrate at least one selected from amino acids, peptides, starch, phospholipids, hemicellulose, pectin, phospholipids, oligosaccharides, glycolipids, cellulose, glucose, xylan, sucrose, proteins, and simple lipids. The amino acid is usually preferably one that has as a substrate at least one selected from histidine, isoleucine, leucine, lysine, methionine, phenylalanine, threonine, tryptophan, valine, arginine, cysteine, glutamine, glycine, proline, tyrosine, alanine, aspartic acid, asparagine, glutamic acid, and serine. The amino acid usually refers to at least one selected from histidine, isoleucine, leucine, lysine, methionine, phenylalanine, threonine, tryptophan, valine, arginine, cysteine, glutamine, glycine, proline, tyrosine, alanine, aspartic acid, asparagine, glutamic acid, and serine. The term "amino acid" in this provision is a concept that includes the D-form, L-form, and DL-form, respectively.

The food composition of the present invention may be one that does not contain glucose oxidase, or may be one that does not contain alpha-amylase and glucose oxidase.

For the enzyme contained in the food composition of the present invention, a commercially available enzyme can be used (for example, for beta-amylase, beta-Amylase F "Amano" from Amano Enzyme Inc., etc.).

The commercially available enzyme can be added so that a predetermined amount is contained in the food composition. The content of the enzyme (for example, the commercially available enzyme) contained in the food composition of the present invention is not particularly limited in its lower limit value, but may be, for example, 0.001 w/w% or more, 0.01 w/w% or more, 0.05 w/w% or more, 0.1 w/w% or more, 0.3 w/w% or more, 0.5 w/w% or more, 0.7 w/w% or more, 0.9 w/w% or more, 1.0 w/w% or more, 1.2 w/w% or more, 1.5 w/w% or more, 1.7 w/w% or more, 1.8 w/w% or more, 2.0 w/w% or more, 2.2 w/w% or more, 2.5 w/w% or more, 2.7 w/w% or more, or 3.0 w/w% or more. Its upper limit value may be, for example, 10 w/w or less, 8.0 w/w or less, 7.0 w/w or less, 6.0 w/w or less, 5.0 w/w or less, 4.0 w/w or less, or 3.0 w/w or less. Its range may be, for example, 0.001 to 10.0 w/w%. Numerical ranges specified by combining the above upper limit values or lower limit values are also disclosed in the present invention. According to one aspect of the present invention, the various enzymes contained in the food composition of the present invention may be contained in a state where their enzyme activity is within a predetermined range. The range of enzyme activity of the various enzymes contained in the food composition of the invention may be, for example, 100 U/L or more and 10,000,000 U/L or less. More specifically, its lower limit may be 150 U/L or more, 200 U/L or more, 250 U/L or more, 300 U/L or more, 400 U/L or more, 500 U/L or more, 600 U/L or more, 650 U/L or more, 700 U/L or more, 800 U/L or more, 900 U/L or more, 950 U/L or more, 1000 U/L or more, 1200 U/L or more, 1500 U/L or more, 1700 U/L or more, 1800 U/L or more, or 2000 U/L or more. On the other hand, its upper limit may be 10,000,000 U/L or less, 9,000,000 U/L or less, 8,000,000 U/L or less, 7,000,000 U/L or less, 6,000,000 U/L or less, 5,000,000 U/L or less, 4,000,000 U/L or less, 3,000,000 U/L or less, 2,000,000 U/L or less, 1,800,000 U/L or less, 1,600,000 U/L or less, 1,400,000 U/L or less, 1,200,000 U/L or less, 1,100,000 U/L or less, 1,000,000 U/L or less, 900,000 U/L or less, 800,000 U/L or less, 700,000 U/L or less, 600,000 U/L or less, 500,000 U/L or less, 400,000 U/L or less, 300,000 U/L or less, 200,000 U/L or less, 100,000 U/L or less, 90,000 U/L or less, 80,000 U/L or less, 70,000 U/L or less, 60,000 U/L or less, 50,000 U/L or less, 40,000 U/L or less, 30,000 U/L or less, 20,000 U/L or less, 10,000 U/L or less, 5,000 U/L or less, or 1,000 U/L or less. The enzyme activity of the various enzymes contained in the food composition of the present invention may be preferably 150 U/L to 10,000,000 U/L, more preferably 200 U/L to 8,000,000 U/L, further preferably 300 U/L to 6,000,000 U/L, even more preferably 600 U/L to 4,000,000 U/L, particularly preferably 900 U/L to 2,000,000 U/L, and especially preferably 1000 U/L to 1,000,000 U/L. The enzyme activity of various enzymes can be defined as 1 unit (1 U/L) being the amount of enzyme that can transform 1 $\mu$mol of substrate per minute at 30°C in 1 L of sample under optimal conditions. Also, 1 U ($\mu$mol/min) can be converted to the SI unit kat (mol/sec). For example, for glutaminase enzyme activity, 0.1 mL of an enzyme solution appropriately diluted using a 10 mM phosphate buffer (pH 7.0) is added to 2.0 mL of a 30 mM L-glutamine solution and reacted at 30°C for 30 minutes, the generated glutamic acid is quantified by a known method (for example, using a glutamic acid measurement kit (manufactured by Seikagaku Corporation)), and the amount of enzyme that generates 1 $\mu$mol of glutamic acid per minute can be defined as 1 unit (1 U=1000 mU). For example, for amylase activity, using a known method with soluble starch as a substrate, the activity that decomposes 1 ml of a 1% starch solution at 40°C and pH 5.0 for 30 minutes until the iodine color reaction gives a transmittance of 66% at a wavelength of 670 nm and a light path length of 10 mm can be measured as 1 unit (1 U=1000 mU) (refer to https://www.jfrl.or.jp/storage/file/222.pdf or https://web.archive.org/web/20220918072602/https://www.jfrl.or.jp/storage/file/222.pdf, etc.).

<Sodium>

The sodium content in the food composition of the present invention is measured using an atomic absorption method, in accordance with "Sodium" in the Standard Tables of Food Composition in Japan - 2015 (Seventh Revised Edition). In the present invention, a value obtained by multiplying the sodium content measured by the said method by 2.54 is defined as the salt equivalent amount.

It is preferable that the salt equivalent amount per 100 g of water of the food composition of the present invention is a predetermined value or more. This makes it possible to suppress the growth of spoilage microorganisms due to a synergistic effect with undissociated acetic acid and/or ethanol. Furthermore, in an embodiment where the food composition of the present invention is used for a processed grain product, when sodium, an enzyme, and undissociated acetic acid and/or ethanol act simultaneously, a processed grain product with good looseness can be obtained. The principle for this is unknown, but in addition to a synergistic effect of actions such as the starch swelling inhibition action by sodium and the action obtained by the enzyme, it is possible that undissociated acetic acid and/or ethanol promote the outflow of components that serve as substrates for various enzymes while suppressing the growth of spoilage microorganisms in the food raw materials. The salt equivalent amount per 100 g of water of the food composition of the present invention may be usually 3.0 g or more, preferably 5.0 g or more, more preferably 7.0 g or more, further preferably 10 g or more, even more preferably 12 g or more, particularly preferably 14 g or more, especially preferably 16 g or more, 18 g or more, 20 g or more, 22 g or more, 24 g or more, 26 g or more, 28 g or more, 30 g or more, 32 g or more, 34 g or more, 35 g or more, or 36 g or more. Its upper limit value is not particularly limited, but may be, for example, 54 g or less, 50 g or less, 45 g or less, 40 g or less, or 38 g or less. The range of the salt equivalent amount per 100 g of water of the food composition of the present invention may be, for example, 3.0 to 54 g, 5.0 to 54 g, 7.0 to 50 g, 8.0 to 45 g, 9.0 to 40 g, 10 to 40 g, 11 to 40 g, 12 to 40 g, 13 to 40 g, 14 to 40 g, 16 to 40 g, 20 to 40 g, 22 to 40 g, 24 to 40 g, 27 to 40 g, 30 to 40 g, 32 to 40 g, 33 to 50 g, 34 to 50 g, or 35 to 50 g. Numerical ranges specified by combining the above upper limit values or lower limit values are also disclosed in the present invention. Note that, as a source of sodium, by using sodium chloride and other sodium salts (for example, sodium acetate) in combination, it is possible to include a salt equivalent amount that exceeds the saturation solubility of sodium chloride per 100 g of water (about 35 g salt equivalent).

Furthermore, for the same reason that it is preferable for the salt equivalent amount per 100 g of water of the food composition of the present invention to be within a predetermined range, it is preferable for the salt equivalent amount of the food composition to be within a predetermined range. The upper limit of the salt equivalent amount in the food composition of the present invention is not limited, but may be, for example, 70.0 w/w% or less, 60.0 w/w% or less, 50.0 w/w% or less, 40.0 w/w% or less, 35.0 w/w% or less, 30.0 w/w% or less, 26.0 w/w% or less, 25.0 w/w% or less, 24.0 w/w% or less, 23.0 w/w% or less, 22.0 w/w% or less, 21.0 w/w% or less, 20.0 w/w% or less, 19.8 w/w% or less, 19.0 w/w% or less, 18.0 w/w% or less, 17.5 w/w% or less, 17.0 w/w% or less, 16.0 w/w% or less, or 15.8 w/w% or less. On the other hand, its lower limit is not limited, but may be, for example, 1.0 w/w% or more, 2.0 w/w% or more, 2.5 w/w% or more, 3.0 w/w% or more, 3.5 w/w% or more, 4.0 w/w% or more, 4.5 w/w% or more, 5.0 w/w% or more, 6.0 w/w% or more, 7.5 w/w% or more, 8.0 w/w% or more, 8.3 w/w% or more, 8.7 w/w% or more, 9.0 w/w% or more, 9.5 w/w% or more, 9.6 w/w% or more, 9.8 w/w% or more, 9.9 w/w% or more, 10.2 w/w% or more, 10.5 w/w% or more, 10.8 w/w% or more, 11.1 w/w% or more, 11.3 w/w% or more, 11.5 w/w% or more, 11.6 w/w% or more, 11.7 w/w% or more, 11.8 w/w% or more, 11.9 w/w% or more, 12.5 w/w% or more, 13.0 w/w% or more, 13.5 w/w% or more, 14.0 w/w% or more, 14.5 w/w% or more, 15.0 w/w% or more, 15.5 w/w% or more, 16.0 w/w% or more, 16.5 w/w% or more, or 17.0 w/w% or more. Furthermore, the salt equivalent amount in the food composition of the invention may be preferably 1.0 w/w% to 70.0 w/w%, may be 2.0 w/w% to 60.0 w/w%, may be 2.5 w/w% to 50.0 w/w%, may be 3.0 w/w% to 40.0 w/w%, may be 3.5 w/w% to 35.0 w/w%, may be 4.0 w/w% to 30.0 w/w%, may be 4.5 w/w% to 26.0 w/w%, may be 5.0 to 25.0 w/w%, more preferably 6.0 to 24.0 w/w%, further preferably 7.0 to 23.0 w/w%, even more preferably 8.0 to 22.0 w/w%, particularly preferably 10.0 to 21.0 w/w%, especially preferably 12.0 to 20.5 w/w%, 12.1 to 20.5 w/w%, or 12.2 to 20.5 w/w%. Numerical ranges specified by combining the above upper limit values or lower limit values are also disclosed in the present invention.

<Undissociated Acetic Acid Content>

Acetic acid molecules coexist in an aqueous solution in dissociated and undissociated forms in an equilibrium state as shown in formula 2.

$$CH_3COOH \Leftrightarrow H^+ + CH_3COO_- \qquad \text{(Formula 2)}$$

Here, if the dissociated acetic acid content is [A-], the proton content is [H+], and the undissociated acetic acid content is [AH], the undissociated acetic acid content [AH] can be determined by the pH and the total content of acetic acid (i.e., [A-]+[AH]) according to the following calculation formula (Formula 3). The total content of acetic acid (total acetic acid content) in the present invention is measured by a high-performance liquid chromatography method in accordance with the measurement method for "Organic Acids" in the Standard Tables of Food Composition in Japan - 2015 (Seventh Revised Edition). That is, particularly when a large amount of acetate such as sodium acetate is contained, a larger value may be obtained than the "titratable acidity" determined by the neutralization titration method.

$$pH = 4.76 + \log_{10} [A-]/[AH] \quad \text{(Formula 3)}$$

It is preferable that the food composition of the present invention contains a predetermined amount of undissociated acetic acid. This enhances the growth-suppressing effect on salt-tolerant spore-forming bacteria and heat-resistant lactic acid bacteria, and a synergistic effect with the enzyme can be expected when the food composition is added to raw materials. Specifically, the upper limit value of the undissociated acetic acid content per 100 g of water of the food composition of the present invention may be, for example, 4.000 g or less, 3.900 g or less, 3.600 g or less, 3.300 g or less, 2.600 g or less, 2.400 g or less, 2.200 g or less, 1.900 g or less, 1.800 g or less, 1.700 g or less, 1.650 g or less, 1.600 g or less, 1.550 g or less, or 1.500 g or less. Its lower limit is not limited, but may be 0.03 g or more, 0.035 g or more, 0.04 g or more, 0.045 g or more, 0.05 g or more, 0.07 g or more, 0.15 g or more, 0.20 g or more, 0.25 g or more, 0.35 g or more, 0.40 g or more, 0.45 g or more, 0.55 g or more, 0.60 g or more, 0.65 g or more, 0.75 g or more, 0.8 g or more, 0.85 g or more, 0.90 g or more, 0.95 g or more, 1.00 g or more, 1.05 g or more, 1.10 g or more, 1.15 g or more, 1.20 g or more, or 1.25 g or more. Furthermore, the undissociated acetic acid content per 100 g of water of the food composition of the present invention may be preferably 0.03 to 4.000 g, more preferably 0.05 to 3.000 g, further preferably 0.1 to 2.700 g, even more preferably 0.15 to 2.400 g, particularly preferably 0.3 to 2.000 g, and especially preferably 0.4 to 1.800 g. Numerical ranges specified by combining the above upper limit values or lower limit values are also disclosed in the present invention.

For the same reason that it is preferable for the undissociated acetic acid content per 100 g of water of the food composition of the present invention to be a predetermined amount, it is preferable that the undissociated acetic acid content in the food composition of the present invention is a predetermined amount. The upper limit of the undissociated acetic acid content in the food composition of the present invention is not limited, but may be, for example, 1.900 w/w% or less, 1.800 w/w% or less, 1.700 w/w% or less, 1.650 w/w% or less, 1.600 w/w% or less, 1.580 w/w% or less, 1.510 w/w% or less, 1.450 w/w% or less, 1.380 w/w% or less, 1.280 w/w% or less, 1.200 w/w% or less, 1.150 w/w% or less, 1.100 w/w% or less, 1.050 w/w% or less, 1.005 w/w% or less, 0.980 w/w% or less, 0.940 w/w% or less, or 0.920 w/w% or less. Its lower limit is not limited, but may be 0.015 w/w% or more, 0.02 w/w% or more, 0.025 w/w% or more, 0.03 w/w% or more, 0.035 w/w% or more, 0.04 w/w% or more, 0.045 w/w% or more, 0.048 w/w% or more, 0.05 w/w% or more, 0.053 w/w% or more, 0.055 w/w% or more, 0.100 w/w% or more, 0.150 w/w% or more, 0.180 w/w% or more, 0.200 w/w% or more, 0.210 w/w% or more, 0.230 w/w% or more, 0.240 w/w% or more, 0.270 w/w% or more, 0.300 w/w% or more, 0.350 w/w% or more, 0.400 w/w% or more, 0.450 w/w% or more, 0.500 w/w% or more, 0.550 w/w% or more, or 0.600 w/w% or more. Furthermore, the undissociated acetic acid content in the food composition of the present invention may be, for example, 0.01 to 3.000 w/w%, more preferably 0.03 to 2.000 w/w%, more preferably 0.05 to 1.800 w/w%, further preferably 0.07 to 1.600 w/w%, even more preferably 0.100 to 1.550 w/w%, particularly preferably 0.15 to 1.450 w/w%, and especially preferably 0.200 to 1.300 w/w%. Numerical ranges specified by combining the above upper limit values or lower limit values are also disclosed in the present invention.

<Total Acetic Acid Content>

The food composition of the present invention may have a total acetic acid content per 100 g of water in a predetermined range. Specifically, the upper limit of the total acetic acid content per 100 g of water of the food composition of the present invention is not limited, but may be, for example, 25.0 g or less, 23.5 g or less, 22.0 g or less, 21.5 g or less, 20.0 g or less, 19.0 g or less, 18.5 g or less, 17.7 g or less, 17.5 g or less, 16.5 g or less, 16.0 g or less, 15.0 g or less, 14.0 g or less, 13.5 g or less, or 13.0 g or less. On the other hand, its lower limit is not limited, but may be, for example, 0.4 g or more, 0.6 g or more, 0.8 g or more, 1.0 g or more, 1.2 g or more, 1.4 g or more, 1.6 g or more, 1.8 g or more, 2.1 g or more, 2.2 g or more, 2.3 g or more, 2.4 g or more, 2.7 g or more, 2.9 g or more, 3.1 g or more, 3.2 g or more, 3.3 g or more, 3.5 g or more, 3.7 g or more, 3.9 g or more, 4.1 g or more, 4.3 g or more, 4.5 g or more, 4.7 g or more, 4.9 g or more, 5.5 g or more, 5.9 g or more, 6.5 g or more, 7.5 g or more, 9.0 g or more, or 10.0 g or more. Furthermore, the range of the total acetic acid content per 100 g of water of the food composition of the present invention may be, for example, 0.4 to 30.0 g, more preferably 1.2 to 25.0 g, further preferably 1.4 to 20.0 g, even more preferably 2.3 to 18.0 g, particularly preferably 2.5 to 17.5 g, and especially preferably 3.0 to 16.5 g. Numerical ranges specified by combining the above upper limit values or lower limit values are also disclosed in the present invention.

The food composition of the present invention may have a total acetic acid content within a predetermined range. The upper limit of the total acetic acid content in the food composition of the present invention is not limited, but may be, for example, 12.0 w/w% or less, 11.5 w/w% or less, 11.0 w/w% or less, 10.5 w/w% or less, 9.3 w/w% or less, 9.1 w/w% or less, 8.9 w/w% or less, 8.7 w/w% or less, 8.3 w/w% or less, 7.7 w/w% or less, 7.3 w/w% or less, 7.2 w/w% or less, 6.9 w/w% or less, 6.8 w/w% or less, or 6.7 w/w% or less. On the other hand, its lower limit is not limited, but may be, for example, 2.1 w/w% or more, 2.2 w/w% or more, 2.3 w/w% or more, 2.4 w/w% or more, 2.7 w/w% or more, 2.9 w/w% or more, 3.1 w/w% or more, 3.2 w/w% or more, 3.3 w/w% or more, 3.5 w/w% or more, 3.7 w/w% or more, 3.9 w/w% or more, 4.1 w/w% or more, 4.3 w/w% or more, 4.5 w/w% or more, 4.7 w/w% or more, or 4.9 w/w% or more. Furthermore, the total acetic acid content of the food composition of the present invention may be, for example, 2.0 to 12.0 w/w%, more preferably 2.1 to 11.0 w/w%, 2.2 to 10.0 w/w%, or 2.3 to 9.5 w/w%, further preferably 2.4 to 9.0 w/w%, even more preferably 2.6 to 8.8 w/w%, particularly preferably 2.8 to 8.5 w/w%, especially preferably 3.0 to 8.0 w/w%, 4.0 to 7.5 w/w%, or 4.3 to 7.0 w/w%. Numerical ranges specified by combining the above upper limit values or lower limit values are also disclosed in the present invention.

It is preferable that the food composition of the present invention satisfies the following formula when the salt equivalent amount per 100 g of water of the food composition is X g and the undissociated acetic acid content per 100 g of water of the food composition is Y g.

$$\text{Formula 1: } 4Y+X \geq 10 \text{ (provided that } X \geq 3 \text{ and } 4 \geq Y > 0.03)$$

By satisfying the above relational expression, it is possible to suppress the growth of microorganisms that cause food deterioration in the food composition, particularly the aforementioned spoilage microorganisms (especially lactic acid bacteria, particularly the heat-resistant lactic acid bacterium "Lactobacillus fructivorans"). When the food composition of the present invention is used, the texture of food and drink products can be improved by a synergistic effect with the enzyme. The principle for this is unknown, but it is possible that sodium and undissociated acetic acid act on the cell membrane or cell wall, thereby suppressing the growth of microorganisms, and when the food composition of the present invention is added to raw materials, it promotes the outflow of components that serve as substrates for the enzyme from the raw materials. The value of "4Y+X" in Formula 1 may be 10 or more, 11 or more, 12 or more, 13 or more, 14 or more, 15 or more, 16 or more, 17 or more, 18 or more, 19 or more, 20 or more, 21 or more, 22 or more, 24 or more, 26 or more, 28 or more, 30 or more, 31 or more, 32 or more, 33 or more, 34 or more, or 35 or more. The upper limit value of "4Y+X" in Formula 1 is not particularly limited, but may be, for example, 56 or less, 54 or less, 52 or less, 50 or less, 48 or less, 46 or less, 44 or less, 42 or less, 41 or less, 40 or less, 39 or less, 38 or less, 37 or less, 36 or less, 35 or less, 34 or less, 33 or less, 32 or less, 30 or less, 28 or less, 26 or less, 25 or less, 24 or less, 23 or less, or 22 or less. Furthermore, from the viewpoint of being able to exhibit a microorganism growth-suppressing effect even when stored for a longer period of time, the value of "4Y+X" in Formula 1 may be preferably 10 to 56, more preferably 12 to 50, further preferably 14 to 45, even more preferably 15 to 44, particularly preferably 20 to 43, and especially preferably 25 to 42. Numerical ranges specified by combining the above upper limit values or lower limit values are also disclosed in the present invention. Note that the preferable value of X (salt equivalent amount per 100 g of water of the food composition) in this relational expression can adopt the same upper limit value, lower limit value, or numerical range as the provision concerning the salt equivalent amount per 100 g of water of the food composition described above. The preferable value of Y (undissociated acetic acid content per 100 g of water of the food composition) can adopt the same upper limit value, lower limit value, or numerical range as the provision concerning the undissociated acetic acid content per 100 g of water of the food composition described above.

Since Formula 1 holds even in a composition with a sufficiently high moisture content on a wet mass basis, the present invention also encompasses an embodiment in which Formula 1 is satisfied when the salt equivalent amount of the food composition is $X_2$ w/w% and the undissociated acetic acid content of the food composition is $Y_2$ w/w% (in this case, $X_2$ shall be read as X, and $Y_2$ shall be read as Y). In this embodiment, the preferable numerical range, upper limit value, or lower limit value of the value of "4Y+X" in Formula 1 may adopt the values described in the embodiment where "the salt equivalent amount per 100 g of water of the food composition is X g, and the undissociated acetic acid content per 100 g of water of the food composition is Y g." When the salt equivalent amount of the food composition is $X_1$ w/w% and the undissociated acetic acid content of the food composition is $Y_2$ w/w%, the preferable value of $X_2$ (salt equivalent amount of the food composition) in this relational expression can adopt the same upper limit value, lower limit value, or numerical range as the provision concerning the salt equivalent amount of the food composition described above. The preferable value of $Y_2$ (undissociated acetic acid content of the food composition) can adopt the same upper limit value, lower limit value, or numerical range as the provision concerning the undissociated acetic acid content of the food composition described above.

In the food composition of the present invention, the salt equivalent amount per 100 g of water of the food composition may be 3.0 g or more, and the ethanol content per 100 g of water of the food composition may be 8.0 g or more.

The ethanol content in the food composition of the present invention is calculated based on the gas chromatography method described in the "Alcohol" section of the Analysis Manual of the Standard Tables of Food Composition in Japan - 2015 (Seventh Revised Edition), by determining the ratio of the peak area of ethanol in a sample with a known ethanol content to the peak area of ethanol in a sample with an unknown ethanol content. From the viewpoint of exerting the effects of the present invention, the salt equivalent amount per 100 g of water of the food composition of the present invention may be 3.0 g or more, and the ethanol content per 100 g of water of the food composition may be 8.0 g or more. The principle for this is unknown, but in the food composition, it is possible that ethanol, together with sodium, suppresses the growth of the aforementioned spoilage microorganisms, and when the food composition of the present invention is added to raw materials, it promotes the outflow of components that serve as substrates for the enzyme from the raw materials. The ethanol content per 100 g of water of the food composition of the present invention may be preferably 8.0 g or more, 8.2 g or more, 8.5 g or more, 8.7 g or more, 9.0 g or more, 9.3 g or more, 9.5 g or more, 10.0 g or more, 10.5 g or more, 11.0 g or more, 12.0 g or more, 13.0 g or more, 14.0 g or more, or 15.0 g or more. Its upper limit value is not particularly limited, but may be, for example, 20.0 g or less, 19.5 g or less, 18.5 g or less, 18.0 g or less, 17.5 g or less, 16.5 g or less, or 15.5 g or less. Furthermore, the range of the ethanol content per 100 g of water of the food composition of the present invention may be, for example, 8.0 to 20.0 g, 9.0 to 19.0 g, 10.0 to 18.0 g, or 11.0 to 18.0 g. Numerical ranges specified by combining the above upper limit values or lower limit values are also disclosed in the present invention.

For the same reason that it is preferable for the salt equivalent amount per 100 g of water of the food composition to be 3.0 g or more and the ethanol content per 100 g of water of the food composition to be 8.0 g or more, it is preferable for the ethanol content of the food composition of the present invention to be a predetermined value or more. The ethanol content in the food composition of the present invention may be preferably 5.0 w/w% or more, 5.2 w/w% or more, 5.5 w/w% or more, 5.7 w/w% or more, 6.0 w/w% or more, 6.3 w/w% or more, 6.5 w/w% or more, 7.0 w/w% or more, 7.1 w/w% or more, 7.3 w/w% or more, 7.5 w/w% or more, 7.8 w/w% or more, 8.0 w/w% or more, or 9.0 w/w% or more. Its upper limit value may be, for example, 20.0 w/w% or less, 18.0 w/w% or less, 17.5 w/w% or less, w/w% or less, 16.5 w/w% or less, 15.5 w/w% or less, 14.5 w/w% or less, or 13.0 w/w% or less. Furthermore, the ethanol content in the food composition of the present invention may be 4.5 to 19.0 w/w%, 5.3 to 17.0 w/w%, 6.8 to 15.0 w/w%, or 7.5 to 14.0 w/w%. Numerical ranges specified by combining the above upper limit values or lower limit values are also disclosed in the present invention.

In an embodiment where the ethanol content per 100 g of water of the food composition of the present invention is 8.0 g or more, the salt equivalent amount per 100 g of water of the food composition of the present invention can adopt the values described above.

From the viewpoint that the effects of the present invention are remarkably exerted, it is preferable that the "titratable acidity" determined by the neutralization titration method is within a predetermined range in the food composition of the present invention. The titratable acidity of the food composition of the present invention can be calculated by the following Measurement Method A.

<Measurement Method A>

First, 10 g of the food composition of the present invention is accurately taken, diluted 10-fold with ion-exchanged water, 0.08 ml of a 3.1% phenolphthalein solution is added as an indicator to the diluted solution (100 g), neutralization titration is performed with a 0.1 mol/L sodium hydroxide solution of a known titration factor, and the acidity of the food composition of the present invention is determined by the following formula.

Titratable acidity of the food composition of the present invention

$$(\text{w/w}\%)=\{(60.05\times0.1\times F\times V)\times100\}/\{\text{Sampled amount (10 g)}\times1000\}$$

60.05: Molecular weight of acetic acid
0.1: Molar concentration of sodium hydroxide solution (mol/L)
F: Titration factor of 0.1 mol/L sodium hydroxide solution
V: Titration volume of 0.1 mol/L sodium hydroxide solution (mL)

The titratable acidity of the food composition of the present invention may be preferably 3.0 w/w% or less, more preferably 2.7 w/w% or less, further preferably 2.5 w/w% or less, even more preferably 2.0 w/w% or less, particularly preferably 1.5 w/w% or less, especially preferably 1.0 w/w% or less, 0.9 w/w% or less, 0.8 w/w% or less, 0.75 w/w% or less, or 0.7 w/w% or less. Its lower limit value is not particularly limited, but can be, for example, 0.2 w/w% or more, 0.25 w/w% or more, 0.3 w/w% or more, 0.35 w/w% or more, 0.4 w/w% or more, 0.42 w/w% or more, or 0.45 w/w% or more. Furthermore, it is preferable that the acidity of the food composition of the present invention is within a predetermined range, and may be, for example, 0.2 to 2.9 w/w%, 0.2 to 2.6 w/w%, 0.2 to 2.4 w/w%, 0.25 to 1.9 w/w%, 0.25 to 1.8 w/w%, 0.3 to 1.5 w/w%, or 0.3 to 1.0 w/w%. Numerical ranges specified by combining the above upper limit values or lower limit values are also disclosed in the present invention.

In the food composition of the present invention, a part of the acetic acid may be contained in the state of an acetate salt. Specifically, the ratio of the total acetic acid content measured by the high-performance liquid chromatography method of the present invention to the titratable acidity determined by neutralization titration (total acetic acid content/titratable acidity determined by neutralization titration) may be 1.1 or more, 1.2 or more, 1.3 or more, 1.4 or more, 1.5 or more, 1.6 or more, 1.7 or more, 1.8 or more, 1.9 or more, 2.0 or more, 2.5 or more, 3.0 or more, 3.5 or more, 4.0 or more, 4.5 or more, 5.0 or more, 5.5 or more, 6.0 or more, 6.5 or more, 7.0 or more, 7.5 or more, 8.0 or more, 8.5 or more, 9.0 or more, 9.5 or more, or 10.0 or more. Its upper limit value may be, for example, 20.0 or less, 18.0 or less, 16.0 or less, 14.0 or less, 12.0 or less, or 11.0 or less. Furthermore, its range may be, for example, 2.0 to 18.0. Numerical ranges specified by combining the above upper limit values or lower limit values are also disclosed in the present invention.

One of the preferable features of the food composition of the present invention is that it contains both acetic acid and sodium acetate. It is thought that by using a food composition containing predetermined amounts of both acetic acid and sodium acetate, the acetic acid in the food composition is likely to maintain its undissociated state, and the effects of the present invention are likely to be exerted. The acetic acid in the food composition of the present invention may be one contained in foodstuffs, may be one extracted from foodstuffs, may be one added as a compound, or may be a combination thereof. However, it is preferable that the food composition of the present invention contains edible vinegar, more preferably it contains edible vinegar and sodium acetate, and further preferably the edible vinegar is brewed vinegar as defined by the JAS Act enforced on October 1, 2022. This is because the aroma of the food obtained using the food composition of the present invention becomes better. The ratio of acetic acid derived from sodium acetate to the total content of acetic acid in the food composition (ratio of acetic acid derived from sodium acetate) may be usually 10 mass% or more, 20 mass% or more, 30 mass% or more, among which 40 mass% or more, or 50 mass% or more, 55 mass% or more, or 60 mass% or more, 65 mass% or more, 70 mass% or more, 75 mass% or more, 80 mass% or more, or 90 mass% or more. Its upper limit is not particularly limited, and may be usually less than 100 mass%, or less than 98 mass%. Its range may be, for example, 10 mass% or more and less than 98 mass%. Numerical ranges specified by combining the above upper limit values or lower limit values are also disclosed in the present invention.

It is preferable that the food composition of the present invention has a predetermined content of acetic acid derived from sodium acetate. Its upper limit is not limited, but may be, for example, 12.0 w/w% or less, 11.5 w/w% or less, 11.0 w/w% or less, 10.5 w/w% or less, 9.3 w/w% or less, 9.1 w/w% or less, 8.9 w/w% or less, 8.7 w/w% or less, 8.3 w/w% or less, 7.7 w/w% or less, 7.3 w/w% or less, 7.2 w/w% or less, 6.9 w/w% or less, 6.8 w/w% or less, or 6.7 w/w% or less. On the other hand, its lower limit is not limited, but may be, for example, 2.1 w/w% or more, 2.2 w/w% or more, 2.3 w/w% or more, 2.4 w/w% or more, 2.7 w/w% or more, 2.9 w/w% or more, 3.1 w/w% or more, 3.2 w/w% or more, 3.3 w/w% or more, 3.5 w/w% or more, 3.7 w/w% or more, 3.9 w/w% or more, 4.1 w/w% or more, 4.3 w/w% or more, 4.5 w/w% or more, 4.7 w/w% or more, or 4.9 w/w% or more. Furthermore, the content of acetic acid derived from sodium acetate in the food composition of the present invention may be, for example, 1.9 to 11.9 w/w%, more preferably 2.1 to 11.0 w/w%, more preferably 2.2 to 10.0 w/w%, more preferably 2.3 to 9.5 w/w%, further preferably 2.4 to 9.0 w/w%, even more preferably 2.6 to 8.8 w/w%, particularly preferably 2.8 to 8.5 w/w%, especially preferably 3.0 to 8.0 w/w%, 4.0 to 7.5 w/w%, or 4.3 to 7.0 w/w%. Numerical ranges specified by combining the above upper limit values or lower limit values are also disclosed in the present invention.

The ratio of edible vinegar-derived acetic acid to the total acetic acid content of the food composition of the present invention may be usually less than 50 mass%, among which less than 40 mass%, or less than 30 mass%, or less than 20 mass%, or less than 15 mass%, or less than 10 mass%. Its lower limit is not particularly limited, and is usually more than 0 mass%, or more than 2 mass%, or more than 5 mass%. Numerical ranges specified by combining the above upper limit values or lower limit values are also disclosed in the present invention.

When the food composition of the present invention contains edible vinegar, its content is preferably within a predetermined range from the viewpoint of improving the aroma of the food obtained when using the food composition while ensuring the stability of quality. Its upper limit value can be, for example, 29 w/w% or less, 27 w/w% or less, 25 w/w% or less, 23 w/w% or less, 22 w/w% or less, 21 w/w% or less, 19 w/w% or less, 18.5 w/w% or less, 18 w/w% or less, 17.8 w/w% or less, 17.3 w/w% or less, 16.7 w/w% or less, 16.0 w/w% or less, 15.0 w/w% or less, 14.0 w/w% or less, 12.5 w/w% or less, 11.5 w/w% or less, 11.0 w/w% or less, 10.5 w/w% or less, 10.0 w/w% or less, 9.5 w/w% or less, 9.0 w/w% or less, 8.5 w/w% or less, 7.5 w/w% or less, 7.0 w/w% or less, 6.5 w/w% or less, 6.0 w/w% or less, 5.5 w/w% or less, 5.0 w/w% or less, 4.5 w/w% or less, or 4.0 w/w% or less. The lower limit value of the content of edible vinegar in the food composition of the present invention can be, for example, 0.1 w/w% or more, 0.2 w/w% or more, 0.3 w/w% or more, 0.5 w/w% or more, 0.7 w/w% or more, 0.9 w/w% or more, 1.1 w/w% or more, 1.3 w/w% or more, 1.5 w/w% or more, 1.7 w/w% or more, 1.8 w/w% or more, 2.0 w/w% or more, 2.2 w/w% or more, 2.4 w/w% or more, or 2.6 w/w% or more. Furthermore, the range of the content of edible vinegar in the food composition of the present invention may be, for example, 0.1 to 30 w/w%, 0.1 to 28 w/w%, 0.1 to 25 w/w%, or 0.1 to 20 w/w%, preferably 0.1 to 17.5 w/w%, more preferably 0.1 to 16.5 w/w%, further preferably 0.1 to 15.5 w/w%, even more preferably 0.5 to 14.5 w/w%, even more preferably 0.7 to 13.0 w/w%, particularly preferably 0.9 to 12.0 w/w%, and especially preferably 1.0 to 8.0 w/w%. Numerical ranges specified by combining the above upper limit values or lower limit values are also disclosed in the present invention. The food composition of the present invention may contain brewed vinegar within the above numerical ranges as the edible vinegar.

It is preferable that the food composition of the present invention contains a sodium salt. Examples of the "sodium salt" include sodium chloride, sodium acetate, sodium citrate, disodium citrate, trisodium citrate, sodium gluconate, monosodium succinate, disodium succinate, sodium DL-tartrate, sodium L-tartrate, sodium lactate, monosodium fumarate, sodium DL-malate, and the like. These sodium salts may be used singly, or two or more types may be arbitrarily combined. The food composition of the present invention may preferably contain at least one or more selected from the group consisting of sodium chloride, sodium acetate, sodium citrate, disodium citrate, trisodium citrate, and sodium lactate, and particularly preferably may contain sodium chloride and sodium acetate. The content of sodium citrate in the food composition of the present invention may be preferably less than 8.5 w/w%, more preferably less than 8.0 w/w%, less than 7.5 w/w%, further preferably less than 7.0 w/w%, even more preferably less than 6.5 w/w%, less than 6.0 w/w%, or less than 5.5 w/w%, and may be 0 w/w%. The food composition of the present invention may also contain sodium citrate in an amount less than the upper limit values described above.

When the food composition of the present invention contains sodium acetate, the sodium acetate content in the food composition can be preferably 1.0 w/w% or more, more preferably 1.5 w/w% or more, further preferably 2.0 w/w% or more, even more preferably 2.5 w/w% or more, particularly preferably 3.0 w/w% or more, especially preferably 3.5 w/w% or more, 4.0 w/w% or more, 4.5 w/w% or more, 5.0 w/w% or more, 5.5 w/w% or more, 6.0 w/w% or more, 6.5 w/w% or more, 7.0 w/w% or more, or 7.5 w/w% or more. Its upper limit value can be, for example, 25.0 w/w% or less, 22.0 w/w% or less, 20.0 w/w% or less, 18.0 w/w% or less, 16.0 w/w% or less, 15.0 w/w% or less, 14.0 w/w% or less, 12.0 w/w% or less, 10.0 w/w% or less, 9.0 w/w% or less, or 8.0 w/w% or less. Its range can be preferably 1.0 to 20.0 w/w%, more preferably 2.0 to 18.0 w/w%, further preferably 3.0 to 16.0 w/w%, even more preferably 3.5 to 14.0 w/w%, particularly preferably 4.0 to 10.0 w/w%, and especially preferably 4.5 to 8.0 w/w%. Numerical ranges specified by combining the above upper limit values or lower limit values are also disclosed in the present invention.

When the food composition of the present invention contains sodium chloride, the upper limit of the sodium chloride content in the food composition is not limited, but may be, for example, 22.0 w/w% or less, 21.0 w/w% or less, 20.5 w/w% or less, 19.5 w/w% or less, 18.5 w/w% or less, 18.0 w/w% or less, 17.5 w/w% or less, 17.0 w/w% or less, 16.7 w/w% or less, 16.2 w/w% or less, 15.5 w/w% or less, 15.0 w/w% or less, 14.5 w/w% or less, or 14.0 w/w% or less. On the other hand, its lower limit is not limited, but may be, for example, 4.3 w/w% or more, 4.7 w/w% or more, 4.9 w/w% or more, 5.5 w/w% or more, 6.0 w/w% or more, 6.5 w/w% or more, 7.0 w/w% or more, 7.5 w/w% or more, 8.0 w/w% or more, 8.3 w/w% or more, 8.7 w/w% or more, 9.0 w/w% or more, 9.5 w/w% or more, 9.6 w/w% or more, 9.8 w/w% or more, 9.9 w/w% or more, 10.2 w/w% or more, 10.5 w/w% or more, 10.8 w/w% or more, 11.1 w/w% or more, 11.3 w/w% or more, or 11.5 w/w% or more. Furthermore, the sodium chloride content in the food composition of the present invention may be preferably 4.0 to 23.0 w/w%, more preferably 5.0 to 22.0 w/w%, further preferably 6.0 to 20.0 w/w%, even more preferably 7.0 to 19.0 w/w%, particularly preferably 8.0 to 18.0 w/w%, especially preferably 10.0 to 17.0 w/w%, 10.5 to 16.5 w/w%, or 11.0 to 16.0 w/w%. Numerical ranges specified by combining the above upper limit values or lower limit values are also disclosed in the present invention.

<Chloride Ion>

The chloride ion content in the food composition of the present invention is measured by the Mohr method.

It is preferable that the ratio of the chloride ion content (w/w%) to the sodium content (w/w%) in the food composition of the present invention is within a predetermined range. This further enhances the effects of the present invention. The mechanism for this is unknown, but it is presumed that the growth of spoilage microorganisms is suppressed by the synergistic effect of sodium ions and chloride ions, and even when the food composition of the present invention is added to food raw materials, the change in pH becomes smaller, which is one of the reasons why the effects of the present invention are further exerted. It is preferable that the ratio of the chloride ion content (w/w%) to the sodium content (w/w%) in the food composition of the present invention is in an embodiment where the sodium content is relatively large compared to this ratio in sodium chloride (1.54) (since the molar mass of chloride ion is 35.45 g/mol and the molar mass of sodium ion is 23 g/mol , the ratio of the chloride ion content (w/w%) to the sodium content (w/w%) in sodium chloride is calculated as 1.54). Note that, as a source of sodium, by using sodium chloride and other sodium salts (for example, sodium acetate) in combination, the balance of chloride ions and sodium ions can be adjusted to make the composition have a ratio lower than that in sodium chloride. Specifically, its upper limit value is not particularly limited, but may be, for example, 1.46 or less, 1.45 or less, 1.44 or less, 1.43 or less, 1.40 or less, 1.39 or less, 1.38 or less, 1.37 or less, 1.35 or less, 1.33 or less, 1.3 or less, 1.2 or less, 1.1 or less, 1.05 or less, 1.0 or less, 0.97 or less, 0.95 or less, 0.90 or less, 0.85 or less, 0.8 or less, 0.7 or less, 0.6 or less, or 0.5 or less. Furthermore, its lower limit value is not particularly limited, but may be, for example, 0.10 or more, 0.12 or more, 0.14 or more, 0.15 or more, 0.18 or more, 0.20 or more, 0.31 or more, 0.60 or more, 0.62 or more, 0.67 or more, 0.75 or more, 0.77 or more, 0.81 or more, 0.84 or more, 0.87 or more, 0.91 or more, 0.93 or more, 0.95 or more, 0.97 or more, 0.99 or more, 1.03 or more, 1.05 or more, 1.07 or more, 1.09 or more, 1.10 or more, 1.11 or more, or 1.12 or more. Furthermore, the range of the ratio of the chloride ion content (w/w%) to the sodium content (w/w%) in the food composition of the present invention may be preferably 0.3 to 1.5, more preferably 0.4 to 1.47, further preferably 0.5 to 1.45, even more preferably 0.6 to 1.45, particularly preferably 0.6 to 1.4, and especially preferably 0.6 to 1.3. Numerical ranges specified by combining the above upper limit values or lower limit values are also disclosed in the present invention.

It is preferable that the chloride ion content per 100 g of water in the food composition of the present invention is a predetermined amount. Its upper limit value may be, for example, 28 g or less, 27 g or less, 26 g or less, 24.5 g or less, 23.5 g or less, 23 g or less, 21.5 g or less, 20.5 g or less, 19.5 g or less, 19 g or less, 18.5 g or less, 18 g or less, 17.5 g or less, 17 g or less, 16.5 g or less, 15.5 g or less, 14.5 g or less, 13.5 g or less, 12.5 g or less, 12.0 g or less, 11.5 g or less, 11.0 g or less, or 10.5 g or less. The lower limit value of the chloride ion content in the food composition of the present invention may be, for example, 1.0 g or more, 2.0 g or more, 3.0 g or more, 4.0 g or more, 4.5 g or more, 5.0 g or more, 5.5 g or more, 6 g or more, 8 g or more, 8.5 g or more, 9 g or more, 10.5 g or more, 11 g or more, 11.5 g or more, 12.5 g or more, 13 g or more, 13.5 g or more, or 14.5 g or more. Furthermore, the range of the chloride ion content per 100 g of water in the food composition of the present invention may be preferably 2 to 30 g, more preferably 4 to 25 g, further preferably 7 to 24 g, even more preferably 8 to 22 g, particularly preferably 9 to 21 g, and especially preferably 10 to 20 g. Numerical ranges specified by combining the above upper limit values or lower limit values are also disclosed in the present invention.

It is preferable that the chloride ion content (w/w%) in the food composition of the present invention is a predetermined amount. Its upper limit value may be, for example, 15.3 w/w% or less, 14.5 w/w% or less, 13.5 w/w% or less, 12.7 w/w% or less, 12.5 w/w% or less, 11.8 w/w% or less, 11.5 w/w% or less, 11.3 w/w% or less, 11 w/w or less, 10.8 w/w% or less, 10.5 w/w% or less, 10.3 w/w% or less, 10 w/w% or less, 9.8 w/w% or less, or 9.5 w/w% or less. The lower limit value of the chloride ion content (w/w%) in the food composition of the present invention may be, for example, 2 w/w% or more, 2.5 w/w% or more, 3.5 w/w% or more, 4.2 w/w% or more, 5.3 w/w% or more, 5.5 w/w% or more, 5.7 w/w% or more, 6 w/w% or more, 6.2 w/w% or more, 6.8 w/w% or more, or 7 w/w% or more. Furthermore, the range of the chloride ion content (w/w%) in the food composition of the present invention may be preferably 1.8 to 15.5 w/w%, more preferably 3 to 15 w/w%, further preferably 4 to 14 w/w%, even more preferably 5 to 13 w/w%, particularly preferably 6.5 to 12.5 w/w%, and especially preferably 7.3 to 12 w/w%. Numerical ranges specified by combining the above upper limit values or lower limit values are also disclosed in the present invention.

It is preferable that the food composition of the present invention contains a predetermined amount of chloride ions derived from sodium chloride. Specifically, the ratio of the chloride ion content derived from sodium chloride to the chloride ion content in the food composition of the present invention may be, for example, 30 mass% or more, 40 mass% or more, 50 mass% or more, 60 mass% or more, 70 mass% or more, 80 mass% or more, 90 mass% or more, or 95 mass% or more. Its upper limit value is not particularly limited, but may be, for example, 100 mass% or less, 99 mass% or less, 99 mass% or less, 98 mass% or less, 95 mass% or less, or 92 mass% or less. Its range may be, for example, 30 to 100 mass%. Numerical ranges specified by combining the above upper limit values or lower limit values are also disclosed in the present invention.

It is preferable that the food composition of the present invention has a Brix value (refractive index sugar content) within a predetermined range. The upper limit value of the Brix value of the food composition of the present invention is not particularly limited, but may be, for example, 69 or less, 67 or less, 65 or less, 64 or less, 63 or less, 62 or less, 59 or less, 58 or less, 57 or less, 53 or less, 52 or less, 51 or less, 49 or less, 47 or less, or 46 or less. Furthermore, its lower limit value may be, for example, 21 or more, 22 or more, 23 or more, 27 or more, 29 or more, preferably 31 or more, more preferably 34 or more, further preferably 35 or more, even more preferably 37 or more, particularly preferably 39 or more, especially preferably 40 or more, 41 or more, or 43 or more. The range of the Brix value of the food composition of the present invention can also be, for example, 20 to 70, preferably 22 to 68, more preferably 24 to 66, further preferably 26 to 60, even more preferably 28 to 55, particularly preferably 30 to 50, and especially preferably 32 to 48. Numerical ranges specified by combining the above upper limit values or lower limit values are also disclosed in the present invention.

<Carbohydrates>

"Carbohydrates" are those defined in the food labeling standards based on the provisions of Article 4, Paragraph 1 of the Food Labeling Act (Act No. 70 of 2013), and are obtained by subtracting the amounts of protein, fat, dietary fiber, ash, and moisture from the mass of the food. The carbohydrates contained in the food composition of the present invention are preferably contained as soluble carbohydrates. "Soluble carbohydrates" in the present invention refers to carbohydrates that are soluble in water, and is a general term for monosaccharides and oligosaccharides (saccharides in which 2 to 10 monosaccharides are bonded), and sugar alcohols. Therefore, starch, which has a much larger number of bonded sugars, is not included. Examples of soluble carbohydrates include glucose, fructose, galactose, sucrose, maltose, lactose, trehalose, sorbitol, and the like. These may be contained as single compounds, or may be contained through sweeteners that contain them, such as brown sugar, honey, starch syrup, and the like.

By including carbohydrates in the food composition of the present invention, the growth of spoilage microorganisms in the food composition can be suppressed. In an embodiment where the food composition of the present invention contains a sugar alcohol, the present invention is useful because scorching can be suppressed even when manufacturing a food by heating after adding the food composition of the present invention (for example, when manufacturing cooked rice products by cooking rice after adding the food composition of the present invention, or when manufacturing bread products by baking dough after adding the food composition of the present invention).

It is preferable that the carbohydrate content (total carbohydrate content) per 100 g of water in the food composition of the present invention is within a predetermined range. Specifically, its upper limit is not limited, but may be, for example, 68.0 g or less, 65.0 g or less, 64.0 g or less, 61.0 g or less, 59.0 g or less, 58.5 g or less, 57.0 g or less, 56.0 g or less, 54.5 g or less, 53.5 g or less, 52.0 g or less, 50.8 g or less, 50.0 g or less, or 49.0 g or less. On the other hand, its lower limit is not limited, but may be, for example, 4.0 g or more, 4.5 g or more, 5.0 g or more, 5.5 g or more, 10.0 g or more, 13.0 g or more, 18.0 g or more, 22.0 g or more, 25.0 g or more, 28.0 g or more, 31.0 g or more, 33.0 g or more, 35.0 g or more, 37.5 g or more, 39.0 g or more, 40.0 g or more, 42.0 g or more, 43.5 g or more, 45.0 g or more, or 47.0 g or more. Furthermore, the range of the carbohydrate content per 100 g of water of the food composition of the present invention may be preferably 4.0 to 70.0 g, more preferably 8.0 to 66.0 g, further preferably 15.0 to 63.0 g, even more preferably 20.0 to 60.0 g, particularly preferably 25.0 to 58.0 g, and especially preferably 30.0 to 55.0 g. Numerical ranges specified by combining the above upper limit values or lower limit values are also disclosed in the present invention.

It is preferable that the carbohydrate content (total carbohydrate content) in the food composition of the present invention is a predetermined amount. Specifically, its upper limit is not limited, but may be, for example, 45.0 w/w% or less, 40.0 w/w% or less, 36.0 w/w% or less, 35.0 w/w% or less, 34.0 w/w% or less, 33.0 w/w% or less, 31.0 w/w% or less, 29.0 w/w% or less, 28.5 w/w% or less, 27.5 w/w% or less, 27.0 w/w% or less, 26.8 w/w% or less, or 26.3 w/w% or less. On the other hand, its lower limit is not limited, but may be, for example, 0.5 w/w% or more, 1.0 w/w% or more, 1.5 w/w% or more, 2.0 w/w% or more, 2.5 w/w% or more, 3.0 w/w% or more, 3.5 w/w% or more, 4.0 w/w% or more, 6.0 w/w% or more, 7.0 w/w% or more, 7.5 w/w% or more, 8.0 w/w% or more, 9.0 w/w% or more, 10.0 w/w% or more, 11.5 w/w% or more, 12.0 w/w% or more, 12.5 w/w% or more, 13.0 w/w% or more, 13.5 w/w% or more, 14.0 w/w% or more, 16.0 w/w% or more, 17.0 w/w% or more, 17.5 w/w% or more, or 18.0 w/w% or more. Furthermore, the carbohydrate content in the food composition of the present invention may be preferably 0.5 to 50.0 w/w%, more preferably 1.0 to 40.0 w/w%, further preferably 2.0 to 36.0 w/w%, even more preferably 3.0 to 29.0 w/w%, particularly preferably 4.0 to 27.0 w/w%, especially preferably 5.0 to 25.0 w/w%, or 13.0 to 25.0 w/w%. Numerical ranges specified by combining the above upper limit values or lower limit values are also disclosed in the present invention.

From the viewpoint of suppressing the deterioration of the eating quality of the manufactured food due to the taste of the sugar itself, and preventing scorching in an embodiment where the food composition of the present invention is heated after addition, the food composition of the present invention may preferably contain reduced starch syrup as a source of carbohydrates. Reduced starch syrup is a saccharide produced by reducing starch syrup, which is obtained by hydrolyzing starch with acid or an enzyme. When the food composition of the present invention contains carbohydrates through reduced starch syrup, the ratio of the content (mass%) of the reduced starch syrup to the total carbohydrate content (mass%) may be preferably 40 mass% or more, more preferably 50 mass% or more, further preferably 60 mass% or more, even more preferably 70 mass% or more, particularly preferably 80 mass% or more, especially preferably 90 mass% or more, or 100 mass%. The content of reduced starch syrup may be 0.0 to 50.0 w/w%, and it is further preferable to satisfy the provisions regarding the upper and lower limits of the carbohydrate content.

From the viewpoint of suppressing the deterioration of the eating quality of the manufactured food due to the taste of the sugar itself, and preventing scorching in an embodiment where the food composition of the present invention is heated after addition, it is preferable that the food composition of the present invention contains a sugar alcohol. A sugar alcohol refers to a substance in which the reducing group (aldehyde group, carbonyl group) of a sugar has become an alcohol group by hydrogen addition, and examples include sorbitol, iditol, xylitol, mannitol, lactitol, maltitol, Palatinit, maltotriitol, isomalt, and the like. The content of sugar alcohol is measured according to the high-performance liquid chromatography method (monosaccharides, disaccharides, sugar alcohols) described in [Appendix 1] of the Addendum to the Analysis Manual of the Standard Tables of Food Composition in Japan - 2015 (Seventh Revised Edition). Specifically, the food composition of the present invention may contain sorbitol and/or mannitol, and the ratio of the total content (mass%) of sorbitol and mannitol to the total carbohydrate content (mass%) may be, for example, 5 mass% or more, 8 mass% or more, preferably 10 mass% or more, 12 mass% or more, 14 mass% or more, 18 mass% or more, 20 mass% or more, more preferably 24 mass% or more, further preferably 28 mass% or more, even more preferably 30 mass% or more, 40 mass% or more, particularly preferably 50 mass% or more, especially preferably 60 mass% or more, 70 mass% or more, 80 mass% or more, 90 mass% or more, or 100 mass%. The total content of sorbitol and mannitol in the food composition of the present invention may be 0.0 to 50.0 w/w%, and may further satisfy the provisions regarding the upper and lower limits of the carbohydrate content.

It is preferable that the ratio of the carbohydrate content (w/w%) to the salt equivalent amount (w/w%) in the food composition of the present invention is within a predetermined range. This embodiment is useful in that the effects of the present invention are further exerted and the balance of the taste due to sodium and carbohydrates is improved. Specifically, the upper limit of the ratio is not particularly limited, but may be, for example, 8.0 or less, 7.0 or less, 6.0 or less, 5.0 or less, 4.5 or less, or 4.0 or less. Its lower limit may be 0.1 or more, 0.2 or more, 0.3 or more, 0.4 or more, 0.5 or more, 0.6 or more, 0.7 or more, 0.8 or more, 0.9 or more, 1.0 or more, 1.5 or more, 2.0 or more, 2.5 or more, or 3.0 or more. Furthermore, regarding the food composition of the invention, the ratio of the carbohydrate content (w/w%) to the salt equivalent amount (w/w%) in the food composition of the present invention may be preferably 0.5 to 8, more preferably 0.5 to 7, further preferably 0.5 to 6, even more preferably 0.5 to 5, particularly preferably 0.5 to 4, and especially preferably 1 to 3. The ratio of the soluble carbohydrate content (w/w%) to the salt equivalent amount (w/w%) of the food composition of the present invention may also satisfy the above provision. Furthermore, the ratio of the reduced starch syrup content (w/w%) to the salt equivalent amount (w/w%) of the food composition of the present invention may satisfy the above provision.

Furthermore, from the viewpoint of improving the eating quality of the food obtained by using the food composition of the present invention, it is preferable that the proportion of the content (mass%) of at least one selected from fructose, glucose, and maltose to the total carbohydrate content (mass%) of the food composition of the present invention is a predetermined value or less. The value may be preferably 90 mass% or less, 80 mass% or less, 70 mass% or less, 60 mass% or less, 50 mass% or less, 40 mass% or less, 30 mass% or less, 20 mass% or less, 15 mass% or less, or 10 mass% or less. The proportion of the total content of at least two selected from fructose, glucose, and maltose to the carbohydrate content of the food composition of the present invention may be within the said range, and the proportion of the total content of fructose, glucose, and maltose to the carbohydrate content of the food composition of the present invention may be within the said range. The content of fructose, glucose, and maltose in the food composition of the present invention is measured by a high-performance liquid chromatography method (monosaccharides, disaccharides) in accordance with "Starch, Monosaccharides, Disaccharides" in the Analysis Manual of the Standard Tables of Food Composition in Japan - 2015 (Seventh Revised Edition).

It is preferable that the food composition of the present invention is used for manufacturing a processed grain product. A processed grain product refers to a food or drink product that uses at least one type of grain as a raw material.

In this specification, grain refers to at least one selected from pulse grains (Leguminosae crops), cereal grains (Poaceae crops), and pseudocereals. Specifically, the grain in the present invention can be preferably at least one pulse grain selected from the genera Pisum, Phaseolus, Cajanus, Vigna, Vicia, Cicer, Glycine, and Lens, or at least one cereal grain or pseudocereal selected from rice, wheat, barley, foxtail millet, Japanese barnyard millet, proso millet, sorghum, rye, oat, adlay, corn, buckwheat, amaranth, and quinoa.

The processed grain product in the present invention may contain at least one, two, or three or more pulse grains selected from the genera Pisum, Phaseolus, Cajanus, Vigna, Vicia, Cicer, Glycine, and Lens, and may contain at least one, two, three, four, five, six, or seven or more cereal grains or pseudocereals selected from rice, wheat, barley, foxtail millet, Japanese barnyard millet, proso millet, sorghum, rye, oat, adlay, corn, buckwheat, amaranth, and quinoa. Among these, it is preferable that the processed grain product of the present invention contains at least one selected from rice, wheat, barley, yellow peas, and corn. In the processed grain product of the present invention, the entire amount of the grains used as raw materials may be the said pulse grains, cereal grains, and pseudocereals.

Furthermore, when the processed grain product of the present invention contains rice, the rice may be polished rice or brown rice. In the processed grain product of the present invention, the entire amount of the grains used as raw materials may be polished rice, the entire amount of the grains used as raw materials may be brown rice, or it may be an embodiment where the grains used as raw materials consist of brown rice and polished rice. When the processed grain product of the present invention contains brown rice, the proportion of brown rice in the total rice contained in the processed grain product may be, for example, 1 to 100 w/w%. Its lower limit value may be, for example, 1 w/w% or more, 3 w/w% or more, 5 w/w% or more, 7 w/w% or more, 9 w/w% or more, 10 w/w% or more, 12 w/w% or more, 14 w/w% or more, 16 w/w% or more, 18 w/w% or more, 20 w/w% or more, 25 w/w% or more, 30 w/w% or more, 35 w/w% or more, 40 w/w% or more, or 45 w/w% or more. Its upper limit value may be 100 w/w% or less, 95 w/w% or less, 90 w/w% or less, 85 w/w% or less, 80 w/w% or less, 75 w/w% or less, 70 w/w% or less, 65 w/w% or less, 60 w/w% or less, or 55 w/w% or less. In an embodiment where the processed grain product of the present invention contains brown rice, it is particularly preferable that the food composition of the present invention contains, among the enzymes described above, at least one or more enzymes selected from cyclodextrin glucanotransferase, xylanase, lipase, or beta-glucosidase, from the viewpoint of improving the dry and crumbly texture upon long-term storage. The principle for this is unknown, but it is possible that containing the said enzyme contributes in some way to the retention of moisture in the brown rice. When the processed grain product of the present invention contains polished rice, the proportion of polished rice in the total rice may be, for example, 1 to 100 w/w%. Its lower limit value may be, for example, 1 w/w% or more, 3 w/w% or more, 5 w/w% or more, 7 w/w% or more, 9 w/w% or more, 10 w/w% or more, 12 w/w% or more, 14 w/w% or more, 16 w/w% or more, 18 w/w% or more, 20 w/w% or more, 25 w/w% or more, 30 w/w% or more, 35 w/w% or more, 40 w/w% or more, or 45 w/w% or more. Its upper limit value may be 100 w/w% or less, 95 w/w% or less, 90 w/w% or less, 85 w/w% or less, 80 w/w% or less, 75 w/w% or less, 70 w/w% or less, 65 w/w% or less, 60 w/w% or less, or 55 w/w% or less.

According to one aspect of the present invention, when the processed grain product of the present invention contains rice, assuming that polished rice is rice with a polishing rate of 100% and brown rice is rice with a polishing rate of 0%, it may contain rice with a predetermined polishing rate. The polishing rate can be, for example, 70% or less, 50% or less, or 30% or less. Examples of rice with a predetermined polishing rate include, for example, "7-bun-zuki-mai" (70% polished rice) with a polishing rate of 70%, "5-bun-zuki-mai" (50% polished rice) with a polishing rate of 50%, and "3-bun-zuki-mai" (30% polished rice) with a polishing rate of 30%. In other words, according to one aspect of the present invention, the processed grain product of the present invention may contain 70% polished rice, 50% polished rice, or 30% polished rice. When the processed grain product of the present invention contains rice with a predetermined polishing rate (for example, 70% polished rice, 50% polished rice, or 30% polished rice), the proportion of the rice with the predetermined polishing rate (for example, 70% polished rice, 50% polished rice, or 30% polished rice) in the total rice may be, for example, 1 to 100 w/w%. Its lower limit value may be, for example, 1 w/w% or more, 3 w/w% or more, 5 w/w% or more, 7 w/w% or more, 9 w/w% or more, 10 w/w% or more, 12 w/w% or more, 14 w/w% or more, 16 w/w% or more, 18 w/w% or more, 20 w/w% or more, 25 w/w% or more, 30 w/w% or more, 35 w/w% or more, 40 w/w% or more, or 45 w/w% or more. Its upper limit value may be 100 w/w% or less, 95 w/w% or less, 90 w/w% or less, 85 w/w% or less, 80 w/w% or less, 75 w/w% or less, 70 w/w% or less, 65 w/w% or less, 60 w/w% or less, or 55 w/w% or less. In an embodiment where the processed grain product of the present invention contains rice with a predetermined polishing rate (for example, 70% polished rice, 50% polished rice, or 30% polished rice), it is particularly preferable that the food composition of the present invention contains, among the enzymes described above, at least one or more enzymes selected from cyclodextrin glucanotransferase, xylanase, lipase, or beta-glucosidase, from the viewpoint of improving the dry and crumbly texture upon long-term storage. The principle for this is unknown, but it is possible that containing the said enzyme contributes in some way to the retention of moisture in the rice with the predetermined polishing rate (for example, 70% polished rice, 50% polished rice, or 30% polished rice).

According to one aspect of the present invention, the processed grain product of the present invention may contain miscellaneous grains. In the present invention, "miscellaneous grains" generally refers to grains other than the major grains of rice, wheat, and barley, and is a concept that includes so-called pseudocereals (Chenopodiaceae, Amaranthaceae) other than Poaceae grains. When the processed grain product of the present invention contains miscellaneous grains, the type of miscellaneous grains contained is not limited, but examples are preferably one or two or more miscellaneous grains selected from Poaceae, Chenopodiaceae, and Amaranthaceae, and more preferably Poaceae. Specific examples include, but are not limited to, foxtail millet, Japanese barnyard millet, proso millet, sorghum, rye, oat, adlay, corn, buckwheat, amaranth, and quinoa, and it is particularly preferable to use any one or two or more of oat, amaranth, quinoa, and proso millet, and it is particularly preferable to use oat, which contains a large amount of soluble dietary fiber. It is preferable that the miscellaneous grains substantially do not contain gluten (specifically, it represents a state where the gluten content is less than 10 mass ppm), and more preferably do not contain gluten. When the processed grain product of the present invention contains miscellaneous grains, the proportion of miscellaneous grains in the total grains contained in the processed grain product may be, for example, 1 to 100 w/w%. Its lower limit value may be, for example, 1 w/w% or more, 3 w/w% or more, 5 w/w% or more, 7 w/w% or more, 9 w/w% or more, 10 w/w% or more, 12 w/w% or more, 14 w/w% or more, 16 w/w% or more, 18 w/w% or more, 20 w/w% or more, 25 w/w% or more, 30 w/w% or more, 35 w/w% or more, 40 w/w% or more, or 45 w/w% or more. Its upper limit value may be 100 w/w% or less, 95 w/w% or less, 90 w/w% or less, 85 w/w% or less, 80 w/w% or less, 75 w/w% or less, 70 w/w% or less, 65 w/w% or less, 60 w/w% or less, or 55 w/w% or less. When the processed grain product of the present invention contains two or more types of miscellaneous grains, the content of the said miscellaneous grains refers to the total content of the two or more types of miscellaneous grains. In this case, the individual content of each miscellaneous grain may be, for example, 1 to 90 w/w%. Its lower limit value may be, for example, 1 w/w% or more, 3 w/w% or more, 5 w/w% or more, 7 w/w% or more, 9 w/w% or more, 10 w/w% or more, 12 w/w% or more, 14 w/w% or more, 16 w/w% or more, 18 w/w% or more, 20 w/w% or more, 25 w/w% or more, or 30 w/w% or more. Its upper limit value may be, for example, 90 w/w% or less, 85 w/w% or less, 80 w/w% or less, 75 w/w% or less, 70 w/w% or less, 65 w/w% or less, 60 w/w% or less, or 55 w/w% or less. In an embodiment where the processed grain product of the present invention contains miscellaneous grains, it is particularly preferable that the food composition of the present invention contains, among the enzymes described above, at least one or more enzymes selected from cyclodextrin glucanotransferase, xylanase, lipase, or beta-glucosidase, from the viewpoint of improving the dry and crumbly texture upon long-term storage. The principle for this is unknown, but it is possible that containing the said enzyme contributes in some way to the retention of moisture in the miscellaneous grains.

The processed grain product of the present invention may further contain raw materials of animal and plant origin in addition to the grains described above. Examples of raw materials of animal and plant origin include meat (e.g., beef, pork, chicken, lamb, horse meat, etc.), fish and seafood (e.g., tuna, sea bream, bonito, flying fish, squid, octopus, scallop, shrimp, crab, etc.), milk (e.g., cow's milk, goat's milk, etc.), eggs (e.g., chicken eggs, duck eggs, quail eggs, etc.), or vegetables, fruits, herbs or spices, or nuts and seeds described later. That is, the processed grain product of the present invention may contain the grains disclosed in this specification and also contain at least one, two, three, four, five, six, seven, eight, nine, or ten or more selected from meat, fish and seafood, milk, eggs, vegetables, fruits, herbs or spices, or nuts and seeds disclosed in this specification.

It is preferable that the processed grain product of the present invention is at least one selected from the group consisting of cooked rice products, noodle products, cereal products, and bread products, and it may be particularly preferably a cooked rice product.

When the food composition of the present invention is used for cooked rice products, the timing of adding the food composition of the present invention may be either before or after cooking the rice. Specifically, depending on the type of enzyme, the timing described in the examples of this specification (before or after cooking rice) or the timing described in Tables 4 to 9 (before or after cooking rice) can be selected. In the present invention, examples of cooked rice products include plain cooked rice, sushi rice (vinegared rice), sekihan (red bean rice), pilaf, fried rice, takikomi gohan (seasoned rice), okowa (steamed glutinous rice), paella, doria, dry curry, zosui (rice porridge), onigiri (rice balls), mugimeshi (barley rice), zakkoku-meshi (mixed grain rice), and genmai-meshi (cooked brown rice). The proportion of rice in the total grains contained in the cooked rice products of the present invention can be within a predetermined range. Specifically, its lower limit value may be 30 mass% or more, 40 mass% or more, 50 mass% or more, 60 mass% or more, 70 mass% or more, or 80 mass% or more, and its upper limit value is not particularly limited, but can be, for example, 100 mass%, 98 mass% or less, 95 mass% or less, 93 mass% or less, 90 mass% or less, or 85 mass% or less. Its range can be, for example, 30 to 100 mass%.

The food composition of the present invention can improve the preservability of the food obtained by its use while maintaining a relatively high pH, and as a result, can provide a food in which flavor deterioration due to a decrease in pH is suppressed. From this point of view, the food composition of the present invention may be one that is added so that the pH of the food manufactured by adding the food composition of the present invention is within a predetermined range. The pH of the food manufactured by adding the food composition is the pH measured at 1 atm and 20°C, and can be measured by measuring the pH of a sample homogenized by adding distilled water in an amount equal to twice the mass (on a wet mass basis) of the food (for example, in an embodiment where the food is a cooked rice product and the food composition of the present invention is added before cooking the rice, the pH of a sample homogenized by adding distilled water in an amount equal to twice the amount of the cooked rice obtained after cooking can be measured). Specifically, the food composition of the present invention may be added so that the pH of the food or drink product manufactured by adding the food composition of the present invention is preferably more than 6.20, more preferably 6.30 or more, further preferably 6.35 or more, even more preferably 6.40 or more, particularly preferably 6.45 or more, and especially preferably 6.50 or more, or 6.60 or more. The upper limit value of the pH of the food manufactured by adding the food composition of the present invention is not particularly limited, but it may be added so as to be, for example, 8.0 or less, 7.5 or less, 7.0 or less, or 6.9 or less. Furthermore, it may be added so that the range of the pH of the food manufactured by adding the food composition of the present invention is, for example, 6.2 to 8.0, 6.3 to 7.5, or 6.4 to 7.0. Numerical ranges specified by combining the above upper limit values or lower limit values are also disclosed in the present invention. The food may be preferably a processed grain product, more preferably cooked rice, bread products, cereal products, or noodle products, particularly preferably a cooked rice product or noodle products, and especially preferably a cooked rice product.

When adding the food composition of the present invention, its addition amount may be, for example, 0.0005 to 10 w/w% with respect to the mass of the raw materials (on a wet mass basis). Its lower limit value is not particularly limited, but may be, for example, 0.001 w/w% or more, 0.005 w/w% or more, 0.01 w/w% or more, 0.05 w/w% or more, 0.1 w/w% or more, 0.15 w/w% or more, 0.2 w/w% or more, 0.25 w/w% or more, 0.3 w/w% or more, 0.35 w/w% or more, 0.4 w/w% or more, 0.45 w/w% or more, 0.5 w/w% or more, 0.55 w/w% or more, 0.6 w/w% or more, 0.65 w/w% or more, 0.7 w/w% or more, 0.75 w/w% or more, 0.8 w/w% or more, 0.85 w/w% or more, 0.9 w/w% or more, 0.95 w/w% or more, 0.95 w/w% or more, 1.0 w/w% or more, 1.5 w/w% or more, 2.0 w/w% or more, 3.0 w/w% or more, 4.0 w/w% or more, 5.0 w/w% or more, or 5.5 w/w% or more. Its upper limit value is not particularly limited, but may be, for example, 6.0 w/w% or less, 5.0 w/w% or less, 4.0 w/w% or less, 3.0 w/w% or less, 2.0 w/w% or less, 1.0 w/w% or less, 0.8 w/w% or less, 0.6 w/w% or less, 0.5 w/w% or less, 0.3 w/w% or less, 0.2 w/w% or less, 0.1 w/w% or less, 0.05 w/w% or less, 0.03 w/w% or less, or 0.01 w/w% or less.

The raw material refers to the object to which the food composition of the present invention is added. Specifically, in an embodiment where the food composition of the present invention is used for manufacturing cooked rice products, it refers to the mass of the raw rice before soaking and before cooking (if it contains raw materials other than rice, the total mass of the raw rice and the said raw materials), when the food composition of the present invention is used before baking bread products, it refers to the mass of the bread dough, and when the food composition of the present invention is used for noodle dough, it refers to the mass of the noodle dough.

<Second Embodiment>

The present invention also relates to a method for manufacturing the food composition according to the first embodiment (second embodiment). The second embodiment will be described below.

From the viewpoint of maintaining its enzyme activity, it is preferable to perform sterilization treatment at a maximum temperature reached of less than 124°C during manufacturing of the food composition of the present invention, and it is preferable not to have a heat sterilization treatment step. Specifically, for example, when the Z value of the indicator organism is 10 minutes, it is preferable not to perform a sterilization treatment equivalent to 1.5925 minutes at 124°C. Furthermore, from the viewpoint of maintaining its enzyme activity, the food composition of the present invention may not have a pressure sterilization step in which pressurization is performed at a pressure above atmospheric pressure, and specifically, it may not have a step of pressure sterilizing under a pressure condition of 0.01 MPa or more. A method of preparing the food composition so as to satisfy the aspect disclosed in the first embodiment is also included in the second embodiment.

<Third Embodiment>

The present invention also relates to a method for manufacturing a processed grain product, using the food composition of the present invention disclosed in the first embodiment. The third embodiment will be described below.

According to the food composition of the present invention, it is possible to improve the preservability of a processed grain product while maintaining a relatively high pH, and as a result, it is possible to provide a processed grain product in which flavor deterioration due to a decrease in pH is suppressed. Therefore, when manufacturing a processed grain product using the food composition of the present invention, it is preferable to manufacture the processed grain product so that the pH of the processed grain product is within a predetermined range. The pH may satisfy the provisions disclosed in the first embodiment, and may be adjusted to be preferably more than 6.20, more preferably 6.30 or more, further preferably 6.35 or more, even more preferably 6.40 or more, particularly preferably 6.45 or more, and especially preferably 6.50 or more, or 6.60 or more, and its upper limit value may be adjusted to be, for example, 8.0 or less, 7.5 or less, 7.0 or less, or 6.9 or less. Furthermore, its range may be adjusted to be, for example, 6.2 to 8.0, 6.3 to 7.5, or 6.4 to 7.0.

In the third embodiment, the specific types of processed grain products can adopt the aspects disclosed in the first embodiment.

In the third embodiment, it may have a step of heating to 90°C or more at a heating rate of 6.0°C/min or more after adding the food composition disclosed in the first embodiment to the raw materials, and then may have a step of holding at 90°C or more for 15 minutes or more. As a case where this embodiment can be actively adopted, for example, an embodiment where the processed grain product is a cooked rice product can be mentioned. For example, when the processed grain product is a cooked rice product, this embodiment can be carried out by adding the food composition disclosed in the first embodiment to the raw rice before cooking, and then cooking the rice.

In the third embodiment, it may have a step of enzyme reaction at a temperature of 80°C or less for 30 minutes or more after adding the food composition disclosed in the first embodiment to the raw materials. As a case where this embodiment can be actively adopted, for example, an embodiment where the processed grain product is a cooked rice product can be mentioned. For example, when the processed grain product is a cooked rice product, this embodiment can be carried out by adding the food composition disclosed in the first embodiment to the raw rice before cooking, and then cooking the rice.

<Fourth Embodiment>

The present invention also relates to a processed grain product obtained by using the food composition of the present invention. The specific types of processed grain products obtained by using the food composition of the present invention are as disclosed in the first embodiment. For example, in an embodiment where a processed grain product is manufactured by being heated after adding the food composition of the present invention to raw materials, the enzyme in the processed grain product may be inactivated.

<Fifth Embodiment>

The present invention also relates to a method for suppressing the growth of spoilage microorganisms in a food composition that is not subjected to heat sterilization at 100°C or more. The fifth embodiment will be described below.
According to the aspect disclosed in the first embodiment, the food composition of the present invention can suppress the growth of microorganisms that cause food spoilage (especially lactic acid bacteria, particularly the heat-resistant lactic acid bacterium "Lactobacillus fructivorans"). That is, the present invention includes a method of suppressing the growth in a food composition of, for example, the microorganisms disclosed in the first embodiment (especially lactic acid bacteria, particularly the heat-resistant lactic acid bacterium "Lactobacillus fructivorans"), by preparing or using the food composition disclosed in the first embodiment. Specifically, it includes a method of suppressing the growth of microorganisms in a food composition by preparing a food composition that satisfies all of the following requirements (a) to (d). As described in the first embodiment, the food composition of the present invention may be an unsterilized composition that can be used without the generation of off-odors derived from microorganisms even when filled in a container, not subjected to a heat sterilization treatment (for example, a heat sterilization treatment at a maximum temperature reached of 100°C or more, particularly a heat sterilization treatment at a maximum temperature reached of 124°C or more), and stored at 1 atm and 20°C for one month, two months, three months, four months, five months, six months, seven months, or eight months. From this viewpoint, this embodiment also includes "a method for improving the preservability of a food composition that is not subjected to heat sterilization at 100°C or more."

(a) The moisture content on a wet mass basis is 20 w/w% or more
(b) The pH at 20°C and 1 atm is more than 4.6
(c) Contains one or more enzymes having an optimum pH of 4.0 or more
(d) Satisfies the following requirement (i) and/or (ii)

Requirement (i)

When the salt equivalent amount per 100 g of water of the food composition is X g, and the undissociated acetic acid content per 100 g of water of the food composition is Y g, the following formula is satisfied:

$$4Y+X\geq10 \text{ (provided that } X\geq3 \text{ and } 4\geq Y>0.03)$$

Requirement (ii)

The salt equivalent amount per 100 g of water of the food composition is 3.0 g or more, and the ethanol content per 100 g of water of the food composition is 8.0 g or more
The preferable numerical ranges, upper limit values, or lower limit values related to requirements (a), (b), and (d) can adopt the values disclosed in the first embodiment. The optimum pH of the enzyme, specific examples of the enzyme, and the like in requirement (c) are as disclosed in the first embodiment. Furthermore, even for matters not specified in the above requirements, the aspects disclosed in the first embodiment can be adopted. For example, it may be a method for suppressing the growth of spoilage microorganisms in an embodiment where the food composition is filled without heat sterilization, or a method for suppressing the growth of spoilage microorganisms when stored at 1 atm and 20°C for one month, two months, three months, four months, five months, six months, seven months, or eight months. It may be a method for suppressing the growth of spoilage microorganisms by adjusting the water activity of the food composition to satisfy the aspect disclosed in the first embodiment, a method for suppressing the growth of spoilage microorganisms by adjusting the salt equivalent amount of the food composition in accordance with the aspect disclosed in the first embodiment, a method for suppressing the growth of spoilage microorganisms by adjusting the content of sodium salts (sodium acetate, sodium citrate, sodium chloride, etc.) of the food composition in accordance with the aspect disclosed in the first embodiment, a method for suppressing the growth of spoilage microorganisms by adjusting the Brix value (refractive index sugar content) of the food composition in accordance with the aspect disclosed in the first embodiment, a method for suppressing the growth of spoilage microorganisms by adjusting the ratio of the chloride ion content (w/w%) to the sodium content (w/w%) of the food composition in accordance with the aspect disclosed in the first embodiment, a method for suppressing the growth of spoilage microorganisms by adjusting the chloride ion content of the food composition in accordance with the aspect disclosed in the first embodiment, a method for suppressing the growth of spoilage microorganisms by adjusting the undissociated acetic acid content of the food composition in accordance with the aspect disclosed in the first embodiment, a method for suppressing the growth of spoilage microorganisms by adjusting the total acetic acid content of the food composition in accordance with the aspect disclosed in the first embodiment, a method for suppressing the growth of spoilage microorganisms by adjusting the brewed vinegar content of the food composition in accordance with the aspect disclosed in the first embodiment, a method for suppressing the growth of spoilage microorganisms by adjusting the ratio of acetic acid derived from sodium acetate to the total acetic acid content of the food composition in accordance with the aspect disclosed in the first embodiment, a method for suppressing the growth of spoilage microorganisms by adjusting the titratable acidity of the food composition in accordance with the aspect disclosed in the first embodiment, a method for suppressing the growth of spoilage microorganisms by adjusting the ratio of the total acetic acid content to the titratable acidity of the food composition (total acetic acid content/titratable acidity determined by neutralization titration) in accordance with the aspect disclosed in the first embodiment, a method for suppressing the growth of spoilage microorganisms by adjusting the carbohydrate content of the food composition to satisfy the provision disclosed in the first embodiment, a method for suppressing the growth of spoilage microorganisms by adjusting the ratio of the carbohydrate content (w/w%) to the salt equivalent amount (w/w%) of the food composition to satisfy the provision disclosed in the first embodiment, a method for suppressing the growth of spoilage microorganisms by adjusting the ratio of reduced starch syrup to the carbohydrate content of the food composition to satisfy the provision disclosed in the first embodiment, a method for suppressing the growth of spoilage microorganisms by adjusting the ratio of the total content of sorbitol and mannitol to the carbohydrate content of the food composition to satisfy the provision disclosed in the first embodiment, or a method for suppressing the growth of spoilage microorganisms by adjusting the ratio of the content of at least one selected from fructose, glucose, and maltose to the carbohydrate content of the food composition to satisfy the provision disclosed in the first embodiment.

<Sixth Embodiment>

The present invention also relates to a method for improving the texture of a processed grain product by using the food composition of the present invention. By using the food composition of the present invention, the texture of a processed grain product can be improved by the synergistic effect of the enzyme, sodium, and undissociated acetic acid and/or ethanol. The food composition of the present invention can suppress the growth of spoilage microorganisms in the food or drink product (especially a processed grain product) obtained by its use while maintaining a relatively high pH, and therefore also has the effect that flavor deterioration of the processed grain product due to a decrease in pH is unlikely to occur. Examples of the texture in the sixth embodiment can adopt those disclosed in the first embodiment. The specific types of processed grain products can adopt those disclosed in the first embodiment. The pH of the food or drink product manufactured by adding the food composition of the present invention can adopt the aspect disclosed in the first embodiment.

<Seventh Embodiment>

The food composition of the present invention also relates to a food composition for adding to a composition containing an enzyme having an optimum pH of 4.0 or more. The seventh embodiment will be described below.

In the seventh embodiment, the food composition of the present invention, which satisfies requirements (a), (b), and (d) disclosed in the first embodiment, is a food composition for adding to a composition containing an enzyme having an optimum pH of 4.0 or more.

In the seventh embodiment, the preferable numerical ranges, upper limit values, or lower limit values related to requirements (a), (b), and (d) can adopt the values disclosed in the first embodiment. The optimum pH of the enzyme having an optimum pH of 4.0 or more and specific examples of the enzyme can adopt the provisions disclosed in the first embodiment. Furthermore, even for matters not specified in the above requirements, the provisions disclosed in the first embodiment can be adopted. For example, it is preferable that the food composition is in a liquid state at 1 atm and 20°C, more preferably in a liquid state at 1 atm and 0°C, and may be in a liquid state at 1 atm and -20°C. Furthermore, it may be one that can be used under the Food Sanitation Act (corresponding to the Act for Partial Revision of the Food Sanitation Act, etc., enforced on June 1, 2021) even when filled without heat sterilization and stored at 1 atm and 20°C for one month, two months, three months, four months, five months, six months, seven months, or eight months. The water activity of the food composition may satisfy the provision disclosed in the first embodiment, the salt equivalent amount of the food composition may satisfy the provision disclosed in the first embodiment, the content of sodium salts (such as sodium acetate and sodium citrate) of the food composition may be in the aspect disclosed in the first embodiment, the Brix value (refractive index sugar content) of the food composition may satisfy the provision disclosed in the first embodiment, the ratio of the chloride ion content (w/w%) to the sodium content (w/w%) of the food composition may satisfy the provision disclosed in the first embodiment, the chloride ion content of the food composition may satisfy the provision disclosed in the first embodiment, the undissociated acetic acid content of the food composition may satisfy the provision disclosed in the first embodiment, the total acetic acid content of the food composition may satisfy the provision disclosed in the first embodiment, the brewed vinegar content of the food composition may satisfy the provision disclosed in the first embodiment, the ratio of acetic acid derived from sodium acetate to the total acetic acid content of the food composition may satisfy the provision disclosed in the first embodiment, the titratable acidity of the food composition may satisfy the provision disclosed in the first embodiment, the ratio of the total acetic acid content to the titratable acidity of the food composition (total acetic acid content/titratable acidity determined by neutralization titration) may satisfy the provision disclosed in the first embodiment, the carbohydrate content of the food composition may satisfy the provision disclosed in the first embodiment, the ratio of the carbohydrate content (w/w%) to the salt equivalent amount (w/w%) of the food composition may satisfy the provision disclosed in the first embodiment, the ratio of reduced starch syrup to the carbohydrate content of the food composition may satisfy the provision disclosed in the first embodiment, the ratio of the total content of sorbitol and mannitol to the carbohydrate content of the food composition may satisfy the provision disclosed in the first embodiment, or the ratio of the content of at least one selected from fructose, glucose, and maltose to the carbohydrate content of the food composition may satisfy the provision disclosed in the first embodiment.

In the seventh embodiment, "the composition containing an enzyme having the said optimum pH of 4.0 or more" is not particularly limited as long as it is a composition containing an enzyme having a pH of 4.0 or more, and may be, for example, an enzyme preparation containing the said enzyme and other mineral salts, meat, fish and seafood, eggs, milk, or plants containing the said enzyme, or may be "the enzyme having an optimum pH of 4.0 or more" itself.

The plant can be preferably grains, vegetables, fruits, herbs or spices, or nuts and seeds, and can be particularly preferably grains. The preferable types of grains when the plant is a grain are as disclosed in the first embodiment.

Examples of the vegetables include tomato, bell pepper, paprika, cucumber, eggplant, red bell pepper, pumpkin, ginger, garlic, radish, corn, carrot, beet, onion, cabbage, lettuce, spinach, Chinese cabbage, celery, komatsuna, bok choy, molokhia, kale, shiso, chives, parsley, leek, asparagus, bamboo shoot, broccoli, cauliflower, and the like.

Examples of the fruits include apple, peach, grape, acerola, blueberry, pear, apricot, citrus fruits (orange, lemon, yuzu, kabosu, sudachi, lime, mandarin orange, grapefruit, pink grapefruit, hassaku orange, calamansi, etc.), strawberry, pineapple, banana, melon, kiwi fruit, cassis, apricot, guava, plum, mango, papaya, lychee, ume, pomegranate, acai, raspberry, white grape, bergamot, passion fruit, and the like.

Examples of the herbs or spices include roselle, watercress, arugula, artichoke, calendula, tarragon, chicory, stevia, dandelion, basil, perilla, oregano, shiso, savory, sage, thyme, basil, mint, lemon balm, rosemary, parsley, anise, angelica, cumin, coriander, Japanese parsley, chervil, hawthorn, allspice, lemon myrtle, Japanese pepper, nasturtium, laurel, hop, rooibos, chamomile, safflower, elderflower, pepper, cinnamon, plantain, and the like.

Examples of the nuts and seeds include almond, cashew nut, macadamia nut, hazelnut, walnut, chestnut, chinquapin, and the like.

Examples

Hereinafter, the present invention will be described in more detail based on examples, but these examples are merely examples shown for convenience of explanation, and the present invention is not limited to these examples in any sense.

<Test 1: Verification of Microbial Growth Suppression Effect in the Food Composition of the Present Invention>

Sodium acetate, rice vinegar (manufactured by Mizkan Co., Ltd.), sodium chloride, sucrose, reduced starch syrup, water, and ethanol were appropriately mixed to have the compositions in Table 1 and Table 2, and food compositions to be used as each test product were prepared (Test Examples 1 to 45).

For each test product, lactic acid bacteria (Lactobacillus fructivorans) were inoculated to a concentration of $10^5$ cells/ml, sealed, and cultured at 25°C for 3 days to prepare an inoculated section, and an uninoculated section that was not inoculated and stored refrigerated was prepared. By comparing the odor after culture in the inoculated section of each test product with the uninoculated section, the degree of suppression of the growth of microorganisms that cause food deterioration was evaluated. The evaluation was performed by 10 expert panelists as follows. As sensory inspectors for each sensory test, after conducting identification training for food taste, odor, texture, appearance, etc. in advance, inspectors who had particularly excellent results, product development experience, abundant knowledge about the quality of food taste, odor, texture, appearance, etc., and were capable of performing absolute evaluation for each sensory test item were selected. For any of the evaluation items, all inspectors evaluated Test Example 1 in advance, and after standardizing each score of the evaluation criteria, an objective sensory test was conducted. The average value of the scores of 10 sensory inspectors was calculated, and the value was rounded to the nearest integer to obtain the final score. The results are shown in Table 1 and Table 2. The numerical values for each provision in the tables show values rounded to the second or first decimal place.

<Evaluation of Off-odor>

1: Off-odor is very strong and undesirable
2: Off-odor is strong and somewhat undesirable
3: Off-odor is weak and somewhat desirable
4: Off-odor is very weak and desirable

Table 1-1

| | pH of Food Composition (20°C, 1 atm) | Salt Equivalent Amount per 100 g of Water of Food Composition | Total Acetic Acid Content per 100 g of Water of Food Composition | Undissociated Acetic Acid Content per 100 g of Water of Food Composition | Titratable Acidity of Food Composition | Moisture Content on a Wet Mass Basis of Food Composition | 4Y+X | Odor Evaluation |
|---|---|---|---|---|---|---|---|---|
| Unit | | g | g | g | w/w% | w/w% | | |
| Test Example 1 | 4.70 | 3.29 | 1.64 | 0.86 | 0.52 | 70.84 | 6.73 | 1 |
| Test Example 2 | 5.08 | 4.28 | 2.47 | 0.78 | 0.42 | 68.05 | 7.39 | 1 |
| Test Example 3 | 5.56 | 9.03 | 3.11 | 0.41 | 0.21 | 65.77 | 10.69 | 3 |
| Test Example 4 | 5.99 | 14.09 | 8.02 | 0.43 | 0.21 | 62.32 | 15.83 | 4 |
| Test Example 5 | 4.78 | 4.38 | 1.47 | 0.70 | 0.44 | 73.73 | 7.19 | 1 |
| Test Example 6 | 4.97 | 5.28 | 2.55 | 0.95 | 0.57 | 72.68 | 9.09 | 2 |
| Test Example 7 | 5.21 | 6.64 | 3.89 | 0.99 | 0.56 | 71.55 | 10.60 | 3 |
| Test Example 8 | 5.45 | 9.93 | 7.28 | 1.19 | 0.64 | 68.80 | 14.71 | 4 |
| Test Example 9 | 4.63 | 5.30 | 1.22 | 0.69 | 0.43 | 73.24 | 8.06 | 2 |
| Test Example 10 | 4.94 | 7.04 | 1.69 | 0.66 | 0.39 | 72.16 | 9.66 | 2 |
| Test Example 11 | 5.31 | 8.61 | 3.22 | 0.69 | 0.38 | 70.87 | 11.38 | 3 |
| Test Example 12 | 6.74 | 8.61 | 8.14 | 0.08 | 0.04 | 70.20 | 8.94 | 2 |
| Test Example 13 | 4.69 | 2.41 | 3.38 | 1.81 | 1.08 | 70.08 | 9.64 | 2 |
| Test Example 14 | 4.69 | 3.64 | 3.40 | 1.81 | 1.08 | 69.40 | 10.90 | 3 |
| Test Example 15 | 6.82 | 11.28 | 10.43 | 0.09 | 0.04 | 65.34 | 11.63 | 3 |
| Test Example 16 | 5.78 | 5.72 | 0.96 | 0.08 | 0.04 | 70.45 | 6.05 | 1 |
| Test Example 17 | 5.08 | 3.98 | 4.50 | 1.42 | 0.89 | 77.99 | 9.65 | 2 |
| Test Example 18 | 4.86 | 3.04 | 3.95 | 1.71 | 1.12 | 78.42 | 9.88 | 2 |
| Test Example 19 | 4.96 | 6.23 | 1.99 | 0.75 | 0.43 | 69.31 | 9.25 | 2 |

Table 1-2

| | pH of Food Composition (20°C, 1 atm) | Salt Equivalent Amount per 100 g of Water of Food Composition | Total Acetic Acid Content per 100 g of Water of Food Composition | Undissociated Acetic Acid Content per 100 g of Water of Food Composition | Titratable Acidity of Food Composition | Moisture Content on a Wet Mass Basis of Food Composition | 4Y+X | Odor Evaluation |
|---|---|---|---|---|---|---|---|---|
| Unit | | g | g | g | w/w% | w/w% | | |
| Test Example 20 | 5.08 | 4.36 | 4.93 | 1.55 | 0.86 | 68.95 | 10.55 | 3 |
| Test Example 21 | 6.36 | 10.08 | 8.74 | 0.21 | 0.10 | 69.17 | 10.91 | 3 |
| Test Example 22 | 5.13 | 7.69 | 2.31 | 0.68 | 0.39 | 71.62 | 10.39 | 3 |
| Test Example 23 | 5.12 | 5.63 | 4.21 | 1.24 | 0.68 | 68.71 | 10.60 | 3 |
| Test Example 24 | 5.53 | 14.82 | 5.30 | 0.75 | 0.37 | 64.26 | 17.82 | 4 |
| Test Example 25 | 5.08 | 12.85 | 3.78 | 1.19 | 0.63 | 65.17 | 17.60 | 4 |
| Test Example 26 | 5.91 | 17.93 | 8.07 | 0.52 | 0.24 | 62.44 | 20.01 | 4 |
| Test Example 27 | 5.52 | 16.71 | 5.89 | 0.84 | 0.41 | 63.20 | 20.07 | 4 |
| Test Example 28 | 5.06 | 14.18 | 3.86 | 1.27 | 0.66 | 64.46 | 19.25 | 4 |
| Test Example 29 | 5.97 | 18.47 | 8.54 | 0.48 | 0.22 | 62.13 | 20.38 | 4 |
| Test Example 30 | 5.52 | 22.82 | 6.58 | 0.95 | 0.44 | 60.34 | 26.61 | 4 |
| Test Example 31 | 5.08 | 19.36 | 5.18 | 1.63 | 0.81 | 61.60 | 25.88 | 4 |
| Test Example 32 | 5.94 | 22.87 | 9.54 | 0.57 | 0.26 | 60.03 | 25.17 | 4 |
| Test Example 33 | 5.59 | 26.83 | 7.67 | 0.97 | 0.43 | 58.53 | 30.70 | 4 |
| Test Example 34 | 5.16 | 24.75 | 6.35 | 1.77 | 0.83 | 59.07 | 31.81 | 4 |
| Test Example 35 | 5.89 | 28.19 | 9.99 | 0.67 | 0.30 | 57.80 | 30.88 | 4 |
| Test Example 36 | 5.48 | 29.91 | 9.16 | 1.42 | 0.62 | 56.85 | 35.59 | 4 |
| Test Example 37 | 5.10 | 28.55 | 5.96 | 1.82 | 0.84 | 57.63 | 35.81 | 4 |
| Test Example 38 | 5.87 | 33.06 | 11.84 | 0.83 | 0.35 | 55.63 | 36.36 | 4 |

Table 2

| | pH of Food Composition (20°C, 1 atm) | Salt Equivalent Amount per 100 g of Water of Food Composition | Ethanol Content per 100 g of Water of Food Composition | Moisture Content on a Wet Mass Basis of Food Composition | Odor Evaluation |
|---|---|---|---|---|---|
| Unit | | g | g | w/w% | |
| Test Example 39 | 4.83 | 3.24 | 5.03 | 86.32 | 2 |
| Test Example 40 | 5.11 | 2.03 | 8.04 | 70.31 | 2 |
| Test Example 41 | 6.32 | 4.12 | 6.12 | 75.21 | 2 |
| Test Example 42 | 5.61 | 3.04 | 8.08 | 79.32 | 3 |
| Test Example 43 | 5.44 | 5.02 | 9.12 | 72.12 | 3 |
| Test Example 44 | 5.52 | 8.23 | 10.21 | 68.31 | 4 |
| Test Example 45 | 5.91 | 15.04 | 11.33 | 59.56 | 4 |

As shown in Table 1, it was demonstrated that by adjusting the salt equivalent amount and the undissociated acetic acid content, or the salt equivalent amount and the ethanol content, off-odor was suppressed, and it was found that the growth of microorganisms that cause food deterioration could be suppressed.

<Test 2: Verification of Effects when the Food Composition of the Present Invention is Used in Food and Drink Manufacturing>

<Preparation of Each Test Product>

Brewed vinegar, sodium acetate, sucrose, reduced starch syrup, sodium chloride, water, ethanol, and the commercially available enzymes or mixtures of commercially available enzymes listed in Table 3 (Enzyme Samples 1 to 31) were appropriately blended to have the compositions in Tables 4 to 9, and food compositions to be used as test products were prepared (Test Examples 46 to 104). Each test product was placed in a container with a lid, allowed to stand at 20°C for 2 weeks, and after confirming that there was no off-odor, it was subjected to the test. In Tables 4 to 7, in each of the test examples, the ratio of the acetic acid content derived from sodium acetate to the total acetic acid content was 10 mass% or more.

<Test 2-1: Eating Quality Evaluation of Cooked Rice when Test Product is Used Before Cooking Rice>

Polished rice (apparent amylose ratio 17.3%) was weighed, washed, and then soaked in enough water to completely cover the raw rice at room temperature (20°C) for 60 minutes. After soaking, the water used for soaking was discarded, and each test product was added to the soaked raw rice in an amount of 1 w/w% with respect to the weight of the raw rice before adding water. Furthermore, water was added so that the water addition ratio with respect to the weight of the raw rice before adding water was 1.4 times. Within 30 minutes after adding the water, rice was cooked in the quick cooking mode of an IH rice cooker (manufactured by Tiger Corporation: JKT-G101) to obtain cooked rice as a test section. As a negative control, cooked rice was obtained by adding a control test solution having the same composition as each test except for not containing an enzyme instead of each test product, and cooking in the same manner. Furthermore, as a positive control, cooked rice was obtained by adding the commercially available enzyme contained in each test product instead of each test product in an amount such that the enzyme addition amount with respect to the weight of the raw rice before adding water was equal to that of each test product, and cooking in the same manner.

The cooked rice was cooled to 45°C in a vacuum cooler (manufactured by Miura Co., Ltd.: GMJ-20QE), and then 20 g each of shari balls were formed using a shari ball forming machine (manufactured by Suzumo Machinery Co., Ltd.: SSN-FRA).

The shari balls produced as described above were stored at 4°C for 24 hours and then subjected to the following sensory evaluation test. For the sensory evaluation, 10 expert panelists confirmed whether the enzyme activity was maintained by storage at 20°C in each test product, depending on the type of enzyme added during rice cooking. Specifically, for enzymes related to the suppression of rice staling, the softness compared to the negative control was evaluated in the positive control and the test section. For enzymes related to improving the elasticity of rice, the elasticity compared to the negative control was evaluated in the positive control and the test section. Then, the average value of the scores of 10 sensory inspectors was calculated, and the value was rounded to the nearest integer to obtain the final score.

Any matters felt other than the evaluation items were described as remarks. The sensory inspectors for each sensory test, as in Test 1, had undergone identification training for food taste, odor, texture, appearance, etc. in advance, and inspectors with particularly excellent results, product development experience, abundant knowledge about the quality of food taste, odor, texture, appearance, etc., and capable of performing absolute evaluation for each sensory test item were selected. For any of the evaluation items, all inspectors evaluated Test Example 46 in advance, and after standardizing each score of the evaluation criteria, an objective sensory test was conducted. The results are shown in Tables 4 to 9. The numerical values for each provision in the tables show values rounded to the second or first decimal place.

<Evaluation of Softness after Storage at 4°C for 24 hours>

1: Softness is impaired to the same extent as the negative control and is undesirable
2: Although improved compared to the negative control, softness is impaired and is somewhat undesirable
3: Softness is improved compared to the negative control and is somewhat desirable
4: Very soft compared to the negative control and is desirable

<Evaluation of Elasticity after Storage at 4°C for 24 hours>

1: Elasticity is impaired to the same extent as the negative control and is undesirable
2: Although improved compared to the negative control, elasticity is impaired and is somewhat undesirable
3: Elasticity is improved compared to the negative control and is somewhat desirable
4: Very elastic compared to the negative control and is desirable

<Test 2-2: Eating Quality Evaluation of Cooked Rice when Test Product is Used after Cooking Rice>

Polished rice (apparent amylose ratio 17.3%) was weighed, washed, and then soaked in enough water to completely cover the raw rice at room temperature (20°C) for 60 minutes. After soaking, the water used for soaking was discarded, and water was added to the soaked raw rice so that the water addition ratio with respect to the weight of the raw rice before adding water was 1.4 times. Within 30 minutes after adding the water, rice was cooked in the quick cooking mode of an IH rice cooker (manufactured by Tiger Corporation: JKT-G101) to obtain cooked rice. The entire amount of the obtained cooked rice was transferred to a wooden tub, allowed to cool for 10 minutes in an environment of 20°C, and then each test product was added in an amount of 1 w/w% with respect to the weight of the raw rice before adding water, the cooked rice was mixed with a rice paddle, and further allowed to cool for 30 minutes to obtain enzyme-reacted cooked rice as a test section. As a negative control, cooked rice was obtained by adding a control test solution having the same composition as each test product except for not containing an enzyme in the same manner. Furthermore, as a positive control, cooked rice was obtained in the same manner by adding the commercially available enzyme contained in each test product instead of each test product in an amount such that the enzyme addition amount with respect to the weight of the raw rice before adding water was equal to that of each test product. The cooked rice after cooling was cooled to 45°C in a vacuum cooler (manufactured by Miura Co., Ltd.: GMJ-20QE), and then 20 g each of shari balls were formed using a shari ball forming machine (manufactured by Suzumo Machinery Co., Ltd.: SSN-FRA). The shari balls produced as described above were stored at 4°C for 24 hours and then subjected to the same sensory evaluation as in Test 2-1 to evaluate softness and elasticity.

Table 3-1

| Enzyme Sample Name | Enzyme Manufacturer | EC Number | Enzyme Name | Remarks |
|---|---|---|---|---|
| Enzyme Sample 1 | Amano Enzyme | 3.5.1.35 | Glutaminase | |
| Enzyme Sample 2 | Novozymes | 2.4.1.18 | 6-Alpha-Glucanotransferase | |
| Enzyme Sample 3 | Amano Enzyme | 3.2.1.1 | Maltotriohydrolase | |
| Enzyme Sample 4 | | 2.4.1.18 and 3.2.1.1 | | A 1:1 blend of Enzyme Sample 2 and Enzyme Sample 3 |

(continued)

| Enzyme Sample Name | Enzyme Manufacturer | EC Number | Enzyme Name | Remarks |
|---|---|---|---|---|
| Enzyme Sample 5 | Amano Enzyme | 2.4.1.25 | 4-Alpha-Glucanotransferase | |
| Enzyme Sample 6 | Amano Enzyme | 3.2.1.2 | Beta-Amylase | |
| Enzyme Sample 7 | | 2.4.1.25 and 3.2.1.2 | | A 1:1 blend of Enzyme Sample 5 and Enzyme Sample 6 |
| Enzyme Sample 8 | Novozymes | 3.2.1.133 | Alpha-Amylase | |
| Enzyme Sample 9 | Mitsubishi Chemical | 3.1.1.32 | Phospholipase A1 | |
| Enzyme Sample 10 | Amano Enzyme | 3.2.1.41 | Pullulanase | |
| Enzyme Sample 11 | Amano Enzyme | 3.2.1.8 | Hemicellulase | |
| Enzyme Sample 12 | Amano Enzyme | 3.2.1.1 | Alpha-Amylase | |
| Enzyme Sample 13 | Amano Enzyme | 2.4.1.19 | Cyclodextrin Glucanotransferase | |
| Enzyme Sample 14 | Amano Enzyme | 3.2.1.15 | Pectinase | |
| Enzyme Sample 15 | Amano Enzyme | 1.1.3.4 | Glucose Oxidase | |
| Enzyme Sample 16 | Amano Enzyme | 1.10.3.2 | Polyphenol Oxidase | |

Table 3-2

| Enzyme Sample Name | Enzyme Manufacturer | EC Number | Enzyme Name | Remarks |
|---|---|---|---|---|
| Enzyme Sample 17 | Amano Enzyme | 3.2.1.3 | Glucoamylase | |
| Enzyme Sample 18 | Amano Enzyme | 3.2.1.20 | Transglucosidase | |
| Enzyme Sample 19 | Shin Nihon Chemical | 3.1.1.11 | Pectin Methyl Esterase | |
| Enzyme Sample 20 | Nagase Chemtex | 3.1.1.4 | Phospholipase A2 | |
| Enzyme Sample 21 | Amano Enzyme | 3.4.23.21 and 3.1.1.3 | Contains Protease (EC number 3.4.23.21) and Lipase (EC number 3.1.1.3) | |
| Enzyme Sample 22 | Shin Nihon Chemical | 3.2.1.22 | Alpha-Galactosidase | |
| Enzyme Sample 23 | Shin Nihon Chemical | 3.2.1.26 | Invertase | |
| Enzyme Sample 24 | Amano Enzyme | 3.2.1.4 | Cellulase | |
| Enzyme Sample 25 | | 3.2.1.4 and 3.2.1.8 and 3.2.1.15 | | A 1:1:1 blend of Enzyme Sample 24, Enzyme Sample 11, and Enzyme Sample 14 |
| Enzyme Sample 26 | Godo Shusei | 5.3.1.5 | Glucose Isomerase | |

(continued)

| Enzyme Sample Name | Enzyme Manufacturer | EC Number | Enzyme Name | Remarks |
|---|---|---|---|---|
| Enzyme Sample 27 | Nagase Chemtex | 2.4.1.18 | Alpha-Glucosyltransferase | |
| Enzyme Sample 28 | Novozymes | 3.2.1.8 | Xylanase | |
| Enzyme Sample 29 | Novozymes | 3.2.1.7 | Fructosyltransferase | |
| Enzyme Sample 30 | Amano Enzyme | 3.1.1.3 | Lipase | |
| Enzyme Sample 31 | Amano Enzyme | 3.2.1.21 | Beta-Glucosidase | |

EP 4 674 282 A1

Table4-1

| | Enzyme Sample Used | Timing of Addition of Test Product, Control Test Solution, or Commercial Enzyme | Enzyme Sample Content in Food Composition | pH of Food Composition (20°C, 1 atm) | Salt Equivalent Amount per 100 g of Water of Food Composition | Total Acetic Acid Content per 100 g of Water of Food Composition | Undissociated Acetic Acid Content per 100 g of Water of Food Composition | Titratable Acidity of Food Composition | Moisture Content on a Wet Mass Basis of Food Composition | 4Y+X | Brix Value of Food Composition | Ratio of Chloride Ion Content of Food Composition to Sodium Content of Food Composition | Softness of Cooked Rice After 24 Hours of Storage At 4°C | | Remarks |
|---|---|---|---|---|---|---|---|---|---|---|---|---|---|---|---|
| Unit | | | w/w% | | g | g | g | w/w% | w/w% | | | | Test Example | Positive Control | |
| Test Example 46 | Enzyme Sample 1 | Before Cooking Rice | 1.2 | 5.50 | 30.47 | 8.87 | 1.32 | 0.59 | 57.38 | 35.76 | 43.1 | 1.15 | 4 | 4 | The looseness of the cooked rice in the test section was particularly good. |
| Test Example 47 | Enzyme Sample 3 | Before Cooking Rice | 2.5 | 5.12 | 31.82 | 4.38 | 1.29 | 0.60 | 57.59 | 36.99 | 40.1 | 1.18 | 3 | 3 | |
| Test Example 48 | Enzyme Sample 6 | Before Cooking Rice | 2.5 | 5.87 | 34.99 | 11.79 | 0.82 | 0.35 | 56.92 | 38.28 | 40.6 | 0.87 | 3 | 3 | |
| Test Example 49 | Enzyme Sample 8 | Before Cooking Rice | 2.5 | 5.46 | 32.72 | 7.60 | 1.22 | 0.55 | 56.70 | 37.60 | 41.0 | 1.04 | 4 | 3 | The looseness of the cooked rice in the test section was particularly good. |
| Test Example 50 | Enzyme Sample 9 | Before Cooking Rice | 2.5 | 5.13 | 31.43 | 3.96 | 1.16 | 0.55 | 57.80 | 36.07 | 39.9 | 1.20 | 4 | 4 | |

| | Enzyme Sample Used | Timing of Addition of Test Product, Control Test Solution, or Commercial Enzyme | Enzyme Sample Content in Food Composition | pH of Food Composition (20°C, 1 atm) | Salt Equivalent Amount per 100 g of Water of Food Composition | Total Acetic Acid Content per 100 g of Water of Food Composition | Undissociated Acetic Acid Content per 100 g of Water of Food Composition | Titratable Acidity of Food Composition | Moisture Content on a Wet Mass Basis of Food Composition | 4Y+X | Brix Value of Food Composition | Ratio of Chloride Ion Content of Food Composition to Sodium Content of Food Composition | Softness of Cooked Rice After 24 Hours of Storage At 4°C | | Remarks |
|---|---|---|---|---|---|---|---|---|---|---|---|---|---|---|---|
| Unit | | | w/w% | | g | g | g | w/w% | w/w% | | | | Test Example | Positive Control | |
| Test Example 51 | Enzyme Sample 10 | Before Cooking Rice | 2.5 | 5.83 | 33.46 | 10.62 | 0.81 | 0.36 | 58.23 | 36.71 | 39.4 | 0.90 | 4 | 4 | |
| Test Example 52 | Enzyme Sample 11 | Before Cooking Rice | 2.5 | 5.43 | 26.93 | 4.63 | 0.79 | 0.36 | 58.78 | 30.09 | 38.7 | 1.08 | 3 | 3 | |
| Test Example 53 | Enzyme Sample 12 | Before Cooking Rice | 2.5 | 5.04 | 19.83 | 4.02 | 1.35 | 0.70 | 62.60 | 25.24 | 34.9 | 1.01 | 4 | 4 | |

Table 4-2

| | Enzyme Sample Used | Timing of Addition of Test Product, Control Test Solution, or Commercial Enzyme | Enzyme Sample Content in Food Composition | pH of Food Composition (20°C,1 atm) | Salt Equivalent Amount per 100 g of Water of Food Composition | Total Acetic Acid Content per 100 g of Water of Food Composition | Undissociated Acetic Acid Content per 100 g of Water of Food Composition | Titratable Acidity of Food Composition | Moisture Content on a Wet Mass Basis of Food Composition | 4Y+X | Brix Value of Food Composition | Ratio of Chloride Ion Content of Food Composition to Sodium Content of Food Composition | Softness of Cooked Rice After 24 Hours of Storage At 4°C | | Remarks |
|---|---|---|---|---|---|---|---|---|---|---|---|---|---|---|---|
| Unit | | | w/w% | | g | g | g | w/w% | w/w% | | | | Test Example | Positive Control | |
| Test Example 54 | Enzyme Sample 14 | Before Cooking Rice | 2.5 | 5.95 | 25.10 | 11.25 | 0.66 | 0.32 | 61.43 | 27.76 | 36.0 | 0.65 | 3 | 3 | |
| Test Example 55 | Enzyme Sample 17 | Before Cooking Rice | 2.5 | 5.58 | 32.29 | 9.10 | 1.15 | 0.51 | 56.60 | 36.9 | 41.0 | 0.96 | 4 | 3 | |
| Test Example 56 | Enzyme Sample 18 | Before Cooking Rice | 2.5 | 5.11 | 30.33 | 4.03 | 1.21 | 0.56 | 57.32 | 35.15 | 40.3 | 1.18 | 4 | 4 | |
| Test Example 57 | Enzyme Sample 19 | Before Cooking Rice | 2.5 | 5.91 | 33.96 | 11.62 | 0.74 | 0.33 | 57.86 | 36.92 | 39.7 | 0.86 | 3 | 3 | |
| Test Example 58 | Enzyme Sample 20 | Before Cooking Rice | 2.5 | 5.24 | 24.56 | 2.45 | 0.60 | 0.28 | 60.24 | 26.94 | 37.2 | 1.17 | 3 | 3 | |
| Test Example 59 | Enzyme Sample 22 | Before Cooking Rice | 2.5 | 5.15 | 25.84 | 3.90 | 1.11 | 0.53 | 59.13 | 30.28 | 38.4 | 1.12 | 4 | 4 | |
| Test Example 60 | Enzyme Sample 23 | Before Cooking Rice | 2.5 | 4.83 | 9.37 | 3.03 | 1.37 | 0.79 | 67.90 | 14.86 | 29.4 | 0.62 | 3 | 4 | The rice in the test section was slightly dry and crumbly. |

(continued)

| | Enzyme Sample Used | Timing of Addition of Test Product, Control Test Solution, or Commercial Enzyme | Enzyme Sample Content in Food Composition | pH of Food Composition (20°C,1 atm) | Salt Equivalent Amount per 100 g of Water of Food Composition | Total Acetic Acid Content per 100 g of Water of Food Composition | Undissociated Acetic Acid Content per 100 g of Water of Food Composition | Titratable Acidity of Food Composition | Moisture Content on a Wet Mass Basis of Food Composition | 4Y+X | Brix Value of Food Composition | Ratio of Chloride Ion Content of Food Composition to Sodium Content of Food Composition | Softness of Cooked Rice After 24 Hours of Storage At 4°C | | Remarks |
|---|---|---|---|---|---|---|---|---|---|---|---|---|---|---|---|
| Unit | | | w/w% | | g | g | g | w/w% | w/w% | | | | Test Example | Positive Control | |
| Test Example 61 | Enzyme Sample 24 | Before Cooking Rice | 2.5 | 6.60 | 19.63 | 13.15 | 0.18 | 0.08 | 60.57 | 20.36 | 36.5 | 0.21 | 3 | 4 | |
| Test Example 62 | Enzyme Sample 25 | Before Cooking Rice | 7.5 | 5.74 | 35.29 | 12.36 | 1.13 | 0.48 | 55.02 | 39.80 | 42.6 | 0.86 | 4 | 4 | |
| Test Example 63 | Enzyme Sample 28 | Before Cooking Rice | 2.5 | 5.26 | 17.62 | 1.77 | 0.42 | 0.21 | 63.53 | 19.28 | 33.7 | 1.08 | 3 | 3 | |
| Test Example 64 | Enzyme Sample 30 | Before Cooking Rice | 2.5 | 5.16 | 28.22 | 6.54 | 1.82 | 0.84 | 57.72 | 35.51 | 40.0 | 1.04 | 4 | 4 | |

Table 5

| | Enzyme Sample Used | Timing of Addition of Test Product, Control Test Solution, or Commercial Enzyme | Enzyme Sample Content in Food Composition | pH of Food Composition (20°C, 1 atm) | Salt Equivalent Amount per 100 g of Water of Food Composition | Total Acetic Acid Content per 100 g of Water of Food Composition | Undissociated Acetic Acid Concentration per 100 g of Water of Food Composition | Titratable Acidity of Food Composition | Moisture Content on a Wet Mass Basis of Food Composition | 4Y+X | Brix Value of Food Composition | Ratio of Chloride Ion Content of Food Composition to Sodium Content of Food Composition | Elasticity of Cooked Rice After 24 Hours of Storage At 4°C | | Remarks |
|---|---|---|---|---|---|---|---|---|---|---|---|---|---|---|---|
| Unit | | | w/w% | | g | g | g | w/w% | w/w% | | | | Test Example | Positive Control | |
| Test Example 65 | Enzyme Sample 2 | Before Cooking Rice | 2.5 | 5.2 | 30.9 | 4.5 | 1.1 | 0.5 | 57.1 | 35.5 | 40.5 | 1.2 | 3 | 3 | |
| Test Example 66 | Enzyme Sample 4 | Before Cooking Rice | 5 | 5.6 | 34.6 | 9.1 | 1.1 | 0.5 | 55.8 | 39.0 | 41.9 | 1.0 | 4 | 4 | A moist texture was obtained in both the test section and the positive control. |
| Test Example 67 | Enzyme Sample 13 | Before Cooking Rice | 2.5 | 5.9 | 34.6 | 10.9 | 0.7 | 0.3 | 55.8 | 37.4 | 41.7 | 0.9 | 4 | 4 | |
| Test Example 68 | Enzyme Sample 15 | Before Cooking Rice | 2.5 | 4.8 | 9.4 | 3.2 | 1.6 | 0.9 | 67.9 | 15.7 | 29.5 | 0.6 | 3 | 4 | The rice in the test section was slightly dry and crumbly. |

EP 4 674 282 A1

| | Enzyme Sample Used | Timing of Addition of Test Product, Control Test Solution, or Commercial Enzyme | Enzyme Sample Content in Food Composition | pH of Food Composition (20°C, 1 atm) | Salt Equivalent Amount per 100 g of Water of Food Composition | Total Acetic Acid Content per 100 g of Water of Food Composition | Undissociated Acetic Acid Concentration per 100 g of Water of Food Composition | Titratable Acidity of Food Composition | Moisture Content on a Wet Mass Basis of Food Composition | $4Y+X$ | Brix Value of Food Composition | Ratio of Chloride Ion Content of Food Composition to Sodium Content of Food Composition | Elasticity of Cooked Rice After 24 Hours of Storage At 4°C | | Remarks |
|---|---|---|---|---|---|---|---|---|---|---|---|---|---|---|---|
| Unit | | | w/w% | | g | g | g | w/w% | w/w% | | | | Test Example | Positive Control | |
| Test Example 69 | Enzyme Sample 16 | Before Cooking Rice | 2.5 | 5.4 | 14.7 | 2.2 | 0.4 | 0.2 | 64.8 | 16.4 | 32.4 | 0.9 | 3 | 3 | |
| Test Example 70 | Enzyme Sample 26 | Before Cooking Rice | 2.5 | 6.6 | 19.8 | 13.3 | 0.2 | 0.1 | 60.5 | 20.5 | 36.6 | 0.2 | 3 | 4 | The rice in the test section was slightly dry and crumbly. |
| Test Example 71 | Enzyme Sample 27 | Before Cooking Rice | 2.5 | 5.9 | 35.3 | 12.1 | 0.9 | 0.4 | 55.0 | 38.7 | 42.5 | 0.9 | 4 | 3 | |
| Test Example 104 | Enzyme Sample 31 | Before Cooking Rice | 2.5 | 5.1 | 31.8 | 4.4 | 1.3 | 0.6 | 57.6 | 37.0 | 40.1 | 1.2 | 3 | 3 | |

42

EP 4 674 282 A1

Table 6

| | Enzyme Sample Used | Timing of Addition of Test Product, Control Test Solution, or Commercial Enzyme | Enzyme Sample Content in Food Composition | pH of Food Composition (20°C, 1 atm) | Salt Equivalent Amount per 100 g of Water of Food Composition | Total Acetic Acid Content per 100 g of Water of Food Composition | Undissociated Acetic Acid Content per 100 g of Water of Food Composition | Titratable Acidity of Food Composition | Moisture Content on a Wet Mass Basis of Food Composition | 4Y+X | Brix Value of Food Composition | Ratio of Chloride Ion Content of Food Composition to Sodium Content of Food Composition | Softness of Cooked Rice After 24 Hours of Storage At 4°C | | Remarks |
|---|---|---|---|---|---|---|---|---|---|---|---|---|---|---|---|
| Unit | | | w/w% | | g | g | g | w/w% | w/w% | | | | Test Example | Positive Control | |
| Test Example 72 | Enzyme Sample 1 | After Cooking Rice | 1.2 | 5.86 | 35.91 | 9.91 | 0.71 | 0.30 | 55.12 | 38.74 | 42.4 | 0.96 | 4 | 4 | The looseness of the cooked rice in the test section was particularly good. |
| Test Example 73 | Enzyme Sample 6 | After Cooking Rice | 2.5 | 4.67 | 8.34 | 2.49 | 1.36 | 0.88 | 74.43 | 13.77 | 23.0 | 0.65 | 3 | 4 | |
| Test Example 74 | Enzyme Sample 9 | After Cooking Rice | 2.5 | 5.19 | 33.90 | 4.55 | 1.19 | 0.55 | 56.66 | 38.66 | 40.2 | 1.13 | 4 | 4 | |

| Enzyme Sample Used | Timing of Addition of Test Product, Control Test Solution, or Commercial Enzyme | Enzyme Sample Content in Food Composition | pH of Food Composition (20°C, 1 atm) | Salt Equivalent Amount per 100 g of Water of Food Composition | Total Acetic Acid Content per 100 g of Water of Food Composition | Undissociated Acetic Acid Content per 100 g of Water of Food Composition | Titratable Acidity of Food Composition | Moisture Content on a Wet Mass Basis of Food Composition | 4Y+X | Brix Value of Food Composition | Ratio of Chloride Ion Content of Food Composition to Sodium Content of Food Composition | Softness of Cooked Rice After 24 Hours of Storage At 4°C | | Remarks |
|---|---|---|---|---|---|---|---|---|---|---|---|---|---|---|
| Unit | | | w/w% | | g | g | g | w/w% | w/w% | | | | Test Example | Positive Control | |
| Test Example 75 | Enzyme Sample 10 | After Cooking Rice | 2.5 | 5.18 | 31.18 | 7.58 | 2.04 | 0.96 | 57.74 | 39.35 | 42.6 | 1.25 | 1 | 1 | Both the test section and the positive control became extremely hard, suggesting it was unsuitable for cooked rice but could be used for applications such as rice crackers. |
| Test Example 76 | Enzyme Sample 12 | After Cooking Rice | 2.5 | 5.87 | 33.34 | 11.47 | 0.80 | 0.36 | 58.32 | 36.56 | 40.9 | 0.98 | 4 | 4 | |
| Test Example 77 | Enzyme Sample 21 | After Cooking Rice | 2.5 | 5.57 | 32.72 | 9.05 | 1.17 | 0.52 | 56.57 | 37.41 | 41.9 | 1.03 | 4 | 4 | |
| Test Example 78 | Enzyme Sample 22 | After Cooking Rice | 2.5 | 5.89 | 33.65 | 10.58 | 0.70 | 0.30 | 55.81 | 36.46 | 41.7 | 0.89 | 4 | 4 | |

EP 4 674 282 A1

44

| | Enzyme Sample Used | Timing of Addition of Test Product, Control Test Solution, or Commercial Enzyme | Enzyme Sample Content in Food Composition | pH of Food Composition (20°C, 1 atm) | Salt Equivalent Amount per 100 g of Water of Food Composition | Total Acetic Acid Content per 100 g of Water of Food Composition | Undissociated Acetic Acid Content per 100 g of Water of Food Composition | Titratable Acidity of Food Composition | Moisture Content on a Wet Mass Basis of Food Composition | 4Y+X | Brix Value of Food Composition | Ratio of Chloride Ion Content of Food Composition to Sodium Content of Food Composition | Softness of Cooked Rice After 24 Hours of Storage At 4°C | | Remarks |
|---|---|---|---|---|---|---|---|---|---|---|---|---|---|---|---|
| Unit | | | w/w% | | g | g | g | w/w% | w/w% | | | | Test Example | Positive Control | |
| Test Example 79 | Enzyme Sample 24 | After Cooking Rice | 2.5 | 6.30 | 34.12 | 16.14 | 0.43 | 0.18 | 54.75 | 35.86 | 42.7 | 0.64 | 3 | 3 | |
| Test Example 80 | Enzyme Sample 25 | After Cooking Rice | 7.5 | 5.60 | 33.55 | 8.77 | 1.08 | 0.47 | 56.52 | 37.85 | 43.6 | 1.18 | 4 | 4 | |
| Test Example 81 | Enzyme Sample 28 | After Cooking Rice | 2.5 | 5.21 | 31.80 | 8.11 | 2.06 | 0.96 | 57.41 | 40.04 | 42.9 | 1.23 | 3 | 3 | |
| Test Example 82 | Enzyme Sample 29 | After Cooking Rice | 2.5 | 5.19 | 32.38 | 8.84 | 2.32 | 1.07 | 57.12 | 41.65 | 43.3 | 1.21 | 3 | 3 | |

EP 4 674 282 A1

45

Table 7

| | Enzyme Sample Used | Timing of Addition of Test Product, Control Test Solution, or Commercial Enzyme | Enzyme Sample Content in Food Composition | pH of Food Composition (20°C, 1 atm) | Salt Equivalent Amount per 100 g of Water of Food Composition | Total Acetic Acid Content per 100 g of Water of Food Composition | Undissociated Acetic Acid Content per 100 g of Water of Food Composition | Titratable Acidity of Food Composition | Moisture Content on a Wet Mass Basis of Food Composition | 4Y+X | Brix Value of Food Composition | Ratio of Chloride Ion Content of Food Composition to Sodium Content of Food Composition | Elasticity of Cooked Rice After 24 Hours of Storage At 4°C | | Remarks |
|---|---|---|---|---|---|---|---|---|---|---|---|---|---|---|---|
| | | | | | | | | | | | | | Test Example | Positive Control | |
| Unit | | | w/w% | | g | g | g | w/w% | w/w% | | | | | | |
| Test Example 83 | Enzyme Sample 5 | After Cooking Rice | 2.5 | 5.24 | 31.8 | 8.01 | 1.94 | 0.89 | 57.41 | 39.55 | 42.9 | 1.23 | 3 | 3 | Particularly in the test section, the grain separation was good. |
| Test Example 84 | Enzyme Sample 7 | After Cooking Rice | 2.0 | 5.60 | 33.64 | 8.87 | 1.08 | 0.47 | 56.47 | 37.95 | 43.6 | 1.18 | 4 | 4 | An extremely chewy texture was obtained particularly in the test section. |
| Test Example 85 | Enzyme Sample 13 | After Cooking Rice | 2.5 | 5.20 | 31.18 | 7.50 | 1.95 | 0.91 | 57.74 | 38.96 | 42.6 | 1.25 | 4 | 4 | |
| Test Example 86 | Enzyme Sample 15 | After Cooking Rice | 2.5 | 6.45 | 47.37 | 17.05 | 0.33 | 0.11 | 44.58 | 48.69 | 55.1 | 1.00 | 4 | 4 | The rice in the test section was slightly dry and crumbly. |
| Test Example 87 | Enzyme Sample 16 | After Cooking Rice | 2.5 | 5.91 | 38.70 | 13.03 | 0.84 | 0.35 | 54.05 | 42.07 | 46.0 | 1.05 | 4 | 4 | |

(continued)

| | Enzyme Sample Used | Timing of Addition of Test Product, Control Test Solution, or Commercial Enzyme | Enzyme Sample Content in Food Composition | pH of Food Composition (20°C, 1 atm) | Salt Equivalent Amount per 100 g of Water of Food Composition | Total Acetic Acid Content per 100 g of Water of Food Composition | Undissociated Acetic Acid Content per 100 g of Water of Food Composition | Titratable Acidity of Food Composition | Moisture Content on a Wet Mass Basis of Food Composition | 4Y+X | Brix Value of Food Composition | Ratio of Chloride Ion Content of Food Composition to Sodium Content of Food Composition | Elasticity of Cooked Rice After 24 Hours of Storage At 4°C | | Remarks |
|---|---|---|---|---|---|---|---|---|---|---|---|---|---|---|---|
| | | | | | | | | | | | | | Test Example | Positive Control | |
| Unit | | | w/w% | | g | g | g | w/w% | w/w% | | | | | | |
| Test Example 88 | Enzyme Sample 26 | After Cooking Rice | 2.5 | 4.65 | 31.09 | 4.38 | 2.43 | 1.05 | 49.16 | 40.8 | 51.0 | 1.43 | 3 | 4 | The rice in the test section was slightly dry and crumbly. |

47

Table 8

| | Enzyme Sample Used | Enzyme Sample Content in Food Composition | Timing of Addition of Test Product, Control Test Solution, or Commercial Enzyme | pH of Food Composition (20°C,1 atm) | Salt Equivalent Amount per 100 g of Water of Food Composition | Ethanol Content per 100 g of Water of Food Composition | Moisture Content on a Wet Mass Basis of Food Composition | Softness of Cooked Rice After 24 Hours of Storage At 4°C | | Remarks |
|---|---|---|---|---|---|---|---|---|---|---|
| Unit | | w/w% | | | g | g | w/w% | Test Example | Positive Control | |
| Test Example 89 | Enzyme Sample 1 | 1.2 | Before Cooking Rice | 5.76 | 6.41 | 9.53 | 72.63 | 3 | 4 | The looseness of the cooked rice in the test section was particularly good. |
| Test Example 90 | Enzyme Sample 3 | 2.5 | Before Cooking Rice | 4.74 | 7.31 | 10.03 | 71.73 | 3 | 3 | The rice in the test section was slightly dry and crumbly. |
| Test Example 91 | Enzyme Sample 6 | 2.5 | Before Cooking Rice | 5.21 | 4.34 | 9.43 | 73.37 | 3 | 3 | |
| Test Example 92 | Enzyme Sample 8 | 2.5 | Before Cooking Rice | 5.42 | 5.99 | 8.95 | 74.51 | 3 | 3 | The looseness of the cooked rice in the test section was particularly good. |
| Test Example 93 | Enzyme Sample 10 | 2.5 | Before Cooking Rice | 5.68 | 13.12 | 11.12 | 68.33 | 3 | 4 | |
| Test Example 94 | Enzyme Sample 10 | 2.5 | After Cooking Rice | 5.78 | 14.21 | 14.55 | 58.65 | 1 | 1 | Both the test section and the positive control became extremely hard, suggesting it was unsuitable for cooked rice but could be used for applications such as rice crackers. |

| | Enzyme Sample Used | Enzyme Sample Content in Food Composition | Timing of Addition of Test Product, Control Test Solution, or Commercial Enzyme | pH of Food Composition (20°C,1 atm) | Salt Equivalent Amount per 100 g of Water of Food Composition | Ethanol Content per 100 g of Water of Food Composition | Moisture Content on a Wet Mass Basis of Food Composition | Softness of Cooked Rice After 24 Hours of Storage At 4°C | | Remarks |
|---|---|---|---|---|---|---|---|---|---|---|
| Unit | | w/w% | | | g | g | w/w% | Test Example | Positive Control | |
| Test Example 95 | Enzyme Sample 12 | 2.5 | Before Cooking Rice | 5.91 | 6.43 | 12.93 | 64.57 | 4 | 4 | |
| Test Example 96 | Enzyme Sample 18 | 2.5 | Before Cooking Rice | 5.51 | 16.32 | 10.73 | 59.84 | 4 | 4 | |
| Test Example 97 | Enzyme Sample 21 | 2.5 | After Cooking Rice | 5.43 | 8.22 | 20.14 | 63.32 | 3 | 4 | |
| Test Example 98 | Enzyme Sample 25 | 7.5 | After Cooking Rice | 5.14 | 9.33 | 20.31 | 65.22 | 3 | 4 | |
| Test Example 99 | Enzyme Sample 30 | 2.5 | Before Cooking Rice | 5.23 | 7.11 | 21.22 | 62.43 | 3 | 4 | |

EP 4 674 282 A1

49

Table 9

| | Enzyme Sample Used | Enzyme Sample Content in Food Composition | Timing of Addition of Test Product, Control Test Solution, or Commercial Enzyme | pH of Food Composition (20°C,1 atm) | Salt Equivalent Amount per 100 g of Water of Food Composition | Ethanol Content per 100 g of Water of Food Composition | Moisture Content on a Wet Mass Basis of Food Composition | Elasticity of Cooked Rice After 24 Hours of Storage At 4°C | | Remarks |
|---|---|---|---|---|---|---|---|---|---|---|
| Unit | | w/w% | | | g | g | w/w% | Test Example | Positive Control | |
| Test Example 100 | Enzyme Sample 2 | 2.5 | Before Cooking Rice | 6.43 | 7.75 | 9.34 | 74.23 | 3 | 3 | The stickiness of the rice in the test section was slightly weak. |
| Test Example 101 | Enzyme Sample 4 | 5.0 | Before Cooking Rice | 5.61 | 11.31 | 8.32 | 67.42 | 4 | 4 | Particularly in the test section, a moist texture was obtained. |
| Test Example 102 | Enzyme Sample 5 | 2.5 | After Cooking Rice | 5.21 | 5.43 | 10.23 | 71.36 | 3 | 3 | |
| Test Example 103 | Enzyme Sample 7 | 2.0 | After Cooking Rice | 5.45 | 8.64 | 9.23 | 61.34 | 4 | 4 | Particularly in the test section, an extremely chewy texture was obtained. |

From Test 2, it was found that according to the food composition of the present invention, enzyme activity was maintained, and enzyme activity was maintained while suppressing the growth of microorganisms that cause food deterioration. There were also test sections that showed superior effects compared to the positive control, indicating the usefulness of adding the enzyme as the food composition of the present invention. Furthermore, for the test examples where the pH of the food composition was 5.3 or more, the pH at 20°C and 1 atm was measured in a homogenized product prepared by adding distilled water in an amount equal to twice the mass of the obtained cooked rice. As a result, the pH of the cooked rice was more than 6.2 in all cases. In Test 2-1 and Test 2-2, a test was conducted under the same conditions except that 30 mass% of the total amount of polished rice was replaced with brown rice, and the same results as in the case of polished rice were obtained. Similarly, in Test 2-1 and Test 2-2, a test was conducted under the same conditions except that 30 mass% of the total amount of polished rice was replaced with soybeans (5 mass%), barley (5 mass%), adzuki beans (5 mass%), brown rice (5 mass%), foxtail millet (5 mass%), and Japanese barnyard millet (5 mass%), and the same results as in the case of polished rice were obtained. In Test Examples 63, 64, 67, 81, 85, 99, and 104, when 30 mass% of the total amount of polished rice was replaced with brown rice, and when 30 mass% of the total amount of polished rice was replaced with soybeans (5 mass%), barley (5 mass%), adzuki beans (5 mass%), brown rice (5 mass%), foxtail millet (5 mass%), and Japanese barnyard millet (5 mass%), an effect of improving the dry and crumbly texture of the cooked rice was observed.

**Claims**

1. A food composition that satisfies all of the following requirements (a) to (d).

   (a) the moisture content on a wet mass basis is 20 w/w% or more
   (b) the pH at 20°C and 1 atm is more than 4.6
   (c) the food composition contains one or more enzymes having an optimum pH of 4.0 or more
   (d) the food composition satisfies the following requirement (i) and/or (ii) Requirement (i)

   When the salt equivalent amount per 100 g of water of the food composition is X g, and the undissociated acetic acid content per 100 g of water of the food composition is Y g, the following formula is satisfied:

   $$4Y+X \geq 10 \text{ (provided that } X \geq 3 \text{ and } 4 \geq Y > 0.03)$$

   Requirement (ii)
   The salt equivalent amount per 100 g of water of the food composition is 3.0 g or more, and the ethanol content per 100 g of water of the food composition is 8.0 g or more

2. The food composition according to claim 1, wherein the salt equivalent amount per 100 g of water of the food composition is 8.0 g or more.

3. The food composition according to claim 1 or 2, wherein the total acetic acid content per 100 g of water of the food composition is 0.4 g or more.

4. The food composition according to any one of claims 1 to 3, wherein the titratable acidity of the food composition when measured by the following Measurement Method A is 3.0 w/w% or less.
   Measurement Method A
   Accurately take 10 g of the food composition, dilute it 10-fold with ion-exchanged water, add 0.08 ml of a 3.1% phenolphthalein solution as an indicator to the diluted solution (100 g), perform neutralization titration with a 0.1 mol/L sodium hydroxide solution of a known titration factor, and determine the titratable acidity using the following formula.

   Titratable acidity of food composition (w/w%)={(60.05×0.1×F×V)×100}/{Sampled amount (10 g)×1000}

   60.05: Molecular weight of acetic acid
   0.1: Molar concentration of sodium hydroxide solution (mol/L)
   F: Titration factor of 0.1 mol/L sodium hydroxide solution
   V: Titration volume of 0.1 mol/L sodium hydroxide solution (mL)

5. The food composition according to any one of claims 1 to 4, wherein the food composition contains brewed vinegar.

6. The food composition according to any one of claims 1 to 5, wherein the ratio of acetic acid derived from sodium acetate to the total content of acetic acid in the food composition is 10 w/w% or more.

7. The food composition according to any one of claims 1 to 6, wherein the ratio of the chloride ion content (w/w%) of the food composition to the sodium content (w/w%) of the food composition is 0.1 to 1.5.

8. The food composition according to any one of claims 1 to 7, wherein the Brix value of the food composition is 20 or more.

9. The food composition according to any one of claims 1 to 8, wherein the carbohydrate content per 100 g of water of the food composition is 4.0 g or more.

10. The food composition according to any one of claims 1 to 9, wherein the food composition contains a sugar alcohol.

11. The food composition according to any one of claims 1 to 10, wherein the food composition contains reduced starch syrup.

12. The food composition according to any one of claims 1 to 11, wherein the ratio of the maltose content (w/w%) to the total carbohydrate content (w/w%) of the food composition is 80 w/w% or less.

13. The food composition according to any one of claims 1 to 12, wherein the food composition contains a transferase and/or a hydrolase.

14. The food composition according to claim 13, wherein the food composition contains a transferase that is at least one selected from 6-alpha-glucanotransferase, 4-alpha-glucanotransferase, cyclodextrin glucanotransferase, and alpha-glucosyltransferase.

15. The food composition according to claim 13 or 14, wherein the food composition contains a hydrolase that is at least one selected from glutaminase, maltotriohydrolase, beta-amylase, phospholipase A1, pullulanase, hemicellulase, alpha-amylase, pectinase, glucoamylase, transglucosidase, pectin methyl esterase, phospholipase A2, protease, alpha-galactosidase, invertase, cellulase, xylanase, fructosyltransferase, beta-glucosidase, and lipase.

16. The food composition according to any one of claims 13 to 15, wherein the food composition contains 6-alpha-glucanotransferase and maltotriohydrolase.

17. The food composition according to any one of claims 13 to 16, wherein the food composition contains 4-alpha-glucanotransferase and beta-amylase.

18. The food composition according to any one of claims 13 to 17, wherein the food composition contains a protease and a lipase.

19. The food composition according to any one of claims 13 to 18, wherein the food composition contains cellulase, hemicellulase, and pectinase.

20. The food composition according to any one of claims 1 to 19, wherein the food composition contains at least one selected from glucose oxidase, polyphenol oxidase, and glucose isomerase.

21. The food composition according to any one of claims 1 to 20, which is for manufacturing a processed grain product.

22. The food composition according to claim 21, wherein the processed grain product is at least one selected from the group consisting of cooked rice products, noodle products, cereal products, and bread products.

23. The food composition according to claim 21, wherein the processed grain product contains rice.

24. The food composition according to claim 21, wherein the processed grain product is a cooked rice product.

25. A food composition for use in manufacturing a processed grain product, wherein the pH at 1 atm and 20°C is more than 6.20 when distilled water in an amount equal to twice the mass (on a wet mass basis) of the manufactured processed grain product is added and homogenized (homogenization treatment).

26. The food composition according to any one of claims 1 to 25, wherein the food composition is a liquid composition.

27. The food composition according to claim 26, wherein the food composition is an unsterilized liquid composition.

28. A method for manufacturing the food composition according to any one of claims 1 to 26, comprising performing a sterilization treatment at a maximum temperature reached of less than 124°C.

29. A method for manufacturing the food composition according to any one of claims 1 to 27, which is free from a heat sterilization treatment step during manufacturing.

30. A method for manufacturing a processed grain product, comprising adding the food composition according to any one of claims 1 to 27.

31. The manufacturing method according to claim 30, wherein the processed grain product is at least one selected from the group consisting of cooked rice products, noodle products, cereal products, and bread products.

32. A processed grain product manufactured using the food composition according to any one of claims 1 to 27.

33. The processed grain product according to claim 32, wherein the processed grain product is at least one selected from the group consisting of cooked rice products, noodle products, cereal products, and bread products.

34. A method for suppressing the growth of spoilage microorganisms in a food composition that is not subjected to heat sterilization at 100°C or more, wherein the food composition satisfies all of the following requirements (a) to (d):

   (a) the moisture content on a wet mass basis is 20 w/w% or more
   (b) the pH at 20°C and 1 atm is more than 4.6
   (c) contains one or more enzymes having an optimum pH of 4.0 or more
   (d) satisfies the following requirement (i) and/or (ii)
   Requirement (i)
   When the salt equivalent amount per 100 g of water of the food composition is X g, and the undissociated acetic acid content per 100 g of water of the food composition is Y g, the following formula is satisfied:

$$4Y+X\geq10 \text{ (provided that } X\geq3 \text{ and } 4\geq Y>0.03)$$

   Requirement (ii)
   The salt equivalent amount per 100 g of water of the food composition is 3.0 g or more, and the ethanol content per 100 g of water of the food composition is 8.0 g or more

35. The method according to claim 34, which is for suppressing the growth of lactic acid bacteria in a food composition that is not subjected to heat sterilization at 100°C or more.

36. The method according to claim 34 or 35, wherein the food composition is a food composition that is not subjected to heat sterilization.

37. A method for improving the texture of a processed grain product, using the food composition according to any one of claims 1 to 27.

38. A food composition for adding to a composition containing an enzyme having an optimum pH of 4.0 or more, the food composition satisfying the following requirements (a), (b), and (d):

   (a) the moisture content on a wet mass basis is 20 w/w% or more
   (b) the pH at 20°C and 1 atm is more than 4.6
   (d) satisfies the following requirement (i) and/or (ii)

Requirement (i)
When the salt equivalent amount per 100 g of water of the food composition is X g, and the undissociated acetic acid content per 100 g of water of the food composition is Y g, the following formula is satisfied:

$$4Y+X \geq 10 \text{ (provided that } X \geq 3 \text{ and } 4 \geq Y > 0.03)$$

Requirement (ii)
The salt equivalent amount per 100 g of water of the food composition is 3.0 g or more, and the ethanol content per 100 g of water of the food composition is 8.0 g or more

39. The food composition according to claim 13, wherein the food composition contains 4-alpha-glucanotransferase.

40. The food composition according to claim 13, wherein the food composition contains alpha-amylase.

41. The food composition according to claim 13, wherein the food composition contains maltotriohydrolase.

42. The food composition according to claim 13, wherein the food composition contains glutaminase.

43. The food composition according to claim 13, wherein the food composition contains at least one or more selected from cyclodextrin glucanotransferase, xylanase, lipase, or beta-glucosidase.

44. The food composition according to any one of claims 21 to 24, wherein the processed grain product contains miscellaneous grains.

45. The food composition according to any one of claims 21 to 24, wherein the processed grain product contains brown rice.

46. The method according to claim 35, wherein the lactic acid bacterium is a lactic acid bacterium belonging to Lactobacillus fructivorans.

## INTERNATIONAL SEARCH REPORT

| International application No. |
| --- |
| **PCT/JP2024/007255** |

**A. CLASSIFICATION OF SUBJECT MATTER**

*A23L 5/00*(2016.01)i; *A21D 2/08*(2006.01)i; *A23L 3/34*(2006.01)i; *A23L 7/10*(2016.01)i; *A23L 7/104*(2016.01)i; *A23L 7/109*(2016.01)i; *A23L 7/117*(2016.01)i

FI:  A23L5/00 K; A23L7/109 Z; A21D2/08; A23L5/00 J; A23L7/10 B; A23L3/34; A23L7/117; A23L7/104

According to International Patent Classification (IPC) or to both national classification and IPC

**B. FIELDS SEARCHED**

Minimum documentation searched (classification system followed by classification symbols)

A23L5/00; A21D2/08; A23L3/34; A23L7/10; A23L7/104; A23L7/109; A23L7/117

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2006-014617 A (SAN-EI GEN F.F.I., INC.) 19 January 2006 (2006-01-19) example 1 | 25-27 |
| Y | paragraphs [0015]-[0018] | 1-24, 28-46 |
| Y | JP 2022-176396 A (OGAWA, Akihiro) 28 November 2022 (2022-11-28) paragraphs [0001], [0006], [0022], [0023], examples | 1-24, 28-46 |
| Y | JP 2013-153670 A (OKUNO CHEM. IND. CO., LTD.) 15 August 2013 (2013-08-15) paragraphs [0012], [0021], example 3 | 1-24, 28-46 |
| Y | WO 2022/004402 A1 (MIZKAN HOLDINGS CO., LTD.) 06 January 2022 (2022-01-06) paragraphs [0039], [0065] | 1-24, 28-46 |
| A | WO 2008/129889 A1 (MIZKAN GROUP CORPORATION) 30 October 2008 (2008-10-30) | 1-46 |
| P, A | WO 2023/054339 A1 (MIZKAN HOLDINGS CO., LTD.) 06 April 2023 (2023-04-06) | 1-46 |

☐ Further documents are listed in the continuation of Box C.　☑ See patent family annex.

| | |
| --- | --- |
| *　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "D"　document cited by the applicant in the international application | "X"　document of particular relevance; the claimed invention cannot be considered novel or cannot be considered to involve an inventive step when the document is taken alone |
| "E"　earlier application or patent but published on or after the international filing date | |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | "&"　document member of the same patent family |
| "P"　document published prior to the international filing date but later than the priority date claimed | |

| Date of the actual completion of the international search | Date of mailing of the international search report |
| --- | --- |
| **02 May 2024** | **21 May 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/007255**

| Patent document cited in search report | | | Publication date (day/month/year) | Patent family member(s) | | Publication date (day/month/year) |
|---|---|---|---|---|---|---|
| JP | 2006-014617 | A | 19 January 2006 | (Family: none) | | |
| JP | 2022-176396 | A | 28 November 2022 | (Family: none) | | |
| JP | 2013-153670 | A | 15 August 2013 | (Family: none) | | |
| WO | 2022/004402 | A1 | 06 January 2022 | TW | 202203784 A | |
| WO | 2008/129889 | A1 | 30 October 2008 | (Family: none) | | |
| WO | 2023/054339 | A1 | 06 April 2023 | TW | 202329824 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI03139278 A

**Non-patent literature cited in the description**

- *Carbohydrates*, 2013 (70)

- Starch, Monosaccharides, Disaccharides. *Analysis Manual of the Standard Tables of Food Composition in Japan*, 2015